# EUROPEAN PATENT APPLICATION

(11) **EP 4 850 822 A1**
(43) Date of publication of application: **09.12.2026**
(21) Application number: 25181204.6
(22) Date of filing: 05.06.2025
(51) Int. Cl.: B05C 17/005, A61C 5/62, B65D 83/76, B05C 17/01

(54) **CARTRIDGE**

(71) Applicant: medmix Switzerland AG, 9469 Haag (Rheintal) (CH)
(72) Inventor: Schönhärl, Carlos, 9469 Haag (Rheintal) (CH); Bodenmüller, Tobias, 9469 Haag (Rheintal) (CH)
(74) Representative: Manitz Finsterwald Patent- und Rechtsanwaltspartnerschaft mbB

(57) **Abstract**

A cartridge for a material to be dispensed, the cartridge comprising a chamber wall, a head part, and a piston, wherein the chamber wall extends along a longitudinal axis from a rear end to a dispensing end. The chamber wall bounds a chamber for the material in a transverse direction perpendicular to the longitudinal axis and is configured for contacting the material. The head part is connected to the chamber wall at the dispensing end of the cartridge and comprises an outlet for the material to be dispensed. Furthermore, the piston is configured to be arranged within the cartridge and to be moved along the longitudinal axis towards the dispensing end for dispensing the material. At least a portion of the head part is configured to detach from the chamber wall when the piston is located at an end position at the dispensing end.

## Description

### FIELD

The present disclosure relates to cartridges for a material to be dispensed and methods for removing residuals from such cartridges.

### BACKGROUND

Cartridges are used in cartridge dispensers, inter alia, for dispensing materials for dental, surgical, building, or industrial applications, whereby the materials may be, for example, dental materials, medical or surgical materials, adhesives, casting compounds, sealant compounds, or the like.

The materials to be dispensed are usually provided in cartridges that comprise a chamber that holds the material and that has an outlet at a front end or dispensing end through which the material may be dispensed. At the rear end, the chamber is usually closed by a piston that is movable in a longitudinal direction and may be moved towards the front end to compress the material and drive it through the outlet.

Such cartridges may, for example, be configured as single-component cartridges that comprise a single chamber for a single material component, or as multi-component cartridges, such as two-component cartridges, that comprise multiple chambers for different material components of a multi-component material, whereby the components may become mixed during dispensing. The separate chambers thereby may prevent a chemical reaction between the components during storage.

### SUMMARY

When such a cartridge has been emptied, residual amounts of material may remain in the chamber due to its geometry. As the materials to be dispensed usually are different from materials of the cartridge and since the materials to be dispensed additionally may be toxic, the remaining residuals have prevented recycling of cartridges in both open and closed recycling processes to date.

In view of increasing demands on environmental sustainability and efforts of companies to become completely CO2-neutral, there is however a need to enable environmentally friendly disposal of cartridges after use.

The present disclosure provides a cartridge and a method according to the independent claims. Embodiments are given in the dependent claims, the description, the drawings, and the enumerated embodiments.

In a first aspect, the present disclosure is directed at a cartridge for a material to be dispensed, the cartridge comprising a chamber wall, a head part, and a piston, wherein the chamber wall extends along a longitudinal axis from a rear end to a dispensing end. The chamber wall bounds a chamber for the material in a transverse direction perpendicular to the longitudinal axis and is configured for contacting the material. The head part is connected to the chamber wall at the dispensing end of the cartridge and comprises an outlet for the material to be dispensed. Furthermore, the piston is configured to be arranged within the cartridge and to be moved along the longitudinal axis towards the dispensing end for dispensing the material. At least a portion of the head part is configured to detach from the chamber wall when the piston is located at an end position at the dispensing end.

It has been discovered in the framework of the present disclosure that residuals of the material remaining in the cartridge after use severely impedes recycling and that recyclability may be improved by reducing the amount of residuals or cartridge material contaminated by residuals as much as possible. By providing a cartridge that allows to separate the head part from the chamber wall, a contaminated portion of the cartridge that comprises the residuals may be separated from a recycling portion of the cartridge that is free from residuals so that at least the recycling portion may be recycled.

As it is further detailed in the following, the recycling portion may comprise the chamber wall and the contaminated portion may comprise the head part. With other embodiments, the recycling portion may comprise the head part and the contaminated portion may comprise the chamber wall.

The chamber wall may be formed by a hollow cylindrical member that extends along the longitudinal axis from the rear end to the dispensing end. The hollow cylindrical member may form a sleeve. The chamber wall and/or the hollow cylindrical member may be formed as a rigid member. With other embodiments, the chamber wall and/or the hollow cylindrical member may be formed as a flexible member, such as a film bag. The film bag may be formed from a flexible material. The material of the film bag may be an elastic material.

The head part may close the chamber for the material at the dispensing end in the longitudinal direction, such as only in the longitudinal direction and not in the transverse direction. The chamber wall may close the chamber in the transverse direction, such as only in the transverse direction and not in the longitudinal direction.

The cartridge may comprise an outer body. The outer body may, for example, comprise the head part and/or the piston and/or a sidewall. The head part may close the outer body at the dispensing end in the longitudinal direction, such as only in the longitudinal direction and not in the transverse direction. The sidewall may close the outer body in the transverse direction, such as only in the transverse direction and not in the longitudinal direction.

The sidewall of the outer body may be configured as an outer sleeve extending along the longitudinal axis from the rear end to the dispensing end. The sidewall may be formed as a hollow cylindrical member that extends in the longitudinal direction from the rear end to the dispensing end.

The chamber wall may be formed by the outer body of the cartridge. For example, the chamber wall may be formed by the sidewall of the outer body. With these embodiments, the recycling portion may comprise the chamber wall and the contaminated portion may comprise the head part. The contaminated portion may also comprise the piston.

With other embodiments, the chamber wall may also be formed by an insert that is located within the outer body. The insert may be located within the sidewall of the outer body. For example, the insert may be formed by the film bag. With these embodiments, the recycling portion may comprise the head part and/or the sidewall of the outer body. The contaminated portion may comprise the insert, such as the film bag. Furthermore, the recycling portion may comprise the piston.

The piston may be located within the outer body and may be movable within the outer body along the longitudinal axis. For example, the piston may be located within the sidewall and may be movable along the sidewall along the longitudinal axis.

The piston may close the chamber towards the rear end and may be configured to directly contact the material within the chamber, for example with embodiments, in which the chamber wall is formed by the outer body. The piston may form the rear closure of the chamber.

For example, the piston may seal the chamber towards the rear end. The piston may comprise at least one seal, such as a sealing rim, that seals the chamber towards the rear end. With these embodiments, the contaminated portion may comprise the piston.

With other embodiments, such as embodiments for which the chamber wall is formed by an insert, the piston may be separate from the rear closure of the chamber and the rear closure may be formed, for example, by the insert or the film bag. With these embodiments, the recycling portion may comprise the piston.

In general, the piston may be separated from the material and/or the cartridge may be configured to prevent contact between the piston and the material. This prevents the piston from being contaminated by the material and allows for recycling of the piston.

The end position of the piston may be a position in which the piston is mechanically blocked from further movement towards the dispensing end. For example, the piston may engage with the head part in the end position.

The head part may close the chamber at the dispensing end and may be configured to directly contact the material within the chamber, for example with embodiments, in which the chamber wall is formed by the outer body, such as by the sidewall of the outer body. The head part then may form a front closure of the chamber.

With other embodiments, such as with embodiments for which the chamber wall is formed by an insert, the head part may be separate from the front closure of the chamber and the front closure may be formed, for example, by the insert or the film bag.

In general, the head part may be separated from the material and/or the cartridge may be configured to prevent contact between the head part and the material. This prevents the head part from being contaminated by the material and allows for recycling of the head part.

The head part may be formed as a rigid part. For example, the head part may be formed from a plastic material, such as a thermoplastic material. Additionally or alternatively, the outer body may be formed as a rigid part. For example, the outer body may be formed from a plastic material, such as a thermoplastic material. In particular, the sidewall of the outer body may be formed as a rigid part. For example, the sidewall of the outer body may be formed from a plastic material, such as a thermoplastic material.

The head part may be rigidly connected to the sidewall of the outer body of the cartridge. For example, the head part may be formed materially uniform with the sidewall as a single piece of material. Alternatively, the head part may be connected to the sidewall by a connector, such as a releasable connector.

The chamber wall may at least partly surround the chamber. For example, the chamber wall may only partly surround the chamber, such as in embodiments in which also the head part and/or the piston closes the chamber. With these embodiments, the head part and/or the piston may close the chamber perpendicular to the longitudinal axis. With alternative embodiments, the chamber wall may completely surround the chamber. The chamber wall then may be, for example, formed as the insert, such as the film bag.

The head part may be connected to the chamber wall by being formed materially uniform with the chamber wall. With other embodiments, the head part may be formed as a part that is separate from the chamber wall. The head part then may be connected to the chamber wall by a connector, such as a releasable connector. The head part may also be connected to the chamber wall in that the chamber wall or an enclosure of the chamber comprising the chamber wall contacts the head part, for example rests against the head part. The enclosure may, for example, be formed by the insert, such as the film bag.

The chamber wall may also be made from a material that is different from a material of the head part and the chamber wall may be joined to the head part. For example, the head part may be molded onto the chamber wall, for example if the chamber wall is formed by the film bag.

The transverse direction may be a radial direction.

The cartridge and/or the chamber may have a generally cylindrical shape, such as a cylindrical shape, extending along the longitudinal axis. The cartridge and/or the outer chamber may have a rounded outer surface in the transverse direction, such as a round outer surface.

Additionally or alternatively, the head part may have a rounded outer surface in the transverse direction, such as a rounded outer surface. For example, the head part may be configured as a disk-like member having a larger extent in the transverse direction than along the longitudinal axis.

The outlet may be located offset from the longitudinal axis. For example, the outlet may be located at an outer rim of the head part. The cartridge then may be configured as a multi-component cartridge, such as a two-component cartridge. With other embodiments, the outlet may be centered at the longitudinal axis. The cartridge then may be configured as a single component cartridge.

According to an embodiment, the portion of the head part comprises the outlet. This facilitates separating the residuals from the recycling portion since a large portion of the residuals usually remains within the outlet and the outlet may be disposed of together with the portion of the head part after having separated the portion of the head part from the chamber wall.

According to an embodiment, the head part closes the chamber at the dispensing end perpendicular to the longitudinal axis. For example, the head part may seal the chamber at the dispensing end. Residuals sticking to the head part then may be removed by detaching the head part from the chamber wall.

The portion of the head part that is detached from the chamber wall may comprise all portions of the head part that contact the material. For example, the portion of the head part may completely comprise a head surface closing the chamber perpendicular to the longitudinal direction at the dispensing end. The head surface may form an inner surface of the head part facing towards the chamber.

The portion of the head part may comprise the complete front closure of the chamber and/or the outer body. An opening that is created by the detachment of the portion of the head part from the chamber wall may have an extent in the transverse direction, such as a diameter, that at least equals an extent of an interior of the chamber and/or of the outer body in the transverse direction. This allows to easily remove the piston from the cartridge through the opening created by the detachment of the portion of the head part.

In general, at least the portion of the head part may be configured to contact the material. For example, the head part may be configured to contact the material only with the portion.

According to an embodiment, the piston is configured to be removed from the chamber wall, respectively the chamber or the outer body, through an opening of the cartridge or outer body at the dispensing end and to thereby remove the residuals of the material located in between the piston and the head part from the chamber wall. This allows to also remove the residuals through the opening at the dispensing end and prevents a re-contamination of the chamber wall upon removing the piston from the chamber wall as it could occur, for example, upon removing the piston through a rear opening of the cartridge at its rear end.

For example, the residuals of the material may be removed by scraping the residuals off the chamber wall with the piston. The residuals may be scraped, for example, by the seal provided between the piston and the chamber wall.

After having been introduced into the chamber or the outer body from the rear end, the piston may completely move through the chamber or the outer body along the chamber wall and exit the chamber or the outer body at the dispensing end. This may result in the piston completely scraping the chamber wall during the lifetime of the cartridge.

The opening of the cartridge at the dispensing end may be formed by the detaching of at least the portion of the head part from the chamber wall.

According to an embodiment, the portion of the head part and the piston are configured to connect to each other, such as to engage with each other, so that the piston is removed upon detachment of the portion of the head part from the chamber wall. This allows to easily remove the piston from the chamber wall. For example, the portion of the head part and the piston may form part of the contaminated portion of the cartridge that is removed before recycling.

Generally, the piston may be configured to be removed from the chamber wall together with the head part, for example upon detachment of the portion from the chamber wall.

With some embodiments, the piston may be configured to be pushed through the head part and to thereby detach the portion of the head part from the chamber wall. With these embodiments, the piston may have a cutter that cuts through the head part.

According to an embodiment, the piston comprises a first part of an interlock and the head part comprises a second part of the interlock, wherein the first part and the second part of the interlock are configured to engage with each other and to lock the piston to the portion of the head part upon the piston reaching the dispensing end. This facilitates removing the piston together with the portion of the head part from the chamber wall.

The interlock may be configured, for example, as a snap-fit connector. Upon engagement of the first part with the second part, at least one of the first part and the second part may deflect, for example in the transverse direction, while it moves longitudinally past the other one of the first part and the second part.

According to an embodiment, the first part of the interlock is located at a frontside of the piston facing towards the dispensing end and/or the second part of the interlock is located at a rear side of the head part facing towards the rear end. This allows for a simple construction of the interlock and facilitates engagement of the first and second parts.

According to an embodiment, the first part of the interlock is configured as a circular rim located at a cylindrical surface of the piston and/or the second part of the interlock is configured as a circular rim located at a cylindrical surface of the head part. This provides for secure locking of the piston to the head part.

In general, the first part of the interlock may be configured as a rim that extends in a circular direction around the longitudinal axis. The first part thereby may be configured as a circular section that only partly surrounds the longitudinal axis or it may fully surround the longitudinal axis. Likewise, the second part of the interlock may be configured as a rim that extends in the circular direction. Thereby, the second part may be configured as a circular section that only partly surrounds the longitudinal axis or it may fully surround the longitudinal axis.

According to an embodiment, the second part of the interlock is located at a protruding element of the head part, the protruding element protruding from the head part towards the rear end, for example into the chamber. This allows for secure interlocking between the piston and the head part.

The second part of the interlock may be located in a recess of the piston. The recess may be located at the frontside of the piston. With other embodiments, the first part of the interlock may be located in a recess of the head part and the second part of the interlock may be located at a protruding element of the piston. The protruding element may protrude from the piston towards the dispensing end. The recess may be formed at the head surface of the head part.

According to an embodiment, the cartridge comprises a detachment mechanism that is configured to be mechanically actuated when the piston is located at the dispensing end. A mechanical actuation of the detachment mechanism thereby comprises moving at least one element of the detachment mechanism and actuation of the detachment mechanism detaches the portion of the head part from the chamber wall. A mechanical detachment mechanism provides for simple detachment of the portion of the head part and for secure attachment of the portion before actuation of the detachment mechanism.

The detachment mechanism may, for example, be configured to be actuated by a user by directly manipulating or actuating the at least one element.

The at least one element may be configured as an element that is separate from the piston. In particular, the piston and the at least one element may be configured to be moved independently from each other.

The at least one element may be formed by a part of the connection that connects the head part to the chamber wall. For example, the at least one element may be formed by a flexible part of the connection, such as a flexible part of one of the head part and the chamber wall that is configured to engage a further part of the connection, such as a part of the other one of the head part in the chamber wall. The connection having the flexible part and the further port may be configured as a snap-fit connection.

According to an embodiment, the piston is configured to mechanically actuate the detachment mechanism by moving the at least one element. This may provide for automatic actuation of the detachment mechanism upon the piston reaching the dispensing end. For example, the piston may be configured to mechanically actuate the detachment mechanism upon reaching the dispensing end. The piston may be configured to engage with the at least one element for moving the at least one element.

According to an embodiment, the portion of the head part, such as the head part, and the chamber wall are configured as separate parts that are connected by a releasable connection, such as a mechanical lock, for example a snap-fit connection or a bayonet lock, allowing for detaching the head part from the chamber wall. The releasable connection may also be configured as a dissolvable portion of the chamber wall or of the head part. The releasable connection allows for reliable detachment of the portion of the head part along a predefined region between the separate parts forming the head part and the chamber wall.

If the releasable connection is configured as the mechanical lock, the releasable connection may comprise the detachment mechanism.

If the releasable connection is configured as the dissolvable portion, the portion of the head part may be detached from the chamber wall by exposing the dissolvable portion to a solvent. The dissolvable portion may be covered by a protective cover. This may prevent premature dissolving of the dissolvable portion. The protective cover may be removed prior to exposing the dissolvable portion to the solvent.

With some embodiments, the dissolvable portion may only be provided in an intermediate region in between the head part and the chamber wall and both the head part and the chamber wall may be formed from a material that does not dissolve upon exposure to the solvent. With other embodiments, one of the head part and the chamber wall, for example the head part, and the dissolvable portion may be made entirely from a dissolvable material so that the one of the head part and the chamber wall also dissolves in the solvent.

According to an embodiment, the piston is configured to actuate the releasable connection upon reaching the dispensing end and to thereby open the releasable connection. This allows for automatic detachment of the portion of the head part from the chamber wall. The piston may be configured to actuate the releasable connection by engaging with the releasable connection. For example, the piston may engage with the element of the release mechanism.

According to an embodiment, the head part and the chamber wall are configured as a materially uniform part. This allows for simple manufacture of the cartridge.

For example, the head part and the chamber wall may be formed from the same plastic material, such as from the same thermoplastic material.

According to an embodiment, the portion of the head part is connected to the chamber wall via a breaking section that is configured to break for detachment of the portion of the head part from the chamber wall. A breaking section is easy to implement using standard tools and can be easily incorporated into the cartridge. Manual breaking by a user also provides for a low-threshold step towards decontamination, as it is quick and does not require any additional tools.

The breaking section may be configured to break upon generating stress within the breaking section. The stress may, for example, be generated by a user. For example, the cartridge may be configured for the user grasping the chamber wall and tearing it apart from the head part.

The releasable connection or the breaking section may be positioned at the chamber wall and may be located at a distance towards the rear end from a sealing location at which the piston seals the chamber when being positioned at the end position. This ensures that the piston has scraped completely along the chamber wall before the chamber wall is detached from the head part.

The releasable connection or the breaking section may be positioned at a distance from the head part so that the piston remains stuck within a portion of the cartridge connected to the portion of the head part upon detachment of the head part. This allows to together dispense of the piston and the head part, as well as of the residuals enclosed therebetween.

Furthermore, a dead volume from which material cannot be expelled after the piston has reached the end position may be located at a distance from the releasable connection or the breaking section towards the dispensing end. The dead volume may be located between the head part and the sealing location of the piston.

According to an embodiment, the breaking section is formed as a section of the chamber wall or of the head part that is structurally weaker than a surrounding portion of the chamber wall or of the head part, respectively, wherein the surrounding portion surrounds the breaking section. This ensures that breaking only occurs within the breaking section. The chamber wall may, for example, be thinner in the breaking section than in the surrounding portion of the chamber wall.

According to an embodiment, an inlay is located within the chamber at the breaking section and covers the breaking section from an inside of the chamber, wherein the inlay is configured to shift upon the piston reaching the end position and to thereby uncover the breaking section. By covering the breaking section, the inlay may divert pressure on the chamber wall that occurs during dispensing of the material away from the breaking section. This allows to provide a weakened material within the breaking section without compromising the structurally integrity of the chamber during dispensing.

For example, the piston may be configured to push the inlay away from the breaking section upon reaching the end position, such as towards the dispensing end.

For example, the piston may be configured to engage with the inlay upon reaching the end position and to push the inlay away from the breaking section towards the dispensing end.

The inlay may be configured as a cylindrical sleeve or a cylindrical ring. It may rest against the inside of the chamber wall.

According to an embodiment the inlay comprises a spacer that engages with the head part to hold the inlay at the breaking section, wherein the spacer is compressed when the inlay shifts to uncover the breaking section. This prevents shifting of the inlay away from the breaking section until the piston is located at the dispensing end.

The spacer may, for example, protrude from the inlay towards the dispensing end. For example, the spacer may be configured as a pin extending from the inlay towards the dispensing end.

The inlay may comprise a multitude of spacers that are distributed around a circumference of the inlay, for example equally distributed around the circumference.

According to an embodiment, the breaking section comprises two predetermined breaking lines running parallel to each other around the chamber wall and being spaced apart by a breaking line distance, wherein the chamber wall is structurally weaker along the breaking lines than within an intermediate band in between the breaking lines. Providing the intermediate band allows the user to pull on the intermediate band to detach the chamber wall from the head part. This provides for a connection that only requires small forces exerted by the user for detachment.

According to an embodiment, the cartridge comprises a handle attached to the breaking section, wherein the handle is configured to be gripped and pulled by a user to remove parts of the breaking section and to thereby detach the portion of the head part from the chamber wall. The handle facilitates gripping the breaking section and removing material from the breaking section.

The handle may be formed at the intermediate band. For example, the handle may be formed materially uniform with the intermediate band. The parts of the breaking section removed by the user by gripping and pulling the handle may be the intermediate band.

The handle may be configured as an eyelet.

With the breaking section having the intermediate band in between the breaking lines, the inlay may cover both breaking lines and the intermediate band.

According to an embodiment, the piston comprises a cutter, such as a blade, that is configured to cut through the head part to separate the portion of the head part from the chamber wall. This keeps the contamination enclosed between the piston and the cut-out portion of the head surface, and the remaining cartridge can be recycled. The cutter provides for comparatively simple and low-force handling by the user. The environment also remains largely clean, as the contamination is enclosed between the piston and the head part.

The cutter may be configured as a hollow cylindrical member. An outer surface of the cutter may rest against an inside surface of the chamber wall.

The cutter may have a cutting edge at its front side towards the dispensing end. A sealing portion of the piston, such as a sealing rim of the piston, may be configured to be placed in front of the cutting edge during movement of the piston towards the dispensing end. For example, the piston may be axially fixed to the cutter by a releasable connection with the sealing portion placed in front of the cutting edge.

The cutting edge may be configured to pass the sealing portion of the piston towards the dispensing end when the piston is located at the dispensing end. For example, the releasable connection between the piston and the cutter may be configured to disengage or release upon the piston being stopped at the dispensing end, for example by hitting the head part. The releasable connection may be configured to break upon the piston being stopped at the dispensing end. For example, the releasable connection may comprise a lug that is configured to break upon the piston being stopped at the dispensing end.

The releasable connection between the piston and the cutter may comprise a window formed at one of the piston and the cutter, for example at the piston, and a lug formed at the other one of the piston and the cutter, for example at the cutter, wherein the lug is configured to engage with the window during movement of the piston towards the dispensing end. The lug may be configured to disengage from the window, for example by braking, when the piston is stopped at the dispensing end, for example by hitting the head part.

The window may be made from metal and the lug may be made from a plastic material, such as from a thermoplastic material. In general, the cutter may be made from metal. Furthermore, the piston may be made from a plastic material, such as a thermoplastic material.

A dispensing force exerted by a piston rod during dispensing may be transferred from the piston rod to the piston via the cutter, for example via the lug and the window.

The cartridge may comprise a bottom plate that is located at a rear end of the cutter towards the rear end from the cutter. The bottom plate may contact the rear end of the cutter. The bottom plate may be configured to transfer the dispensing force from the piston rod to the cutter, for example by engaging with both the piston rod and the cutter. The bottom plate may be configured as a separate member separate from the cutter and/or the piston rod.

According to an embodiment, the chamber wall forms part of a solid outer body of the cartridge. For example, the sidewall of the outer body may form the chamber wall. With these embodiments, the chamber may be configured so that the material to be dispensed directly contacts the sidewall of the outer body.

In general, the cartridge may be configured to prevent contact between the piston and the material. For example, the cartridge may comprise an insert that at least partly forms the chamber for the material and surrounds the material and a rear closure of the chamber may be formed by the insert. The insert may be formed as a film bag.

According to an embodiment, the chamber is formed by a film bag and the chamber wall is formed by a portion of the film bag, wherein the film bag is configured to enclose the material. This may prevent a contact of the material with the head part of the cartridge so that the head part may be recycled and the chamber wall formed by the film bag may be disposed of. The recycling portion then may comprise the head part and the contaminated portion may comprise the film bag.

The film bag may be configured to be inserted into the outer body. The outer body may be formed from a material that is stiffer than a film material of the film bag and may stabilize the film bag.

In general, the film bag may prevent contact of the material with the outer body of the cartridge.

The chamber wall may be connected to the head part by the film bag resting against the head part during dispensing.

The film bag with the chamber wall may be configured to be detached from the head part after the piston has reached the dispensing end, for example by separating the head part and the film bag resting against the head part. This allows to dispose of the residuals of the material enclosed in the film bag and to recycle the clean head part.

According to an embodiment, the film bag extends into the outlet of the head part and has an opening within the outlet. This allows to separate the complete head part from the material and to prevent a contamination of the head part. Furthermore, it allows to access the film bag after dispensing through the outlet.

According to an embodiment, the film bag is configured to be removed through the outlet from the portion of the head part. This provides for simple removal of the film bag with the residuals of the material without the necessity to detach the head part from the remaining parts of the outer body. The complete outer body then may be reused or recycled.

According to an embodiment, the cartridge further comprises a fastener that has a connection to the head part and is configured to fix a fixing portion of the film bag to the head part when the fastener is connected to the head part in a fixing position. This allows to securely hold the film bag in place.

The film bag may be configured to be removed from the head part together with the fastener. For example, the fastener may have a releasable connection to the head part that may be released without releasing the fixing portion of the film bag from the fastener.

According to an embodiment, the fixing portion of the film bag extends through the outlet. This allows to easily fix the fixing portion to the fastener.

According to an embodiment, the fastener is configured to pinch the fixing portion of the film bag in between a first surface and a second surface when the fastener is in the fixing position. This provides simple means for attaching the fixing portion to the fastener. With other embodiments, the film bag may also be fixed to the fastener by other means. For example, the film bag may be molded onto the fastener or the film bag may be molded to a connector that may be fixed to the fastener.

The first surface and/or the second surface may be orientated perpendicular to the longitudinal axis. The first surface and/or the second surface may be configured as annular surfaces that surround the outlet.

According to an embodiment, the first surface is a surface of the fastener and the second surface is a surface at the outlet. This allows to pinch the fixing portion in between the outlet and the fastener.

The fixing portion may be fixed in between a first edge formed by the first surface and a second edge formed by the second surface. The first edge and the second edge may rest against each other for fixing the fixing portion. With other embodiments, the first edge and the second edge may move past each other along the longitudinal axis to fix the fixing portion.

According to an embodiment, the connection defines the fixing position of the fastener with respect to the head part and further defines an assembling position of the fastener with respect to the head part. The first surface has a fixing distance from the second surface with the fastener in the fixing position and the first surface has an assembling distance from the second surface with the fastener in the assembling position, the fixing distance being smaller than the assembling distance. The assembling distance thereby allows for movement of the fixing portion of the film bag into a space in between the first surface and the second surface during assembling of the cartridge. This provides for easy assembly of the cartridge, for example in an automated assembly line.

The connection may comprise a connection part located at one of the outlet and the fastener and a connection counterpart located at the other one of the outlet and the fastener. The connection part and the connection counterpart may be configured to engage with each other to fix the fastener in the fixing position and to place the first surface at the fixing distance from the second surface.

Furthermore, the connection may comprise a further connection counterpart that is located at the other one of the outlet and the fastener. The connection part may be configured to engage with the further connection counterpart to place the fastener in the assembling position and the first surface at the assembling distance from the second surface.

According to an embodiment, the connection is a releasable connection, such as a threaded lock or a bayonet lock. This allows for detaching the fastener after use and, for example, to thereby remove the film bag with the chamber wall from the head part.

According to an embodiment, the fastener comprises a catch for the film bag, such as a barb, wherein the catch is configured to engage with the film bag and to drag the film bag together with the fastener upon removing the fastener from the head part and to thereby remove the film bag from the head part. This allows for easy removal of the film bag from the head part.

The catch may protrude from one of the first and second surfaces and the catch may be received within a depression, such as a slot, formed at the other one of the first and second surfaces.

The catch may be configured to pinch through the film bag, for example through the fixing portion of the film bag. For example, the catch may be configured to pinch through the fixing portion while the fixing section is located in between the first surface and the second surface.

According to an embodiment, the catch is formed between the fastener and an intermediate member that is placed in between the outlet and the fastener, wherein the intermediate member is configured to detach from the outlet together with the fastener and to thereby remove the film bag from the head part. This allows to design the catch and the connection between the fastener and the outlet independently from each other.

The intermediate member may comprise the connection counterpart and, potentially, the further connection counterpart and the fastener may comprise the connection part. With other embodiments, the intermediate member may comprise the connection part and the fastener may comprise the connection counterpart and, potentially, the further connection counterpart.

According to an embodiment, the intermediate member is placed in between the outlet and the fastener. For example, the intermediate member may be placed in between the outlet at the fastener along the longitudinal axis.

According to an embodiment, the catch comprises the first surface and the second surface, wherein the first surface is a surface of the fastener and the second surface is a surface of the intermediate member. A connection between the fastener and the intermediate member may remain closed during detachment of the fastener from the head part so that the first surface remains at the fixing distance from the second surface during removal of the fastener. This may provide for secure removal of the film bag upon detachment of the fastener from the head part.

In a second aspect, the present disclosure is also directed at a method for removing residuals of a material to be dispensed from a cartridge for the material, wherein the cartridge comprises a chamber wall, a head part and a piston. The chamber wall extends along a longitudinal axis from a rear end to a dispensing end and the chamber wall bounds a chamber for the material in a transverse direction perpendicular to the longitudinal axis. The head part is connected to the chamber wall at the dispensing end of the cartridge and comprises an outlet for the material to be dispensed. The method thereby comprises the steps of:
- providing the cartridge with the material filled into the chamber, with the material contacting the chamber wall and with the piston arranged towards the rear end of the cartridge;
- moving the piston along the longitudinal axis towards the dispensing end for dispensing the material; and
- detaching at least a portion of the head part from the chamber wall after the piston has reached the dispensing end, for example to remove the residuals of the material from a portion of the cartridge.

The method may be performed with the cartridge according to the first aspect of the present disclosure. Therefore, all embodiments and technical effects disclosed for the cartridge according to the first aspect also apply to the method and vice versa.

According to an embodiment, the method comprises the step of removing the piston from the chamber wall, respectively the chamber, through an opening of the chamber at the dispensing end and thereby removing the residuals of the material located in between the piston and the head part from the chamber wall.

The piston may remove the material located in between the piston and the head part with a sealing portion of the piston that rests against the chamber wall. This may allow to scrape the residuals off the chamber wall.

According to an embodiment, the method comprises the step of locking the piston and the head part to each other so that the piston is removed from the chamber wall through the dispensing end upon the detaching of at least the portion of the head part from the chamber wall.

For example, the piston and the head part may be locked to each other by engaging the piston with the head part.

According to an embodiment, the detaching of at least the portion of the head part from the chamber wall comprises dissolving at least the portion of the head part and/or a portion of the chamber wall in a solvent.

This allows to remove the head part without the need for applying any force to the cartridge.

With some embodiments, the head part may be completely dissolved.

The method may further comprise the step of removing a protective cover from at least the portion of the head part and/or a portion of the chamber wall, for example by heating, such as burning, the protective cover.

According to an embodiment, the chamber wall is configured as a portion of a film bag, wherein the film bag encloses the material filled into the chamber. The method comprises the step of removing the film bag through the outlet from the portion of the head part. The film bag provides decontamination without contaminating the environment and the user does not need to apply much force for detachment.

The method may comprise the steps of:
- filling the material into the film bag;
- inserting the filled film bag into an outer body of the cartridge.

The filled film bag may have a sausage-like shape.

According to an embodiment, the method comprises the step of fixing a fixing portion of the film bag to the head part with a fastener, for example, by pinching the fixing portion of the film bag in between a first surface and a second surface.

The method may further comprise the step of inserting a plug into an outlet passage of the fastener so that the outlet passage is closed.

According to an embodiment, the method comprises the step of extending the fixing portion of the film bag through the outlet before the fixing of the fixing portion of the film bag to the head part, for example, by moving the fixing portion of the film bag into the outlet.

According to an embodiment, the step of fixing the fixing portion of the film bag to the head part with the fastener comprises the steps of:
- positioning a first surface at an assembling distance from a second surface;
- placing the fixing portion of the film bag in a space in between the first surface and the second surface; and
- positioning the first surface at a fixing distance from the second surface, thereby pinching the fixing portion of the film bag in between the first surface and the second surface.

Furthermore, the method may comprise pressurizing the film bag with the piston after inserting the filled film bag into the outer body of the cartridge. This may squeeze the film bag into the outlet of the head part. Furthermore, the fixing section may bulge into the space between the first and second surfaces.

The method may further comprise the step of pinching a barb through the film bag, for example by moving the first surface from the assembling distance to the fixing distance and/or by moving the fastener from the assembling position to the fixing position.

According to an embodiment, the film bag becomes collapsed in between the piston and the head part upon the step of moving the piston along the longitudinal axis towards the dispensing end.

The head part detaching from the chamber wall that contacts the material is not an essential feature of the present disclosure. With other embodiments, the head part may also be configured to detach from the sidewall of the outer body, whereby the sidewall of the outer body does not necessarily contact the material to be dispensed.

In a third aspect, the present disclosure is directed at a cartridge for a material to be dispensed, the cartridge comprising a sidewall, a head part and a piston,
wherein the sidewall extends along a longitudinal axis from a rear end to a dispensing end, and wherein the sidewall surrounds a chamber for the material in a transverse direction perpendicular to the longitudinal axis. The head part is connected to the sidewall at the dispensing end of the cartridge and comprises an outlet for the material to be dispensed. The piston is configured to be arranged within the cartridge and to be moved along the longitudinal axis towards the dispensing end for dispensing the material. At least a part of the chamber is formed by a film bag and the film bag is configured to at least partly enclose the material, wherein a chamber wall that bounds the chamber in the transverse direction and that is configured to contact the material is formed by a portion of the film bag. The chamber wall is separate from the sidewall and at least a portion of the head part is configured to detach from the sidewall when the piston is located at an end position at the dispensing end.

Providing the film bag in between the material and the sidewall protects the sidewall from contact with the material and thus prevents a contamination of the sidewall with the material. This facilitates recycling of the sidewall.

The film bag may also be configured to be located in between the material and the piston. For example, the film bag may be configured to form a rear closure of the chamber.

Apart from the head part detaching from the sidewall and not necessarily from the chamber wall, the cartridge according to the third aspect may be configured as it is disclosed for the cartridge according to the first aspect. Therefore, all technical effects and embodiments disclosed for the cartridge according to the first aspect also apply to the cartridge of the third aspect and vice versa.

According to an embodiment, the film bag is configured to be removed together with the head part from the sidewall. The film bag thereby may remain connected with the head part upon removing. With alternative embodiments, the film bag and the head part may be configured to be removed as separate parts from the sidewall.

According to an embodiment, the portion of the head part closes the chamber at the dispensing end perpendicular to the longitudinal axis and is, for example, configured to contact the material. The head part may form a front closure of the chamber towards the dispensing end.

According to an embodiment, the portion of the head part and the film bag are joined to each other. This allows to easily dispose of both the head part and the film bag together. The head part and the film bag may be irreleasably joined to each other so that the head part and the film bag may only be separated by breaking or opening at least one of the head part or the film bag.

For example, the head part may be molded around the film bag at the dispensing end.

According to an embodiment, the film bag is configured to form a front closure of the chamber towards the dispensing end and to be located in between the head part and the material.

According to an embodiment, at least a portion of the head part and the piston are configured to connect to each other so that the piston is removed upon detachment of the portion of the head part from the sidewall.

According to an embodiment, the piston comprises a first part of an interlock and the portion of the head part comprises a second part of the interlock, wherein the first part and the second part of the interlock are configured to engage with each other and to lock the piston to the portion of the head part upon the piston reaching the dispensing end.

According to an embodiment, the first part of the interlock is located at a frontside of the piston facing towards the dispensing end and/or the second part of the interlock is located at a rear side of the head part facing towards the rear end.

According to an embodiment, the first part of the interlock is configured as a circular rim located at a cylindrical surface of the piston and/or the second part of the interlock is configured as a circular rim located at a cylindrical surface of the head part.

According to an embodiment, the second part of the interlock is located at a protruding element of the head part, the protruding element protruding from the head part into the chamber towards the rear end.

According to an embodiment, the cartridge comprises a detachment mechanism that is configured to be mechanically actuated when the piston is located at the dispensing end, wherein a mechanical actuation of the detachment mechanism comprises moving at least one element of the detachment mechanism, wherein actuation of the detachment mechanism detaches the portion of the head part from the sidewall.

According to an embodiment, the piston is configured to mechanically actuate the detachment mechanism by moving the at least one element.

According to an embodiment, the head part and the sidewall are configured as separate parts that are connected by a releasable connection, such as a mechanical lock, for example a snap-fit connection or a bayonet lock, allowing for detaching the head part from the sidewall.

According to an embodiment, the piston is configured to actuate the releasable connection upon reaching the dispensing end and to thereby open the releasable connection.

The portion of the head part detaching from the chamber wall or the sidewall is not an essential feature of the present disclosure. With other embodiments, the head part may also be configured to remain completely connected to the chamber wall and/or the sidewall during removal of the residuals from the chamber wall.

Therefore, in a fourth aspect, the present disclosure is also directed at a cartridge for a material to be dispensed, wherein the cartridge comprises a chamber wall, a head part, a piston, and an intermediate member. The chamber wall extends along a longitudinal axis from a rear end to a dispensing end, and the chamber wall bounds a chamber for the material in a transverse direction perpendicular to the longitudinal axis. The head part is connected to the chamber wall at the dispensing end of the cartridge and comprises an outlet for the material to be dispensed and the piston is configured to be arranged within the cartridge and to be moved along the longitudinal axis towards the dispensing end for dispensing the material. The intermediate member is located in between the piston and the head part and the intermediate member is configured to transport residuals of the material towards the outlet in the transverse direction and to remove the residuals from the chamber through the outlet when the piston reaches the head part.

As far as no differences are disclosed, the cartridge according to the fourth aspect may be configured as the cartridge according to the first aspect and vice versa.

The intermediate member may be configured to contact the head part, such as a head surface of the head part or a protruding element, such as a spike, of the head part before transporting the residuals in the transverse direction.

The intermediate member may be configured to perform a transporting movement for transporting the residuals. A force for the transporting movement may be imparted to the intermediate member by the piston. For example, the piston may move axially along the longitudinal axis and/or may rotate around the longitudinal axis for imparting the transporting movement onto the intermediate member.

The intermediate member may be configured to be pressurized for performing the transporting movement. For example, the intermediate member may be configured to be pressurized by the piston approaching the head part.

According to an embodiment, the head part closes the chamber at the dispensing end in a longitudinal direction parallel to the longitudinal axis.

According to an embodiment, the intermediate member is configured as a flushing medium, such as a fluid, that is configured to be placed in between the piston and the material and that is configured to flush the residuals of the material through the outlet when the piston reaches the head part.

The flushing medium may perform the transporting movement by being flushed in the transverse direction, for example along a head surface of the head part. The piston may impart the transporting movement onto the flushing medium by moving along the longitudinal axis and by thereby pressurizing the flushing medium.

The flushing medium may have a viscosity that is at least 1 mPa s. A difference between the viscosity of the flushing medium and a viscosity of the material may be at least 1 mPa s and/or at most 1,000,000 mPa s.

According to an embodiment, the flushing medium is contained in a flushing medium bag, wherein the flushing medium bag is configured to be placed in between the piston and the material to be dispensed and the cartridge is configured to open the flushing medium bag upon the piston reaching the dispensing end of the cartridge. This provides for a user-friendly application of the flushing medium.

According to an embodiment, the cartridge comprises an opener, such as a spike, to open the flushing medium bag upon the piston reaching the dispensing end of the cartridge, wherein the opener is positioned at the dispensing end within the chamber. This ensures that a user cannot bypass the flushing of the residuals.

With other embodiments, the flushing medium may have a larger viscosity than the material and the flushing medium may be directly placed in between the material and the piston. Thereby, the flushing medium may contact both the material and the piston during movement of the piston towards the dispensing end.

Due to the differences in viscosity, the lower-viscosity material is pressurised by the flushing medium and dispensed without physically separating the flushing medium and the material. After complete application, the flushing process takes place automatically and the opener is not required.

According to an embodiment, the intermediate member and a head surface of the head part have shapes that are adapted for the intermediate member first contacting the head surface along a contact line in an outer region located away from the outlet and to then sequentially contact the head surface towards the outlet, thereby shifting the contact line towards the outlet and moving the residuals towards the outlet. This transfers the residuals in the transverse direction by squeezing them towards the outlet. This concept also significantly reduces the activation threshold for the user, as no additional work steps are necessary for removing the residuals.

The transporting movement of the intermediate member thereby may be an axial movement of the intermediate member during which it is pressed against the head surface. The piston may impart the transporting movement onto the intermediate member by pushing it along the longitudinal axis.

According to an embodiment, a distance between the intermediate member and the head surface is larger at a first radial position that is radially aligned with the outlet than at a second radial position that is spaced apart from the outlet in the transverse direction. This provides for efficient squeezing of the residuals towards the outlet. For example, the distance between the intermediate member and the head surface may continuously increase from the second radial position towards the first radial position.

According to an embodiment, the intermediate member is configured as a scraper that comprises the contact line at a front edge, wherein the scraper is configured to rotate with respect to the head part to move the front edge with the contact line in a circumferential direction around the longitudinal axis towards the outlet. The transporting movement of the intermediate member may then be a rotation of the intermediate member around the longitudinal axis. The piston may impart the transporting movement onto the intermediate member by rotating around the longitudinal axis.

The intermediate member may be attached, such as fixed to, a front surface of the piston facing towards the dispensing end.

According to an embodiment, the intermediate member is configured as an elastic member. The intermediate member may be configured to be compressed upon transporting the residuals in the transverse direction.

According to an embodiment, the intermediate member comprises a pusher that is configured to move into the outlet upon the contact line reaching the outlet. This allows to remove all residuals from the dead volume at the head part.

According to an embodiment, the intermediate member comprises ribs extending along the longitudinal axis towards the rear end. A distance between the ribs in the transverse direction and/or a thickness of the ribs in the transverse direction may be adapted to provide for a gradual build-up of pressure from the second radial position towards the first radial position. The ribs may circumferentially enclose the longitudinal axis.

According to an embodiment, the intermediate member is configured as a film, such as a part of a film bag forming the chamber wall, that is configured to enclose the material and to be removed through the outlet. The film bag may be configured as it is disclosed in connection with the film bag of the cartridge according to the first aspect and vice versa.

The intermediate member may be configured to move together with the piston during dispensing the material. Additionally or alternatively, the intermediate member may be located in between the material and the piston during movement of the piston for dispensing the material.

With the intermediate member being configured as the flushing medium, the intermediate member forms a cleaning medium for removing the residuals from the chamber.

Generally, the cartridge may comprise a cleaning medium that is configured to move together with the piston during dispensing the material. Additionally or alternatively, the cleaning medium may be located in between the material and the piston during movement of the piston for dispensing the material.

With other embodiments, the cleaning medium may also be introduced into the chamber after the piston has been located at the dispensing end.

In a fifth aspect, the present disclosure is also directed at a method for removing residuals of a material to be dispensed from a cartridge, wherein the cartridge comprises a chamber wall, a head part, and a piston. The chamber wall extends along a longitudinal axis from a rear end to a dispensing end and the chamber wall bounds a chamber for the material in a transverse direction perpendicular to the longitudinal axis. The head part is connected to the chamber wall at the dispensing end of the cartridge and comprises an outlet for the material to be dispensed and the piston is movably arranged along the longitudinal axis for dispensing the material. The method comprises the steps of:
- providing the cartridge with the piston arranged at the dispensing end of the cartridge and with the residuals of the material located in a chamber part in between the piston and the head part;
- introducing a cleaning medium into the chamber part and removing the residuals with the cleaning medium from the chamber part.

Cleaning the cartridge with ah cleaning medium may enable complete reuse and recycling of the cartridge.

The cleaning medium may be a fluid or a gas. For example, the cleaning medium may be compressed air.

According to an embodiment, the residuals are removed from the chamber part via the outlet.

According to an embodiment, the head part closes the chamber at the dispensing end in a longitudinal direction perpendicular to the longitudinal axis.

According to an embodiment, the cleaning medium is introduced into the chamber part from the rear end, for example through the piston rod.

According to an embodiment, the piston comprises a passage, such as a valve, for introducing the cleaning medium into the chamber part through the piston. The passage may, for example, be arranged in the transverse direction at an outer rim of the piston.

Example, the piston may comprise a multitude of passages. The passages may be arranged in the transverse direction at the outer rim of the piston.

According to an embodiment, the cartridge comprises an auxiliary passage through the outlet that is arranged at an angle, such as at a right angle, with a main passage of the outlet for dispensing the material and intersects the main passage. The method comprises the step of pushing an auxiliary medium, such as air, through the auxiliary passage to generate a vacuum within the main passage to draw the cleaning medium into the chamber. The vacuum may be created by the Bernoulli effect. The auxiliary passage may facilitate the application of the auxiliary medium and the introduction of the cleaning medium into the chamber.

The cartridge may comprise an insert that closes the auxiliary passage during dispensing of the material. The insert may be configured to be removed for opening the auxiliary passage and for applying the auxiliary medium.

According to an embodiment, the cleaning medium is provided in a compartment in between the piston and the chamber part, wherein, for example, the compartment is formed by a bag. The cleaning medium may be the flushing medium according to the fourth aspect and the bag may be the flushing medium bag.

According to an embodiment, the cleaning medium is air.

The present disclosure is also directed at any of the cartridges according to the present disclosure, wherein the chamber is filled with the material.

The material may be, for example, at least one of an adhesive, a sealant, a lubricant, a grease, a paste, a gel, an industrial material, a construction material, a medical compound, and a dental compound.

The material may be, for example, an epoxy, a polyurethane, a cyanoacrylate, a silicone adhesive, or an UV-curable adhesive. It also may be, for example, a silicone-based sealant, an acrylic sealant, a polyurethane sealant, or butyl rubber. The material may be a high-viscosity lubricant, a synthetic grease, or an anti-seize compound. The material also may be a thermal paste, a solder paste, a conductive ink, a cosmetic cream, or a cosmetic gel. The material further may be a joint filler, a mortar compound, or a concrete repair paste. Finally, the material may be an impression material, a bone cement, or a surgical adhesive.

The material may be a single component material or a multi-component material, such as a two-component material. With a multi component material, the chamber may comprise one component of the material.

### DRAWINGS

Exemplary embodiments and functions of the present disclosure are described herein in conjunction with the following drawings, showing schematically:
- Fig. 1: an exploded view of a first cartridge according to the present disclosure;
- Fig. 2: a perspective bottom view of the head part of the first cartridge;
- Fig. 3: a cut side view of the first cartridge with a piston of the first cartridge located towards the rear end of the first cartridge;
- Fig. 4: a cut side view of the first cartridge with the piston located at an end position at a dispensing end of the first cartridge;
- Fig. 5: a perspective cut view through the first cartridge with the piston located at the end position;
- Fig. 6: the head part of the first cartridge with the piston locked to the head part;
- Fig. 7: a cut side view through a connection between the head part and a chamber wall of the first cartridge;
- Fig. 8: a cut side view through the connection with the piston engaging a mechanical element of the connection;
- Fig. 9: a cut side view of a second cartridge according to the present disclosure with a piston positioned towards a rear end of the second cartridge;
- Fig. 10: a cut side view of the second cartridge with the piston positioned at an end position at a dispensing end of the second cartridge;
- Fig. 11: a perspective exploded view of the second cartridge;
- Fig. 12: a perspective view of a fastener of the second cartridge;
- Fig. 13: a perspective view of the fastener located at an assembling position at an outlet of the second cartridge;
- Fig. 14: a perspective view of the fastener located at a fixing position at the outlet of the second cartridge;
- Fig. 15: a cut side view of the second cartridge with the fastener located at the assembling position;
- Fig. 16: a cut side view of the second cartridge with the fastener located at the fixing position;
- Fig. 17: a cut side view of the second cartridge with the fastener detached from the outlet;
- Fig. 18: a cut side view of the outlet of the second cartridge with an intermediate member attached to the outlet and an alternative embodiment of the fastener located at an assembly position;
- Fig. 19: a cut side view of the outlet of the second cartridge with the intermediate member attached to the outlet and the alternative embodiment of the fastener located at a fixing position;
- Fig. 20: a cut side view of the outlet of the second cartridge with the intermediate member and the alternative embodiment of the fastener detached from the outlet;
- Fig. 21: a side view of a third cartridge according to the present disclosure;
- Fig. 22: a further side view of the third cartridge;
- Fig. 23: a further side view of the third cartridge with a chamber wall separating from a head part;
- Fig. 24: an exploded perspective view of the third cartridge with a piston and an inlay;
- Fig. 25: a side view of the third cartridge;
- Fig. 26: a side view of the third cartridge in a variant having a reinforcement element;
- Fig. 27: a cut side view of a fourth cartridge according to the present disclosure with a head part connected to a chamber wall by a breaking section;
- Fig. 28: a cut side view of the fourth cartridge with the head part detached from the chamber wall;
- Fig. 29: the breaking section of the fourth cartridge;
- Fig. 30: a perspective view of the fourth cartridge with the breaking section and an inlay;
- Fig. 31: a cut side view of a fifth cartridge according to the present disclosure with a piston located at a dispensing end;
- Fig. 32: a cut side view of the fifth cartridge with a blade cutting through a head part of the fifth cartridge;
- Fig. 33: a perspective exploded view of the fifth cartridge;
- Fig. 34: a further perspective exploded view of the fifth cartridge with the blade assembled to a piston;
- Fig. 35: a cut side view of the fifth cartridge with the piston and the blade located at a dispensing end;
- Fig. 36: a side view of a sixth cartridge according to the present disclosure;
- Fig. 37: a cut side view of the sixth cartridge;
- Fig. 38: a side view of a seventh cartridge according to the present disclosure;
- Fig. 39: a cut side view through the seventh cartridge;
- Fig. 40: a side view of an eighth cartridge according to the present disclosure with a detailed view of a connection covered by a protective cover;
- Fig. 41: a side view of the eighth cartridge with a detailed view of the connection with the protective cover removed;
- Fig. 42: a cut side view of a ninth cartridge according to the present disclosure with a piston arranged towards a rear end of the ninth cartridge;
- Fig. 43: a cut side view of the ninth cartridge with the piston arranged at the dispensing end of the ninth cartridge;
- Fig. 44: a cut side view of the ninth cartridge with a flushing medium removing residuals from a chamber of the ninth cartridge;
- Fig. 45: a cut side view of the ninth cartridge with the piston arranged at the dispensing end of the ninth cartridge;
- Fig. 46: a perspective view of the ninth cartridge;
- Fig. 47: a detailed cut side view of a piston and an intermediate part of a tenth cartridge according to the present disclosure;

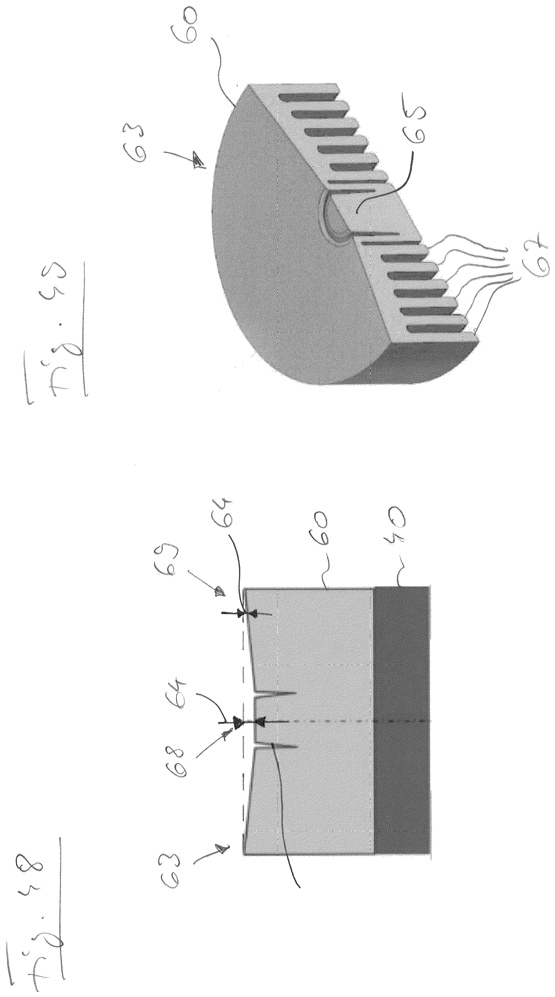

- Fig. 48: a cut side view of the piston and the intermediate part of the tenth cartridge;
- Fig. 49: a perspective cut view of the intermediate part of the tenth cartridge;
- Fig. 50: a perspective exploded view of the tenth cartridge;
- Fig. 51: a perspective exploded view of an alternative variant of the tenth cartridge;
- Fig. 52: a cut side view of the alternative variant of the tenth cartridge with the piston located towards a rear end of the alternative variant of the tenth cartridge;
- Fig. 53: a cut side view of the alternative variant of the tenth cartridge with the piston located towards a dispensing end of the alternative variant of the tenth cartridge;
- Fig. 54: a cut side view of the alternative variant of the tenth cartridge with the piston compressing the intermediate part at the dispensing end of the alternative variant of the tenth cartridge;
- Fig. 55: a cut side view of an eleventh cartridge according to the present disclosure with a piston arranged towards a rear end of the eleventh cartridge;
- Fig. 56: a cut side view of the eleventh cartridge with the piston arranged towards a dispensing end of the eleventh cartridge;
- Fig. 57: a top view onto the piston of the eleventh cartridge;
- Fig. 58: a cut side view of the eleventh cartridge with the piston arranged towards the dispensing end and a scraper compressed in between the piston and a head part of the eleventh cartridge;
- Fig. 59: a cut side view of a twelfth cartridge with the piston arranged at a dispensing end of the twelfth cartridge;
- Fig. 60: a top view onto the piston of the twelfth cartridge;
- Fig. 61: a detailed cut side view of the twelfth cartridge;
- Fig. 62: a cut side view of a thirteenth cartridge according to the present disclosure;
- Fig. 63: a cut side view of the thirteenth cartridge with an insert removed from an outlet of the thirteenth cartridge;
- Fig. 64: a cut side view of the thirteenth cartridge with a cleaning medium drawn into the thirteenth cartridge;
- Fig. 65: an exploded side view of a fourteenth cartridge according to the present disclosure;
- Fig. 66: a first method according to the present disclosure for removing residuals of a material to be dispensed from a cartridge;
- Fig. 67: the first method with additional optional steps;
- Fig. 68: a second method according to the present disclosure for removing residuals of a material to be dispensed from a cartridge;
- Fig. 69: a method for providing a cartridge according to the present disclosure;
- Fig. 70: a fourth method according to the present disclosure for removing residuals of a material to be dispensed from a cartridge;
- Fig. 71: a fifth method according to the present disclosure for removing residuals of a material to be dispensed from a cartridge.

### DETAILED DESCRIPTION

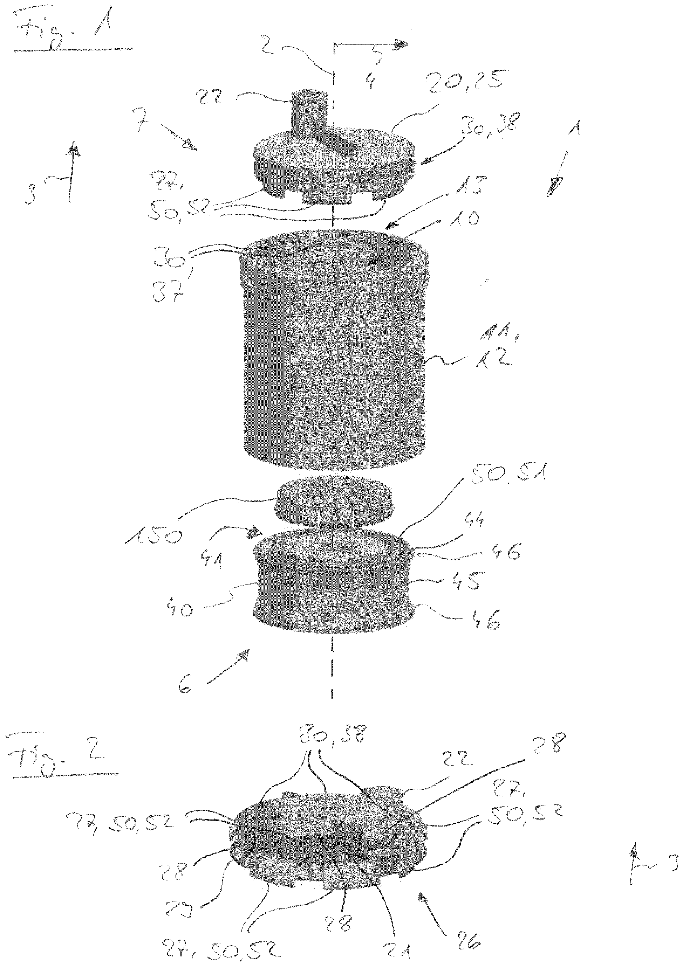

Fig. 1 depicts an exploded view of a first cartridge 1 for a material to be dispensed according to the present disclosure. The cartridge 1 comprises a chamber 10 for the material to be dispensed, which extends along a longitudinal axis 2 from a rear end 6 of the cartridge 1 to a dispensing end 7 of the cartridge 1. A chamber wall 12 closes the chamber 10 in a transverse direction 4 perpendicular to the longitudinal axis 2. The transverse direction 4 corresponds to a radial direction. The chamber wall 12 is configured as a hollow sleeve that extends along the longitudinal axis 2 between the rear end 6 and the dispensing end 7 of the cartridge 1.

The chamber wall 12 is formed by a sidewall 11 of an outer body of the cartridge 1. The outer body further has a head part 20 that closes the outer body along the longitudinal axis 2 at the dispensing end 7.

The head part 20 closes an opening 13 of the cartridge 1 at the dispensing end 7. The opening 13 forms an opening of the chamber wall 12 and the chamber 10 along the longitudinal axis 2 at the dispensing end 7 of the cartridge 1. The head part 20 is configured as a disc-like member and comprises an outlet 22 for the material to be dispensed. Exemplarily, the outlet 22 is located at a distance from the longitudinal axis 2. With the embodiment shown, the outlet 22 is located at an outer edge of the head part 20 in the transverse direction 4. With other embodiments, the outlet 22 may also be centered at the longitudinal axis 2.

The first cartridge 1 further comprises a piston 40 that forms part of the outer body. The piston 40 is inserted into the outer body, namely the sidewall 11 formed by the chamber wall 12 from the rear end 6 and closes the outer body and the chamber 10 towards the rear end 6. The piston 40 is configured as a disc-like member. At an outer surface 45, the piston 40 comprises at least one sealing rim 46 that seals the chamber 10 at the interface between the piston 40 and the sidewall 11. The sealing rim 46 may be located at a frontside 41 of the piston 40 facing towards the dispensing end 7. Exemplarily, the piston 40 comprises two sealing rims 46, one located at the frontside 41 of the piston 40 and another one located at a rear side of the piston 40 facing towards the rear end 6.

The piston 40 comprises a venting insert 150 that is configured to close a venting hole of the piston 40 once the piston 40 contacts the material inside the chamber 10 with the venting insert 150 after insertion of the piston 40 into the sidewall 11.

The head part 20 is connected to the chamber wall 12 by a releasable connection 30. The connection 30 comprises first parts 37 that are located at the chamber wall 12 and second parts 38 that are located at the head part 20. Each of the first parts 37 is configured to engage with one of the second parts 38 to fix the head part 20 to the chamber wall 12.

The first parts 37 are located at an inner surface of the chamber wall 12 and the second parts 38 are located at an outer surface of the head part 20. The head part 20 is configured to be inserted into the chamber wall 12 with the inner surface of the chamber wall 12 facing the outer surface of the head part 20. With other embodiments, the first parts 37 may also be located at an outer surface of the chamber wall 12 and the second parts 38 may be located at an inner surface of the head part 20. The chamber wall 12 then may be configured to be inserted into the head part 20.

The connection 30 is exemplarily configured as a bayonet lock. Exemplarily, the first parts 37 are configured as recesses and the second parts 38 are configured as corresponding protrusions that are configured to engage with the recesses. With other embodiments, the first parts 37 may also be configured as protrusions and the second parts 38 may be configured as recesses.

The first cartridge 1 comprises a detachment mechanism that allows for detachment of the head part 20 from the chamber wall 12. The detachment mechanism is formed by the connection 30. The detachment mechanism is configured to be actuated by a user by rotating the head part 20 relative to the chamber wall 12 to open the bayonet lock.

With the first cartridge 1, the complete head part 20 may be detached from the chamber wall 12 by opening the connection 30.

The head part 20 and the piston 40 are configured to connect to each other, namely to engage with each other, so that the piston 40 may be removed from the chamber wall 12 upon detachment of the head part 20.

To this end, the first cartridge 1 comprises a mechanical interlock 50 that is configured to lock the piston 40 to the head part 20 when the piston 40 is located at the dispensing end 7. The interlock 50 comprises a first part 51 at the piston 40 and a second part 52 at the head part 20.

The first part 51 of the interlock 50 is located at the frontside 41 of the piston 40. The first part 51 of the interlock 50 is located at a cylindrical surface 44 of the piston 40. Exemplarily, the cylindrical surface 44 is located at an inner surface of an outer wall of the piston 40. The cylindrical surface 44 thereby is placed within a circular recess of the piston 40 so that the cylindrical surface 44 does not protrude from a front surface at the frontside 41 of the piston 40. The first part 51 of the interlock 50 is configured as a protrusion that radially protrudes from the cylindrical surface 44 parallel to the transverse direction 4, exemplarily radially inwards.

As can be seen from Fig. 2, which shows a perspective bottom view of the head part 20 of the first cartridge 1, the second part 52 of the interlock 50 is located at a rear side 26 of the head part 20. The second part 52 is placed at a protruding element 27 of the head part 20. The protruding element 27 protrudes from a head surface 21 of the head part 20, which head surface 21 faces towards the rear end 6. The protruding element 27 is formed as a protruding rib and forms a section of a circular protrusion. The second part 52 of the interlock 50 is configured as a protrusion that radially protrudes from a cylindrical surface 28 of the protruding element 27 parallel to the transverse direction 4, exemplarily radially outwards.

As can be seen from the Figures, the head part 20 comprises a multitude of second parts 52, each of which is configured as described before. The second parts 52 are placed circumferentially around the longitudinal axis 2 and are spaced apart from each other.

A seal 29 is placed at an interface between the head part 20 and the chamber wall 12, which seal 29 seals the chamber 10 at the dispensing end 7. Exemplarily, the seal 29 is formed at the head part 20.

The seal 29 is formed as a circumferential lip resting against the inside surface of the chamber wall 12. The second part 52 of the interlock 50 protrudes beyond the seal 29 towards the rear end 6.

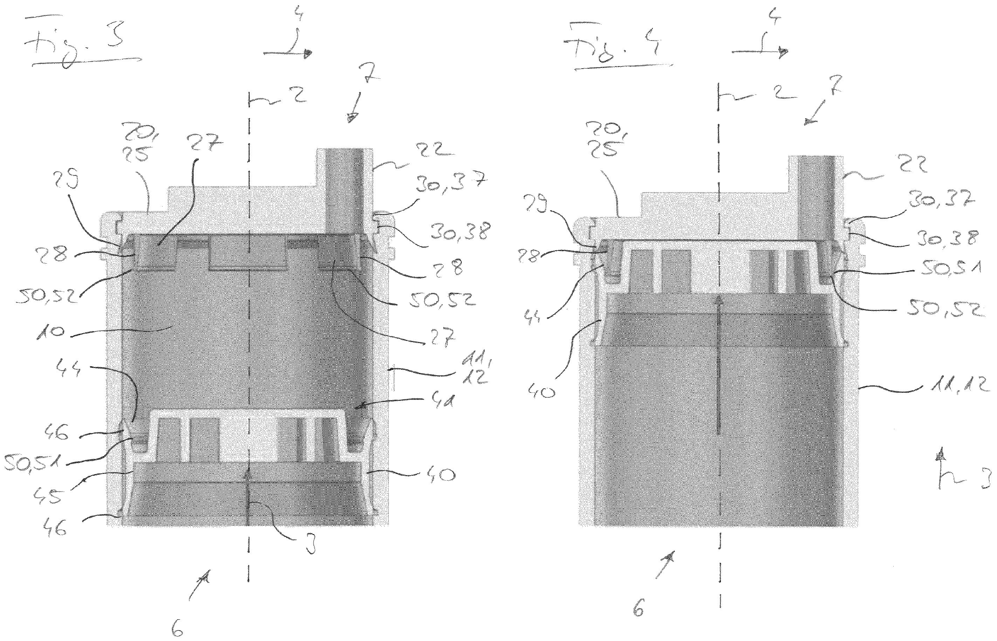

Fig. 3 depicts a cut view of the first cartridge 1 with the piston 40 located towards the rear end 6. The chamber 10 for the material is bounded by the piston 40 towards the rear end 6, by the head part 20 towards the dispensing end 7 and by the chamber wall 12 in the transverse direction 4.

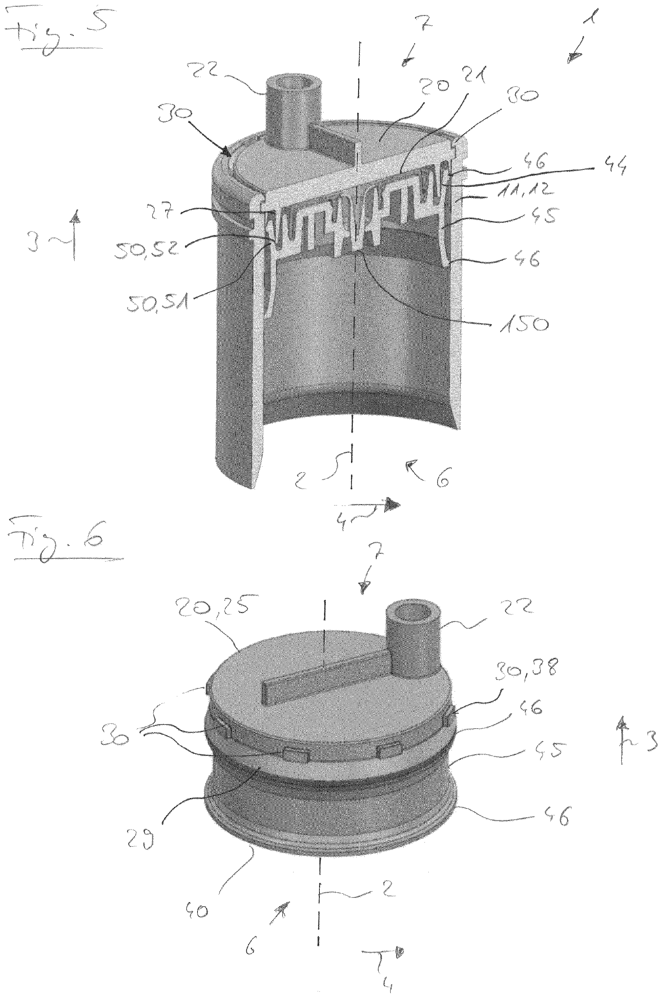

Fig. 4 depicts a cut side view of the first cartridge 1 and Fig. 5 depicts a perspective cut view of the first cartridge 1 with the piston 40 located at an end position at the dispensing end 7. Furthermore, Fig. 6 depicts a perspective view of the piston 40 locked to the head part 20. The first and second part 51, 52 of the interlock 50 are engaged with each other to lock the piston 40 to the head part 20. Furthermore, the front sealing rim 46 of the piston 40 rests against the seal 29 between the head part 20 and the chamber wall 16.

With the piston 40 at the end position, the residuals of the material that remain within the chamber 10 are enclosed in a chamber part 18 in between the piston 40 and the head part 20. The chamber part 18 is closed in the transverse direction 4, exemplarily by the seal 29 and the sealing rim 46 resting against each other.

By detaching the head part 20 from the chamber wall 12, the piston 40 may be removed through the opening 13 from the chamber and or the residuals may be removed from the chamber wall 12.

With the first cartridge 1, the piston 40 engages with and connects to the head part 20, for example via the interlock described before, as soon as the piston 40 reaches the head part 20 after complete dispensing of the material. The entire residual dead volume of material is then enclosed in the chamber part 18 between the piston 40 and the head part 20. The piston 40 and the head part 20 form a package that can be removed from the chamber wall 12 towards the dispensing end 6 by the user and disposed of, leaving the chamber wall 12 clean and intact. For the user, this variant represents a simple and effortless method of decontamination. The surrounding area also remains clean, as the contamination is enclosed in the cavity between the head part 20 and the piston 40.

With the first cartridge 1, the chamber wall 12 forms a cartridge tube and the head part 20 forms a separate cartridge base. The head part 20 is inserted into the chamber wall 12 from above and locked in place with the releasable connection 30. The sealing geometry of the seal 29 between the head part 20 to the chamber wall 12 is the same as that of the sealing rim 46 of the piston 40. The material may then be filled into the chamber 10 and the piston 40 may be inserted into the chamber wall 12 from the rear end 6. Once the material has been completely dispensed, the piston 40 hits the head part 20, causing barbs forming the second parts 52 of the interlock 50 to snap into the piston 40 to connect the head part 20 and the piston 40. The sealing rim 46 on the piston 40 and the seal 29 at the head part 20 now also touch, stripping the entire inner surface of the chamber wall 12. Once locked in place, the user can remove the first cartridge 1 from a dispenser, release the connection 30 and remove the resulting package comprising the head part 20 and the piston 40 towards the dispensing end 7. The entire dead volume is now enclosed between the head part 20 and the piston 40 and the cartridge wall 12 is clean. The cartridge wall 12 can then be recycled and the head part 20, together with the piston 40, disposed of.

As an alternative to the bayonet lock shown in Fig. 1, the connection 30 may also be configured as a snap-fit connection. One of the first parts 37 and the second parts 38, such as the second parts 38 formed at the head part 20, then may be configured as flexible arms that are configured to engage with corresponding recesses formed by the other one of the first parts 37 and the second parts 38, such as the first parts 37 formed at the sidewall 11. With the snap-fit connection, the first parts 37 of the connection 30, which may form the recesses, may be located at an inner surface of the sidewall 11. The second parts 38 of the connection 30, which may form the flexible arms, may protrude from the head part 20 into the chamber 10 and engage the first parts 37 at the inner surface of the sidewall 11.

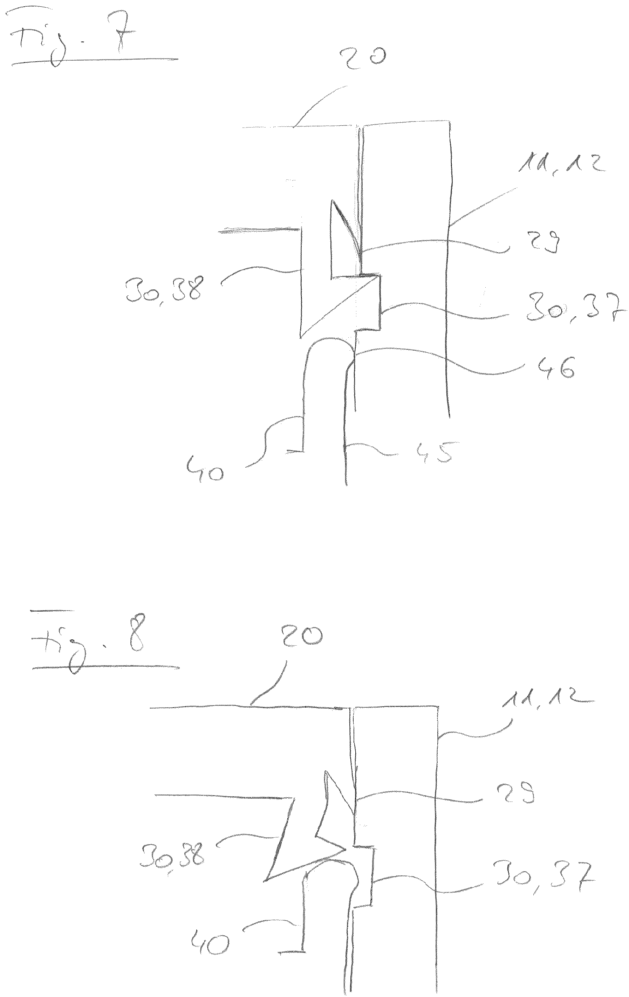

Fig. 7 depicts a cut side view through the connection 30 between the head part 20 and the chamber wall 12, wherein the connection 30 is configured as the snap-fit connection with the first parts 37 formed by recesses at an inner surface of the sidewall 11 and the second parts 38 formed by flexible arms engaging with the recesses.

The cartridge 1 may comprise a detachment mechanism that is configured to be mechanically actuated by the piston 40 when the piston 40 is located at the dispensing end 7. Actuation of the detachment mechanism thereby detaches the head part 20 from the chamber wall 12. The detachment mechanism may comprise at least one element that is mechanically actuated by the piston 40 when it reaches the dispensing end 7.

As it is shown in Fig. 8 for the connection 30 configured as the snap-fit connection of Fig. 7, the mechanical element that is actuated by the piston 40 may be formed by one of the flexible arms forming the second parts 38 of the connection 30. The piston 40 is configured to release the flexible arms from the recesses forming the first parts 37 of the connection 30 when the piston 40 reaches the dispensing end 7. For example, the piston 40 may directly engage with the flexible arms to release the flexible arms, as shown in Fig. 8.

For example, the flexible arms may be located within the chamber 10 and may be configured to be engaged by the piston 40 when the piston 40 reaches the dispensing end 7. Engagement of the piston 40 with the flexible arms may release the snap-fit connection and may detach the head part 20 from the sidewall 11 forming the chamber wall 12. With other embodiments, the piston 40 may release the flexible arms via at least one intermediate member.

With other embodiments, the piston 40 may also be configured to be removed through the opening 13 without locking it to the head part 20. These embodiments may lack the interlock 50. The head part 20 may first be removed from the chamber wall 12 and the piston 40 may subsequently be moved through the opening 13, for example by pushing it from the rear end 6.

With the first cartridge 1, the head part 20 forms a front closure of the chamber 10 and directly contacts the material. With other embodiments, the front closure of the chamber 10 may also be configured separate from the head part 20 so that the head part 20 does not directly contact the material.

For example, the front closure may be formed by scraper that is a separate part and that is inserted into the outer body from the rear end 6. As soon as the piston 40 reaches the front closure after complete dispensing of the material, it engages with the front closure, for example via an interlock as described before, and connects to it. The entire chamber part 18 forming a residual dead volume of the chamber 10 is now enclosed between the piston 40 and the front closure. The piston 40 and the front closure form a package that can be pushed out of the outer body towards the rear end 6 by the user and disposed of, leaving the outer body including the head part 20 clean and intact. For the user, this variant represents a simple and effortless method of decontamination. The surrounding area also remains clean, as the contamination is enclosed in the cavity between the front closure and the piston 40.

With the first cartridge 1, the chamber wall 12 forms a part of the solid outer body of the cartridge 1, namely the sidewall 11 of the outer body.

With other embodiments, the chamber wall 12 may be formed separately from the outer body of the cartridge 1, in particular separately from the sidewall 11.

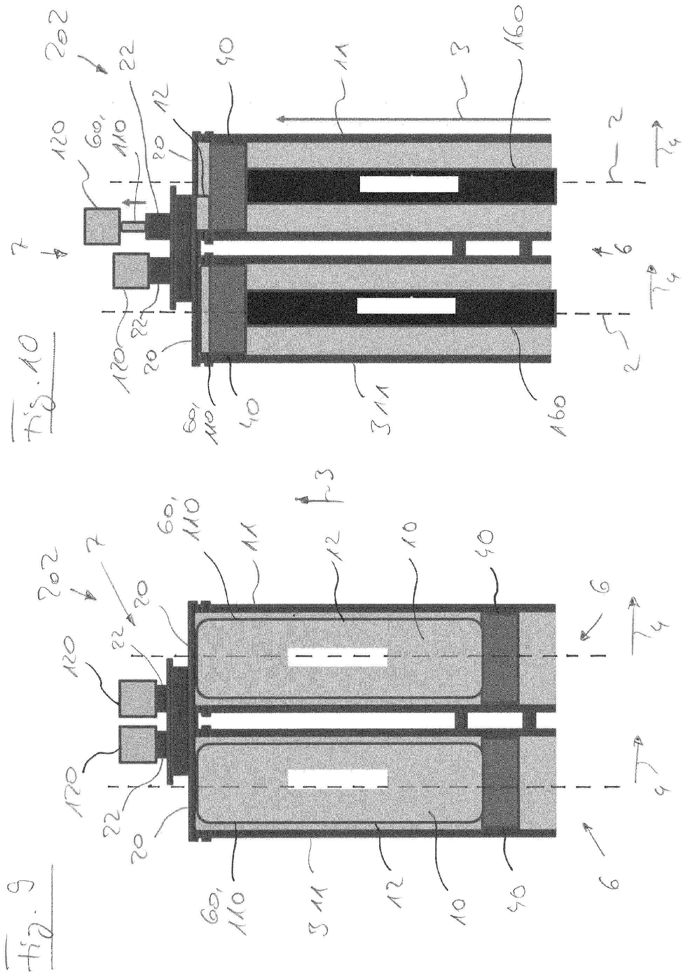

Fig. 9 and Fig. 10 depicts cut side views of a second cartridge 202 according to the present disclosure. As far as no differences are disclosed in the description and the Figures, the second cartridge 202 is configured as it is disclosed for the first cartridge 1 and vice versa.

As can be seen from Fig. 9, the chamber 10 of the second cartridge 1 is formed by an intermediate part 60 that is configured as a film bag 110. The chamber wall 12 forms part of the film bag 110 and is separate from the sidewall 11 of the outer body. Likewise, the front closure of the chamber 10 is formed by the film bag 110 and the front closure is separate from the head part 20. The head part 20 is materially uniform with the sidewall 11 so that the head part 20 and the sidewall 11 form a single piece of material. The film bag 110 is inserted into the outer body and rests against the head part 20 and the sidewall 11. The piston 40 rests against a rear end of the film bag 110.

The film bag 110 extends through the outlet 22 of the head part 20 and is fixed at the outlet 22 by a fastener 120.

The second cartridge 1 is configured as a two-component cartridge that comprises a further sidewall 311 that is separate from and located next to the sidewall 11. As far as no differences are disclosed, the further sidewall 311 is configured as it is disclosed for the sidewall 11. The head part 20 comprises a further outlet 22 that connects to the interior of the further sidewall 311. Within the further sidewall 311, a further film bag 110 is located as an intermediate member 60 that comprises a further component of the material to be dispensed. As far as no differences are disclosed, the further film bag 110 is configured as it is disclosed for the film bag 110. In particular, the further film bag 110 is fixed to the further outlet 22 by a further fastener 120.

As it is shown in Fig. 10, the piston 40 is moved in a longitudinal direction 3 parallel to the longitudinal axis 2 towards the dispensing end 7 for dispensing the material. The film bag 110 thereby is collapsed in between the head part 20 and the piston 40. When the material is completely dispensed and the piston 40 is located at the end position at the dispensing end 7, the film bag 110 is removed through the outlet 22 by disconnecting the fastener 120 and dragging the film bag 110 with the fastener 120 through the outlet 22.

The concept underlying the second cartridge 202 is to ensure that the material never comes into contact with the outer body of the cartridge 1. The material is filled into a sausage-like foil sleeve formed by the film bag 110 and the film bag 110 is then inserted into the outer body of the second cartridge 202, as shown in Fig. 9. An outlet of the film bag 110 located at a fixing portion 112 is then guided through the outlet 22 of the head part 20 and fixed in place there. Once the material has been dispensed, the empty film bag 110 is pulled out through the outlet 22 of the second cartridge 202 and disposed of. The second cartridge 202 can now be either reused or recycled, as it remains completely intact. The film bag 110 provides decontamination without contaminating the environment, as the user does not need to apply much force.

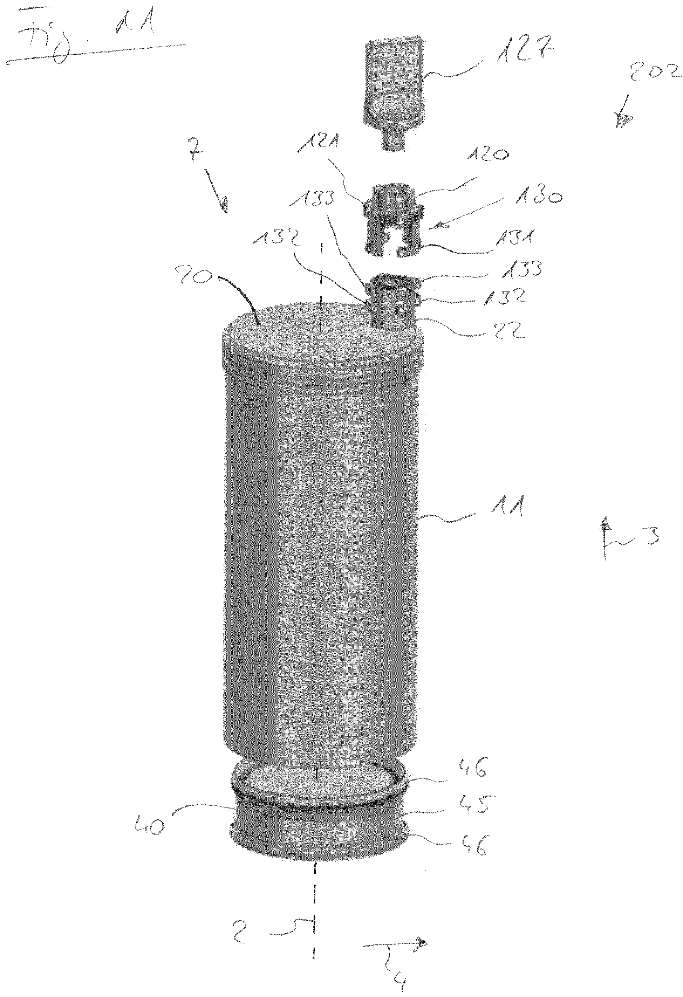

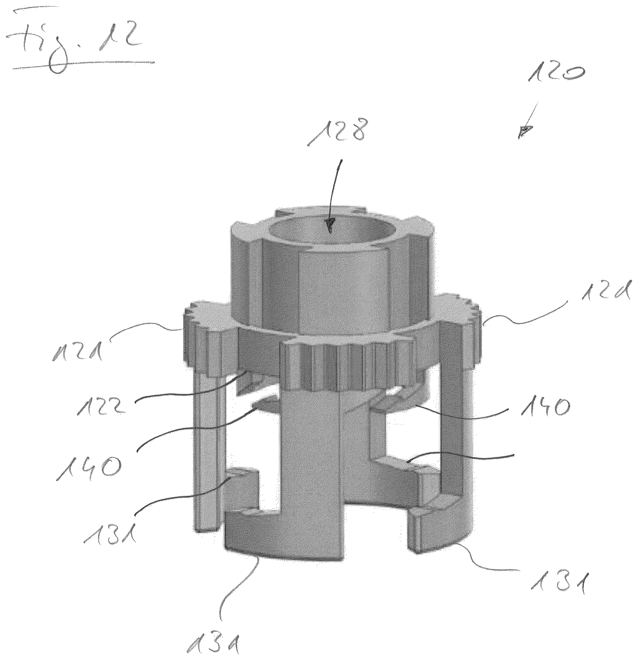

Fig. 11 depicts perspective exploded view of the second cartridge 202 and Fig. 12 depicts a detailed perspective view of the fastener 120.

The second cartridge 202 has a releasable connection 130 between the fastener 120 and the outlet 22. The connection 130 is configured as a bayonet lock. The connection 130 comprises a connection part 131 formed at the fastener 120 and a connection counterpart 132 formed at the outlet 22. Furthermore, the connection 130 comprises a further connection counterpart 133 that is also located at the outlet 22. The further connection counterpart 133 is spaced apart from the connection counterpart 132 and located towards the dispensing end 7 from the connection counterpart 132.

The fastener 120 further comprises a grip 121 that is accessible to the user of the second cartridge 202 and that is located at an outer surface of the fastener 120. The grip 121 has a roughened surface. The user may grip the fastener 120 at the grip 121 and rotate the fastener 120 with respect to the outlet 22 to open and close the connection 130.

The fastener 120 also comprises a catch 140. The catch 140 is configured as a barb that protrudes from the first surface 122 towards the rear end 6.

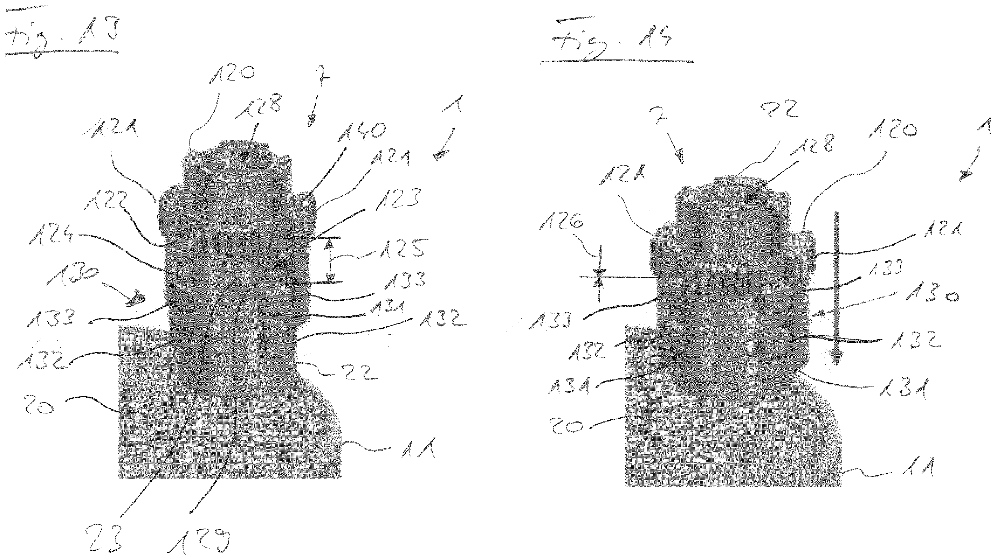

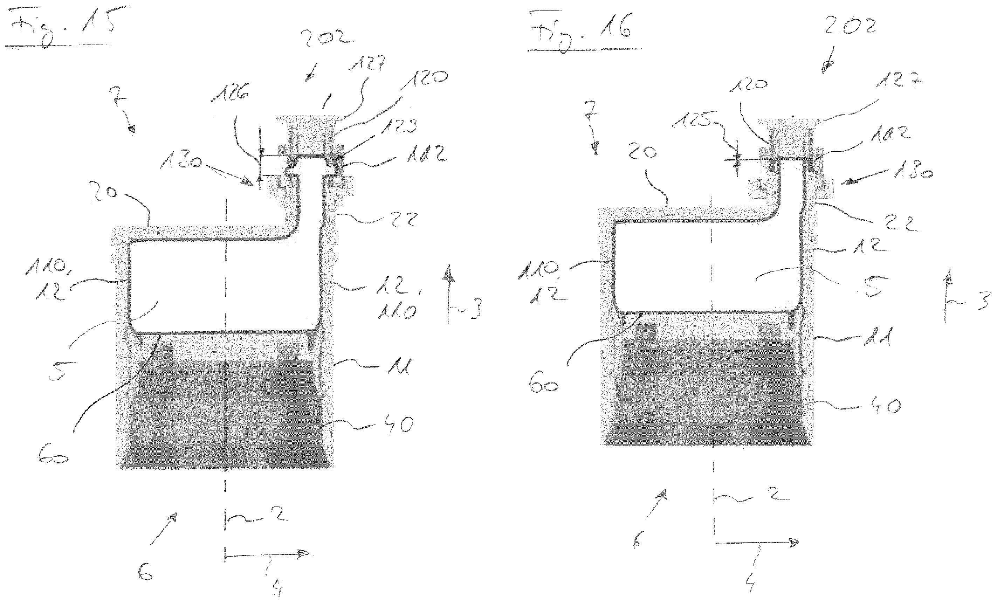

Fig. 13 depicts a perspective view and Fig. 15 depicts a cut side view of the second cartridge 202 with the fastener 120 located at an assembling position. Fig. 14 depicts a perspective view and Fig. 16 depicts a cut side view of the second cartridge 202 with the fastener 120 located at a fixing position.

In the assembling position of Fig. 13 and Fig. 15, the connection part 131 of the fastener 120 engages with the further connection counterpart 133 and is located in a space in between the further connection counterpart 133 and the connection counterpart 132. The further connection counterpart 133 thereby engages with the connection part 131 and prevents movement of the fastener 120 towards the dispensing end 7 and the connection counterpart 132 engages with the connection part 131 and prevents movement of the fastener 120 towards the rear end 6.

With the fastener 120 in the assembling position shown in Fig. 13 and Fig. 15, a first surface 122 of the fastener 120 has an assembling distance 125 from a second surface 124 of the outlet 22 and a space 123 is formed in between the first surface 122 and the second surface 124. The first surface 122 of the fastener 120 faces towards the outlet 22 and is perpendicular to the longitudinal axis 2. The second surface 124 faces towards the fastener 120 and is also perpendicular to the longitudinal axis 2.

With the fastener 120 in the fixing position shown in Fig. 14 and Fig. 16, the connection part 131 of the fastener 120 engages with the connection counterpart 133 but not with the further connection counterpart 133. The first surface 122 of the fastener 120 has a fixing distance 125 from a second surface 124 of the outlet 22, whereby the fixing distance 125 is essentially zero, such as zero.

The fastener 120 also comprises a catch 140. The catch 140 is configured as a barb that protrudes from the first surface 122. With the shown embodiment, the fastener 120 comprises a multitude of the catches 140 that are distributed circumferentially around first surface 122.

The fastener 120 has an outlet passage 128 that is centered around a main passage 23 of the outlet 22 and allows the material to pass through the fastener 120.

In a first step during assembly of the second cartridge 202, the fastener 120 is placed on the outlet 22 of the second cartridge 202 and locked in the assembling position shown in Fig. 13 and Fig. 15. This forms the space 123 between the first surface 122 of the second surface 124, wherein the space 123 is also formed between an edge of the outlet 22 at the second surface 124 and an edge of the outlet passage 128 at the first surface 122. The edge at the second surface 124 has the assembling distance 125 from the edge at the first surface 122.

A sealing plug 127 is inserted into the outlet passage 128 of the fastener 120 so that the outlet passage 128 is closed.

In a next step, the material is filled into the film bag 11 and the film bag 110 is inserted into the sidewall 11 from the rear end 6. The piston 40 then is inserted into the sidewall 11 and slightly pressurized. As shown in Fig. 15, this squeezes a fixing portion 112 of the film bag 110 into the outlet 22 of the cartridge 202. The fixing portion 112 bulges out between the edge of the outlet 22 at the second surface 124 and the edge of the fastener 120 at the first surface 122 and into the space 123.

The fastener 120 is then released from its assembling position, pressed down and locked in the fixing position. As shown in Fig. 16, the edge at the first surface 122 of the fastener 120 presses the previously bulged fixing portion 112 against the edge of the second surface 124 of the outlet 22, thus sealing it. In addition, the catches 140 pierce into the film bag 110 and hook into it. The catches 140 are thereby received within a depression 129 in the second surface 124. The second cartridge 202 then is in an assembled state.

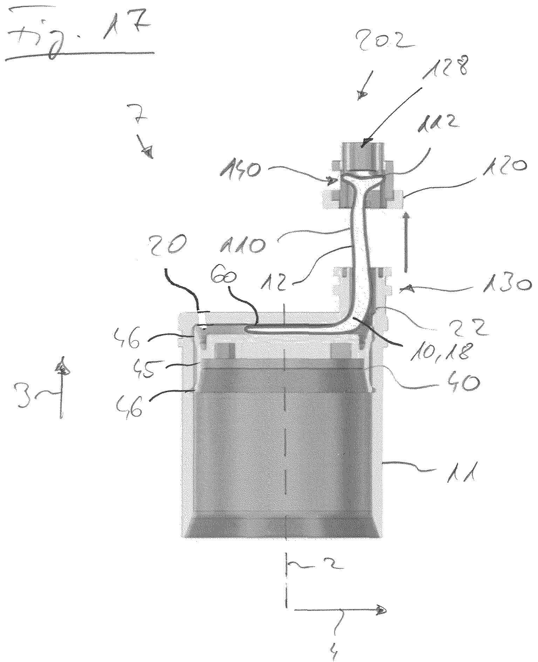

The material then is dispensed from the chamber 10. Once the material has been completely dispensed, the piston 40 is located at the end position at the dispensing end, as shown in Fig. 17. The fastener 120 then is released by opening the connection 130 and removed from the outlet 22. The catches 140 thereby ensure that the film bag 110 is removed at the same time through the outlet 22 and can be disposed of.

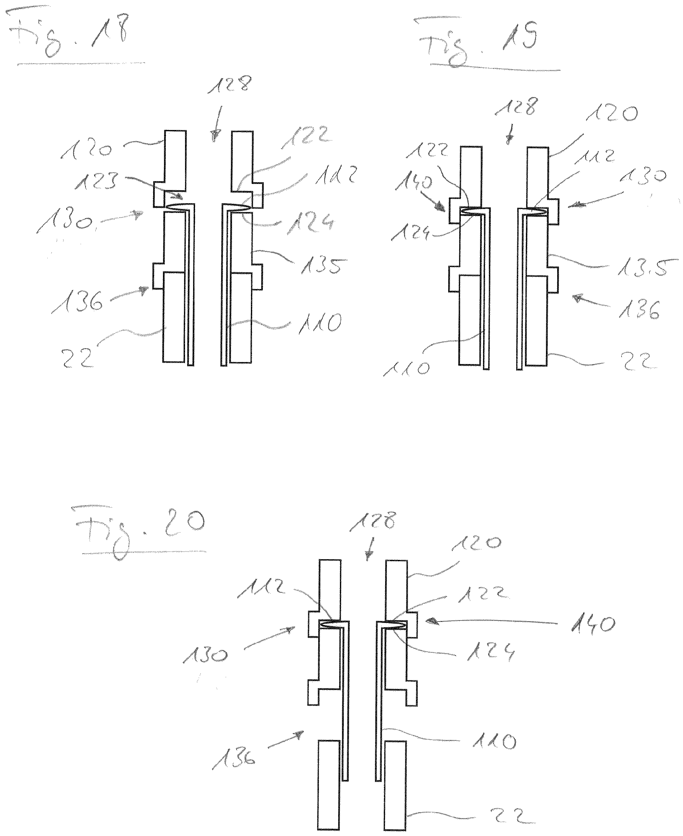

Fig. 18 depicts a cut side view of the outlet 22 of the second cartridge 202 with an intermediate member 135 attached to the outlet 22 and an alternative embodiment of the fastener 120 located at an assembly position. As far as no differences are disclosed in the description and the Figures, the alternative embodiment of the fastener 120 is configured as the foregoing embodiment of the fastener 120 shown, inter alia, in Fig. 12.

With the alternative embodiment of the fastener 120, the connection 130 is formed between the fastener 120 and the intermediate member 135. The connection 130 thereby is configured as shown in Fig. 12 and allows to position the fastener 120 in the assembling position with respect to the intermediate member 135 and in the fixing position with respect to the intermediate member 135.

The intermediate member 135 is fixed by a releasable intermediate connection 136 to the outlet 22. For example, the intermediate connection 136 may be configured as a bayonet lock.

The first surface 122 is formed at the fastener 120, as also disclosed in connection with the fastener 120 shown in Fig. 12. Furthermore, the second surface 124 for fixing the fixing portion 112 of the film bag 110 is located at the intermediate member 135. The functioning of the first surface 122 and the second surface 124 is the same as disclosed in connection with the fastener 120 shown in Fig. 12.

With the embodiment of the fastener 120 shown in Fig. 18, the catch 140 for dragging the film bag 110 out of the outlet 22 is formed by the first surface 122 and the second surface 124. The first surface 122 and the second surface 124 are thereby configured to drag the film bag 110 out of the outlet 22 by pinching it in the space 123 in between the first and second surface 122, 124.

As shown in Fig. 18, the second cartridge 202 is first provided with the intermediate member 135 fixed to the outlet 22 and the fastener 120 positioned in the assembling position at the intermediate member 135 so that the first surface 122 has the assembling distance 125 from the second surface 124. The film bag 110 with the fixing portion 112 then is inserted into the space 123 as it has been described in connection with Fig. 15 and Fig. 16. The fastener 120 then is moved from the assembling position into the fixing position shown in Fig. 19 so that the first surface 122 has the fixing distance 126 from the second surface 124 and the fixing portion 112 of the film bag 110 is pinched in between the first surface 122 and the second surface 124. The second cartridge 202 then is in the assembled state and the material is dispensed from the chamber 10.

As shown in Fig. 20, the intermediate connection 136 is configured to be released after the dispensing of the material, while the connection 130 remains closed. The fastener 120 then may be removed together with the intermediate member 135 from the outlet 22 while the fixing portion 112 of the film bag 110 still is pinched in between the first and second surfaces 122, 124.

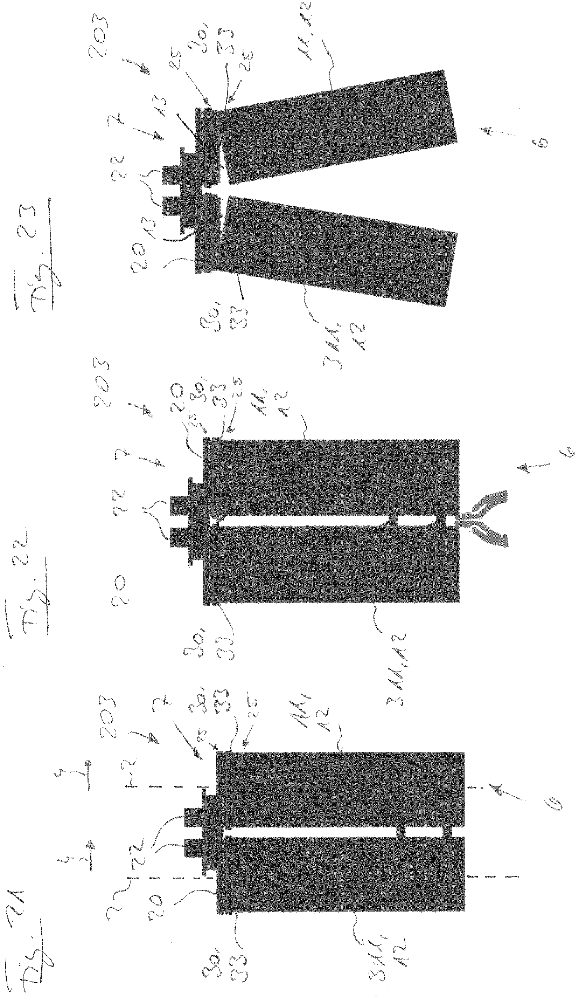

Fig. 21, Fig. 22, and Fig. 23 depict side views of a third cartridge 203 according to the present disclosure. As far as no differences are disclosed, the third cartridge 203 is configured as it is disclosed for the first cartridge 1 and the second cartridge 202 and vice versa.

Like the second cartridge 202, the third cartridge 203 is configured as a two-component cartridge having the sidewall 11 and the further sidewall 311. The sidewalls 11, 311 each form a chamber wall 12. Each chamber wall 12 is connected to the head part 20 by a connection 30 that comprises a breaking section 33 that is configured to break for detachment of the portion 25 of the head part 20 from the chamber walls 12. The portion 25 of the head part 20 thereby comprises the entire head part 20. The breaking sections 33 are located at an outer surface of the chamber walls 12 near the dispensing end 7.

The breaking section 33 is structurally weaker than surrounding portions 25 of the chamber wall 12 that surround the breaking section 33 towards the dispensing end 7 and the rear end 6. The surrounding portions 25 thereby are located adjacent to the breaking section 33 towards the dispensing end 7 and the rear end 6.

As shown in Fig. 22 and Fig. 23 the third cartridge 203 is configured for a user grasping the chamber wall 12 and breaking it off the head part 20, whereby the chamber wall 20 detaches from the head part 20 along the breaking section 33.

With the third cartridge 203, a dead volume that cannot be expelled by the piston 40 is located in the head part 20 of the third cartridge 203 at the head surface 21 of the outer body and the chamber 10. By breaking off the contaminated area, the contaminated portion comprising the head part 20 can be disposed of and the clean part formed by the chamber wall 12 can be recycled as the recycling portion.

For enabling braking, there is the breaking sections 33 at each of the sidewalls 11, 311 of the outer body, which breaking sections 33 are designed to cause the break. The user grasps the two sidewalls 11, 311 at the rear ends 6 and breaks them apart using pure muscle power. The breaking sections 33 are positioned so that the contaminated pistons 40 remain stuck in the head part 20 to be disposed of and enclose the residuals. The breaking sections 33 intended for this concept are easy to implement using standard tools and can be incorporated into the outer body. Manual breaking by the user is also likely to be a low-threshold step towards decontamination, as it is quick and does not require any additional tools.

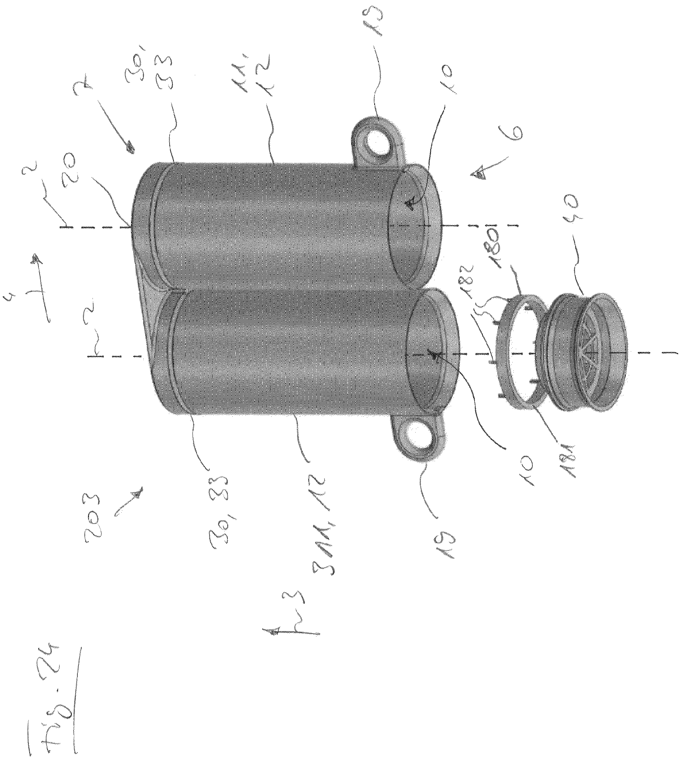

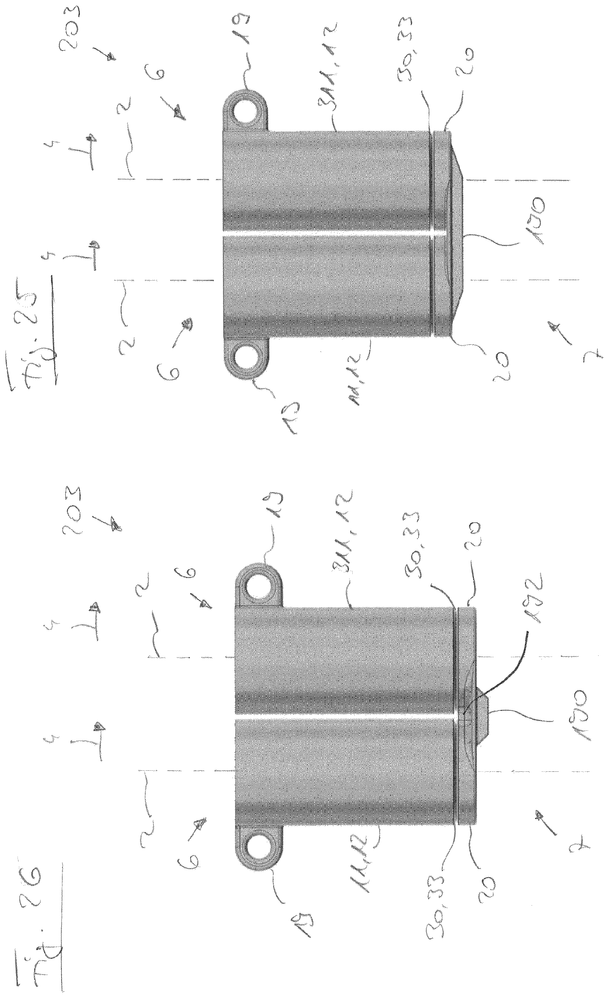

Fig. 24 and Fig. 25 depict the third cartridge 203 with the breaking sections 33 in the sidewalls 11, 311. The outer body forms a main element with the sidewalls 11, 311 and a connecting element on the dispensing end 7 of the sidewalls 11, 311, which connecting element is formed by the head part 20. The head part 20 is configured to connect the two sidewalls 11, 311.

The third cartridge 203 further comprises inlays 180 that are inserted into the sidewalls 311 from the rear and 6 and cover the area of the breaking sections 33 from the inside. This allows the pressure that occurs during dispensing of the material to be diverted away from the breaking sections 33, relieving the pressure on the breaking sections 33. The inlays 180 comprise spacers 182 that extend from the inlays 180 towards the dispensing end 7 and a piston stop 181 that is located at a rear side of the inlays 180 facing towards the rear end 6. The spacers 182 are distributed circumferentially around the longitudinal axis 2. The piston stops 181 are formed by rear surfaces of the inlays 180. The spacers 182 at the front side of the inlays 180 ensure that a correct distance between the head part 20 and the inlay 180 is automatically maintained and that the inlay 180 is located at the breaking section 33. Shortly before completion if dispensing the material, the pistons 40 push the inlays 180 towards the dispensing end 7, causing the spacers 182 to give way. This exposes the predetermined breaking sections 33, allowing the sidewalls 11, 311 to be broken off and the pistons 40 to remain stuck in the disposable head part 20.

A distance between the breaking sections 33 and the head part 20 thereby is large enough to accommodate at least the sealing rim 46 of the piston 40. Additionally or alternatively, the distance between the breaking section 33 and the head part 20 is configured for the pistons 40 to remain stuck in sections of the sidewalls 11, 311 located in between the breaking sections 33 and the head part 20.

A length of the spacers 182 along the longitudinal axis 2 corresponds to the distance between the head part 20 and the breaking sections 33. The spacers 182 rest against the head surface 21 of the head part 20 and thereby place the inlays 180 at the breaking sections 33.

As can be seen from Fig. 24, each of the chamber walls 11, 311 may comprise a handle that is molded to an outer surface of the chamber walls 11, 311. The handles 19 are configured as eyes. The handles 19 are configured to be gripped by a user to tear the chamber walls 11, 311 apart from the head part 20.

As can be seen from Fig. 25, the head part 20 comprises a reinforcement element 190 that reinforces the head part 20 and prevents the head part 20 from breaking when the chamber walls 11, 311 are teared from the head part 20. The reinforcement element 190 is configured as a reinforcing rib that extends perpendicular to the longitudinal axis 2 in the transverse direction 4 and connects the outlets 22. To further reinforce the head part 20, the head part 20 may comprise a further reinforcement element 192 that connects the chamber walls 11, 311 and is located in a space in between the chamber walls 11, 311, see Fig. 26.

The chamber walls 12 that are detached from the head part 20 upon opening the connections 30 formed by the breaking sections 33 are formed by the portions of the sidewalls 11, 311 that are located towards the rear end 6 from the connections 30.

With the third cartridge 203, the chamber walls 12 that remain after opening the breaking sections 33 form the recycling portion and the head part 20 with the pistons 40 form the contaminated portion.

With the third cartridge 203, the piston 40 is removed through the opening 13 of the chamber wall 12 upon detachment of the head part 20 from the chamber wall 12.

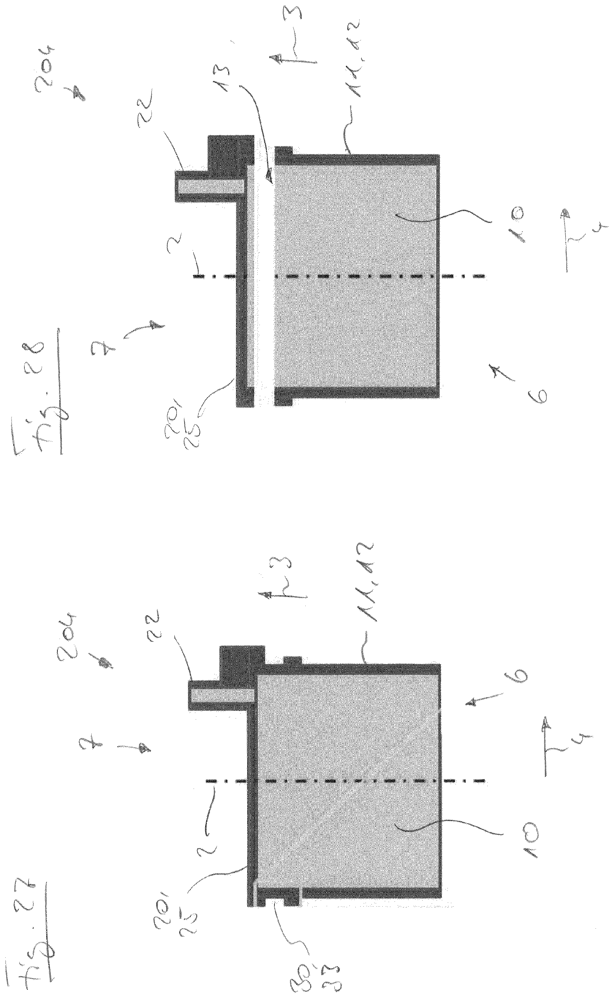

Fig. 27 to Fig. 30 depicts a fourth cartridge 204 according to the present disclosure. As far as no differences are disclosed in the description and the Figures, the fourth cartridge 204 is configured as it is disclosed for the third cartridge 203 and vice versa.

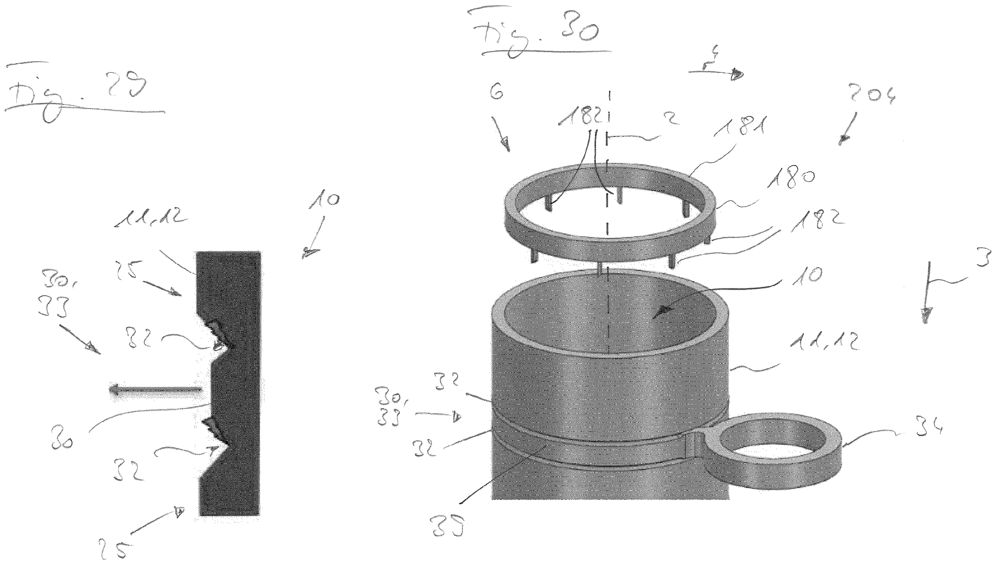

With the fourth cartridge 204, the breaking section 33 comprises two breaking lines 32 that are spaced apart from each other along the longitudinal axis 2 and that circumferentially run around the chamber wall 11, as shown in Fig. 29. In between the breaking lines 32, a band 39 is located that forms a portion of the chamber wall 12 that may be detached along the breaking lines 32. The breaking lines 32 each form a region of the chamber wall 12 that is structurally weaker than the surrounding portions 25 of the chamber wall 12 and than the band 29. Like with the breaking sections 33 of the third cartridge 203, the breaking lines 32 are thinner than the surrounding portions 25 of the chamber wall 12. Furthermore, the breaking lines 32 are thinner than the band 29.

As shown in Fig. 30, a handle 34 is formed at the band 39 that allows the user to pull on the band 39 for removing it from the chamber wall 12. This detaches the chamber wall 12 from the head part 20. Furthermore, the fourth cartridge 204 also comprises the inlays 180 that are configured to cover the breaking sections 33, in particular the breaking lines 32 from the inside of the chamber 10.

With the fourth cartridge 204, the two breaking lines 32 run parallel to each other around the sidewall 11, exemplarily spaced just a few millimetres apart. A second portion of the sidewall 11 in between the breaking lines 32 forms the band 29 that runs circumferentially around the longitudinal axis 2. The handle 34, exemplarily formed as an eyelet, on this band 29 is configured to be pulled by the user. Pulling on the handle 34 causes the two breaking lines 32 to tear and the band 29 can be pulled off all the way around the sidewall 11.

Like with the third cartridge 203, an uncontaminated part of the fourth cartridge 204 forming the recycling portion is separated from the contaminated portion, see Fig. 28. The contaminated portion comprises the head part 20 and the piston 40 stuck in the head part 20 and the recycling portion comprises the chamber wall 12.

The fourth cartridge 204 offers similar advantages than the third cartridge 203, whereby less force is required from the user for detaching the head part 20.

Like the third cartridge 203, the fourth cartridge 204 also has the inlays 180 that keep pressure away from the braking sections 33 and the breaking lines 32. As shown in Fig. 29, two adjacent notches or recesses form the breaking lines 32, so that the width of the inlays 180 along the longitudinal axis 2 are adapted to cover both breaking lines 32. The thicker strips forming the bands 29 in between the breaking lines 32 is configured to be torn off by the user, thus dividing the sidewall 11 into a clean part formed by the chamber wall 12, which is located towards the rear end 6 from the breaking section 33, and a contaminated part, which is located towards the dispensing end 7 from the breaking section 33.

The eyelets forming the handles 34 are moulded directly onto the bands 39 at one point so that they can be torn off. The transitions between the handles 39 and the bands 39 is designed so that as much force as possible can be applied, making it easier for the plastic to tear.

With the fourth cartridge 204, the contaminated portion comprises the head part 20 and the piston 40 and the recycling portion comprises the chamber wall 12.

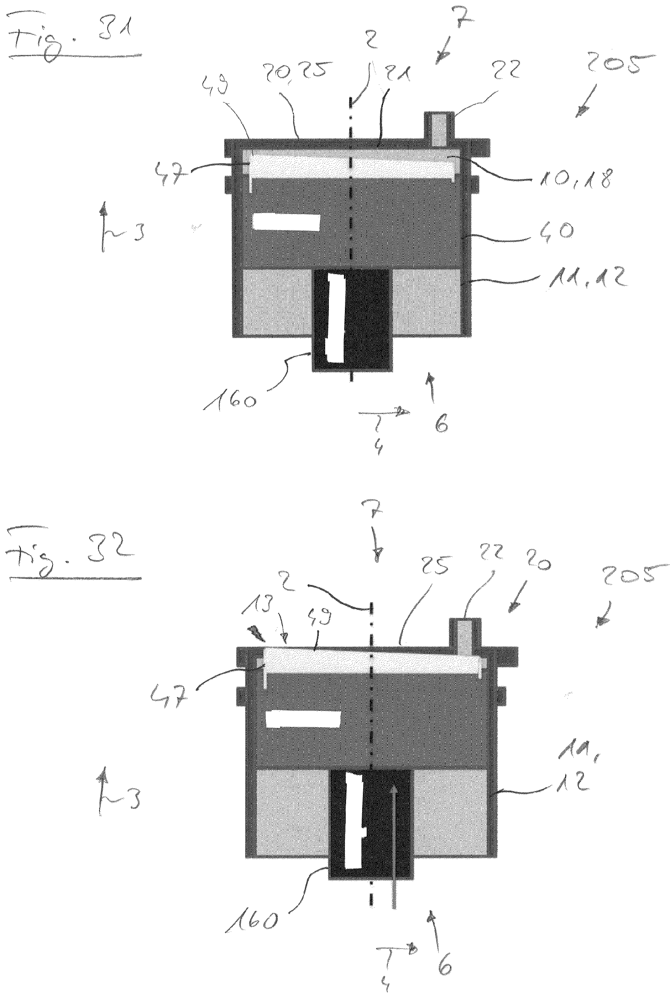

Fig. 31 to Fig. 35 depicts a fifth cartridge 205 according to the present disclosure. As far as no differences are disclosed in the description and the Figures, the fifth cartridge 205 is configured as it is disclosed for the third cartridge 203 and vice versa.

To facilitate detachment of the portion 25 of the head part 20 from the chamber wall 12, the force necessary for detachment is applied via the piston 40, for example by a piston rod 160 of a dispenser actuating the piston 40 during dispensing of the material.

The first cartridge 205 comprises a cutter 47 that is connected to the piston 40 and that is moved together with the piston 40 along the longitudinal axis 2 during dispensing. The cutter 47 is configured as a hollow sleeve that rests against an inside surface of the chamber wall 12 and that has a cutting edge 49 at its front surface facing towards the dispensing end 7. The cutting edge 49 runs circumferentially around the longitudinal axis 2.

As can be seen from Fig. 31 and Fig. 32, the piston 40 is actuated by the piston rod 160 during dispensing of the material and pushed in the longitudinal direction 3 towards the dispensing end 7.

Upon the piston 40 reaching the dispensing end 7, the cutter 47 cuts through the head part 20 and separates the inner portion 25 of the head part 20 comprising the outlet 22 from an outer remainder of the head part 20 and from the chamber wall 12. The portion 25 forms a central portion of the head part 20.

The cutter 47 cutting through the head part 20 keeps the residuals of the material enclosed between the piston 40 and the cut-out portion 25 of the head part 20, and the remaining parts of the fifth cartridge 205, comprising the chamber wall 12, form a recycling portion that can be recycled. This provides for simple and low-force handling by the user. The environment also remains largely clean, as the residuals are enclosed between the portion 25 of the head part 20 and the piston 40.

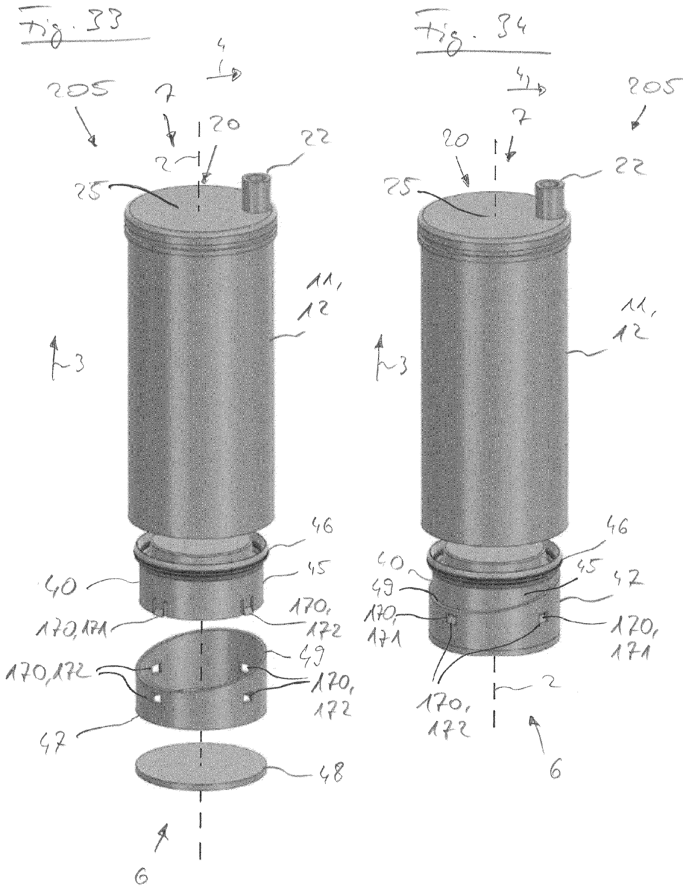

As can be seen from Fig. 33 and Fig. 34, the fifth cartridge 205 comprises a piston assembly that comprises the piston 40, the cutter 47 formed by the round blade and a pressure plate formed by a bottom plate 48. A main component of the fifth cartridge 205 is the outer body with the sidewall 11 forming the chamber wall 12 and with the head part 20 forming a flat end face with the eccentric outlet 22. The round blade formed by the cutter 47 is pushed onto the piston 40 from behind during assembly and locks into moulded lugs 171 formed at the piston 40 with openings 172 formed by cut-outs in the cutter 47.

The pressure from the dispenser 160 is absorbed from behind via the bottom plate 48 and transferred to the cutter 47 resting against the bottom plate 48, which is located towards the rear end 6 from the cutter 47. This transfers the force via the lugs 171 to the piston 40, enabling the material to be dispensed by moving the piston assembly towards the dispensing end 7.

The lugs 171 and the openings 172 form a releasable lock 170 between the piston 40 and the cutter 47. The releasable lock 170 provided by the lugs 171 at the openings 172 allows the cutter 47 to stay towards the rear end 6 behind the sealing rim 46 of the piston 40 during dispensing so that the sealing rim 46 separates the chamber 10 with the material from the cutter 47.

With other embodiments, the cutter 47 may also be fixed to a front surface of the piston 40. The connection between the cutter 47 and the piston 40 then may be irreleasable.

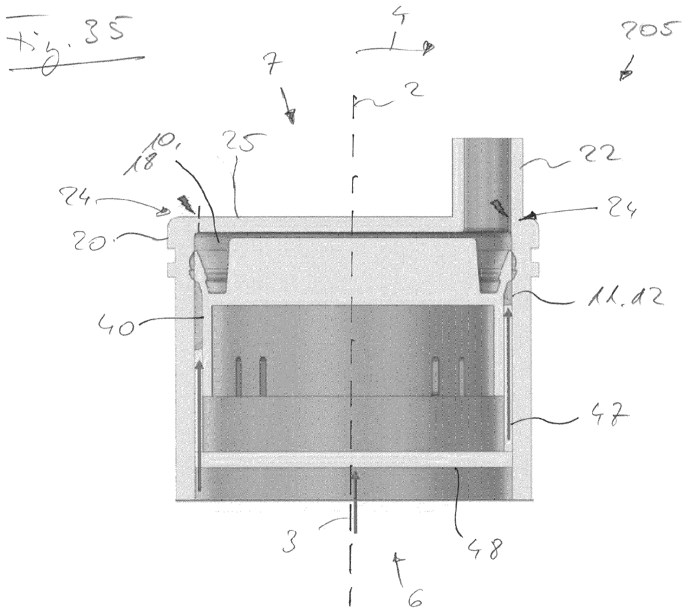

Once the material has been completely dispensed, the piston 40 is stopped at the head surface 21 of the head part 20, see Fig. 35, and the pressure on the lugs 171 increases until they shear off. This causes the cutter 47 to slide past the piston 40, for example past the sealing rim 46 of the piston 40, and to cut through the head surface 21. Once the cutter 47 has completely cut through the head part 20, the resulting package comprising the portion 25 of the head part 20, which is enclosed within the cutter 47, and the piston 40 with the cutter 47 can be removed from the chamber 10 towards the dispensing end 7, whereby the piston 40 is removed from the chamber wall 12 through the opening 13 in the chamber wall 12. The dead volume comprising the residuals of the material is enclosed between the cut-out portion 25 of the head part 20 and the piston 40 itself and cannot contaminate the environment.

With the fifth cartridge 205, the recycling portion comprises the chamber wall 12 and the contaminated portion comprises the head part 20 with the piston 40.

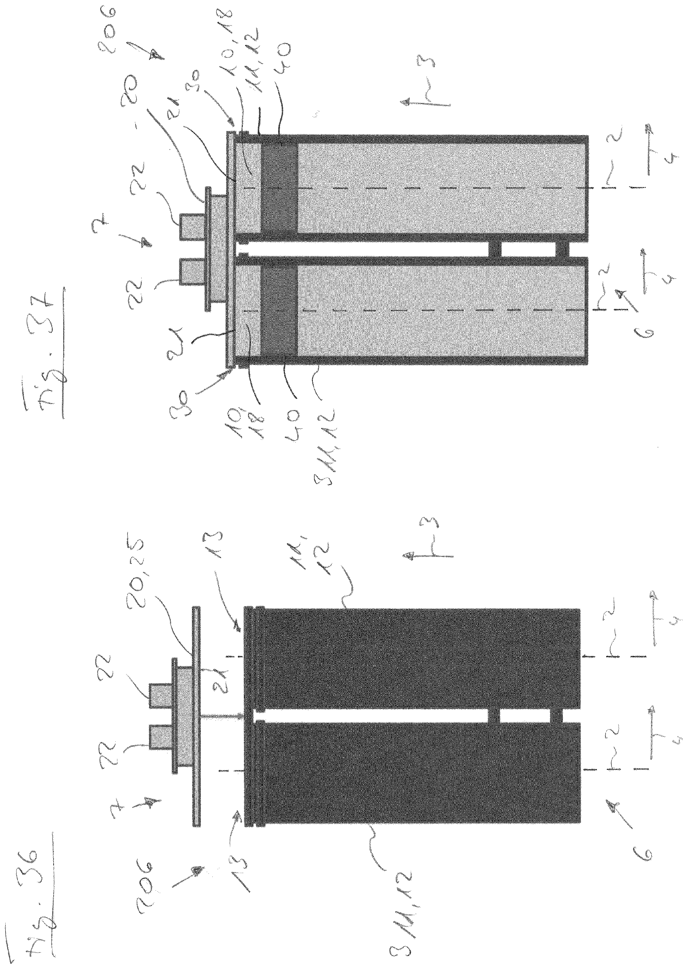

Fig. 36 depicts a side view and Fig. 37 depicts a cut side view of a sixth cartridge 206 according to the present disclosure. As far as no differences are disclosed in the description and the Figures, the sixth cartridge 206 is configured as it is disclosed for the third cartridge 203 and vice versa.

The aim of the sixth cartridge 206 is to separate the contaminated portion and the clean recycling portion of the sixth cartridge 206 without requiring excessive force or damaging any components.

The head part 20 of the sixth cartridge 206 is configured as a separate element that is separate from the chamber walls 12 formed by the sidewalls 11, 311 of the outer body. The head part 20 forms an adapter that can be connected to the sidewalls 11, 311 via releasable connections 30, which are exemplarily configured as bayonet locks. A mixer may be connected to the outlets 22 of the head part 20 using a conventional interface. Once the material has been dispensed, the head part 20 can be removed from the sidewalls 11, 311 forming the chamber walls 12 by opening the releasable connection 30. The pistons 40 are then also pulled out of the chamber walls 12 through the openings 13 of the chambers 10 at the dispensing end 7 and disposed of together with the head part 20.

The sixth cartridge 206 provides for reduced effort by the user and the associated lower risk of contamination of the environment.

With the sixth cartridge 206, the recycling portion comprises the chamber walls 12 and the contaminated portion comprises the head part 20 with the pistons 40.

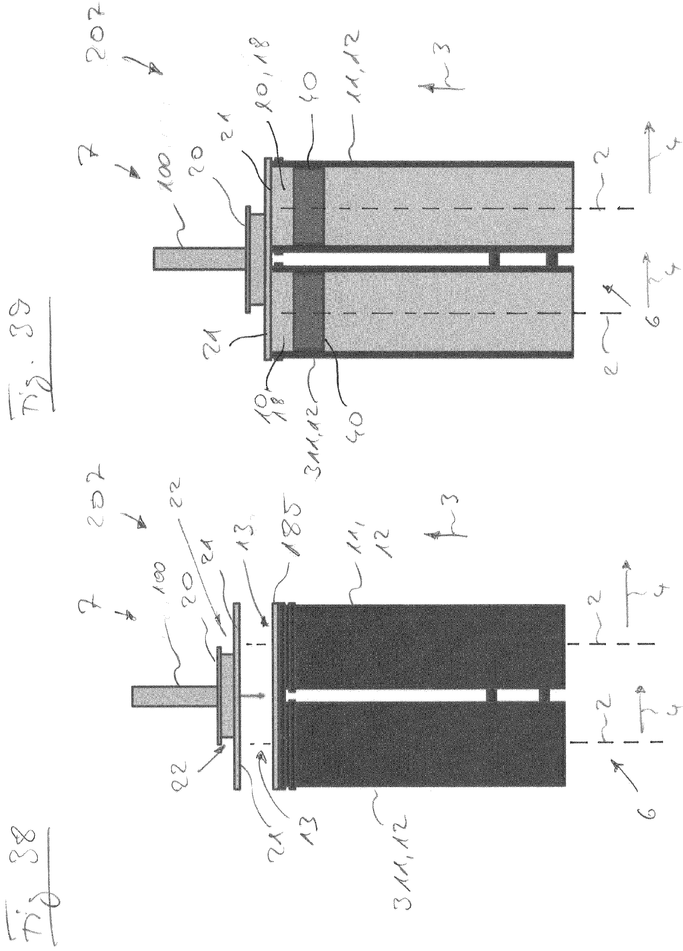

Fig. 38 depicts a side view and Fig. 39 depicts a cut side view of a seventh cartridge 207 according to the present disclosure. As far as no differences are disclosed in the description and the Figures, the seventh cartridge 207 is configured as it is disclosed for the sixth cartridge 206 and vice versa.

With the seventh cartridge 207, the head part 20 additionally comprises a mixer 100 located at the outlets 22 of the chambers 10. Each of the individual chambers 10 stores one component of the material to be dispensed. The mixer 100 receives the two components of the material from the outlets 22 and mixes them during passage towards the dispensing end 7.

With the seventh cartridge 207, the mixer 100 is integrated into the head part 20 that is formed as an adapter, like it is described for the sixth cartridge 206. If the entire material is dispensed in one go without changing the mixer 100, the amount of plastic used is reduced, as the detachable head part 20 is integrated into the mixer 100 that is a consumable in any case.

The seventh cartridge 207 may comprise a cover 185, as shown in Fig. 38, that closes the chambers 10 prior to attachment of the head part 20 to the mixer 100 and after detachment of the head part 20 from the mixer 100. The cover 185 enables to dispense multiple portions of the material at different times and to close the chambers 10 during intermediate storage.

With the seventh cartridge 207, the recycling portion comprises the chamber walls 12 and the contaminated portion comprises the head part 20 with the mixer 100 and the pistons 40.

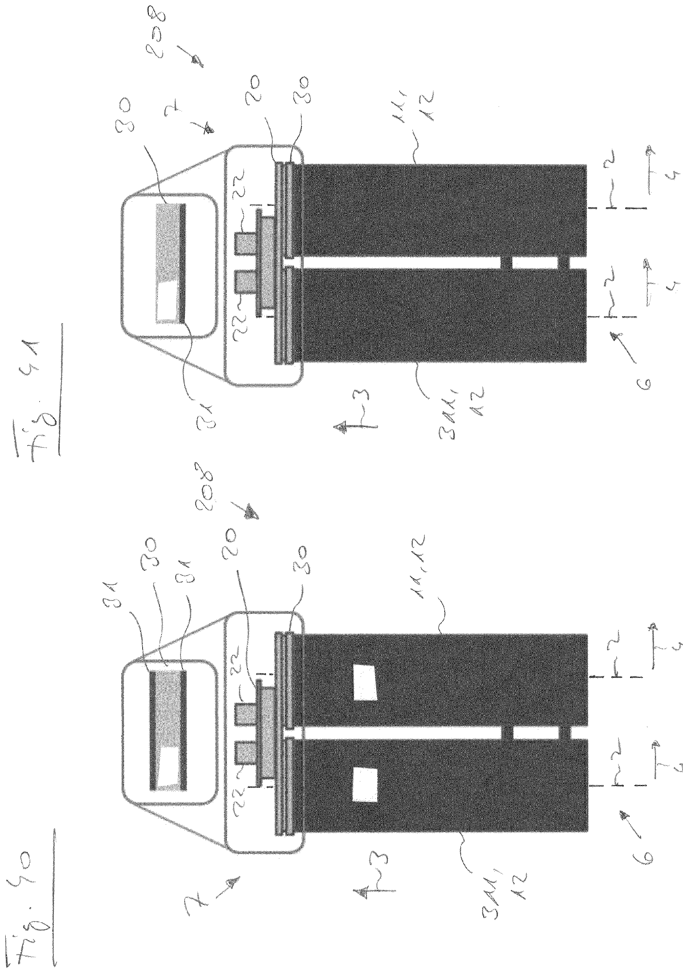

Fig. 40 depicts a side view and Fig. 41 depicts a cut side view of an eighth cartridge 208 according to the present disclosure. As far as no differences are disclosed in the description and the Figures, the eighth cartridge 208 is configured as it is disclosed for the sixth cartridge 206 and vice versa.

The eighth cartridge 208 allows to detach the head part 20 from the chamber wall 12 by dissolving the head part 20 in a solvent. The head part 20 is made from a dissolvable material dissolvable in the solvent and the chamber wall 12 formed by the sidewalls 11 is made from an insoluble material that is not dissolved in the solvent. The solvent may be water.

A protective cover 31 covers the head part 20. The protective cover 31 is insoluble in the solvent and protects the head part 20 from dissolving prior to emptying the eighth cartridge 208. The protective cover 31 is configured to be removed from the head part 20, for example it may be configured to be removed from the head part 20 by heating or burning the protective cover 31.

The eighth cartridge 208 allows to detach the front part 20 from the chamber wall 12 without the use of force. The sidewalls 11 forming the chamber walls 12, which form part of the recycling portion, are made from an insolvable material, such as plastic. The sidewalls 11 are molded to the removable head part 20 that is made from the dissolvable material. The protective coating 31 is applied both the an inside and an outside of the head part 20 to protect against moisture during storage. Once the user has dispensed the material, the protective coating 31 is removed with a flame and the entire eighth cartridge 208 is placed in a water bath. This completely dissolves the contaminated head part 20 and removes it within a few hours.

With alternative embodiments, the connection 30 between the chamber walls 12 and the head part 20 may be made from the dissolvable material. The connection 30 may circumferentially surround the sidewalls 11, 311 and separate the chamber walls 12 from the head part 20. Also in this case, the dissolvable material of the connections 30 may be covered by the protective cover 31 and the protective cover 31 may be removed prior to dissolving the connection 30 in the solvent to detach the head part 20 from the chamber walls 12.

With the eighth cartridge 208, the recycling portion comprises the chamber walls 12 and the contaminated portion comprises the head part 20 with the piston 40.

With the first to eighth cartridges 1, 202, 203, 204, 205, 206, 207, 208, the head part 20 is configured to detach from the chamber wall 12 to remove the residuals of the material to be dispensed from the chamber 10.

With alternative embodiments, the residuals may also be removed from the chamber 10 without detaching the head part 20 from the chamber wall 12.

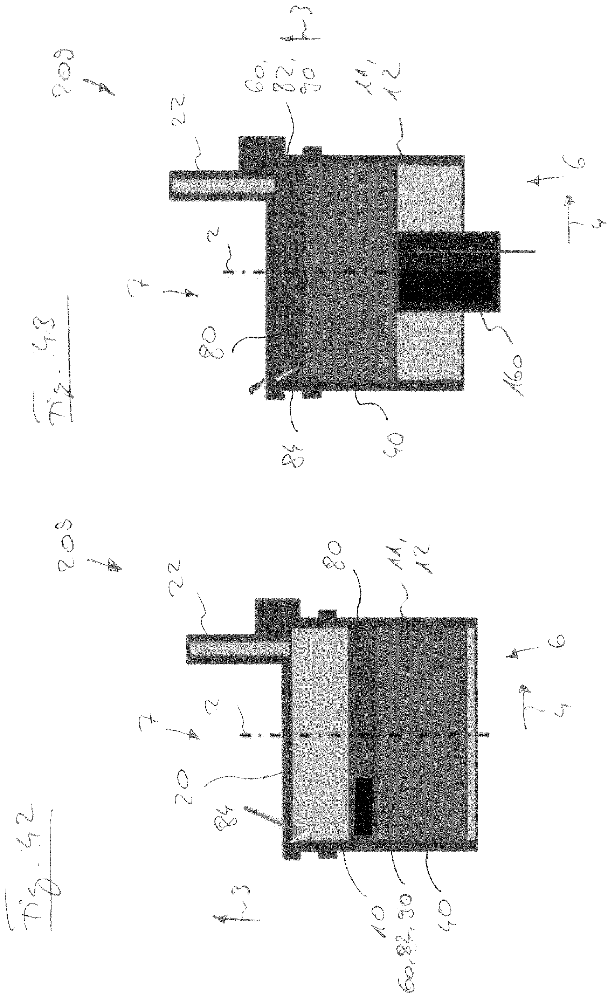

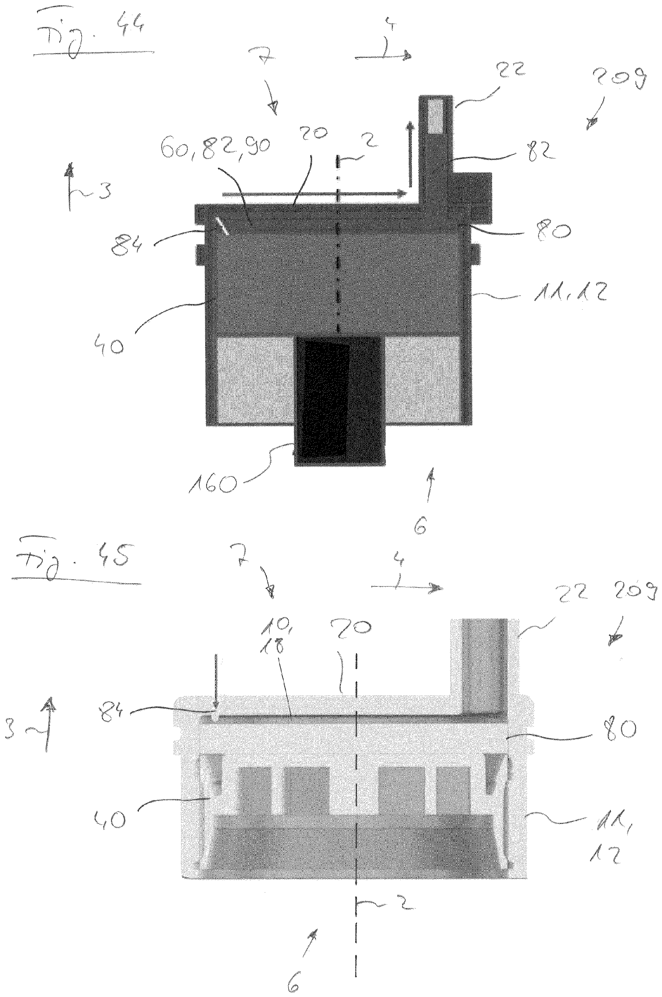

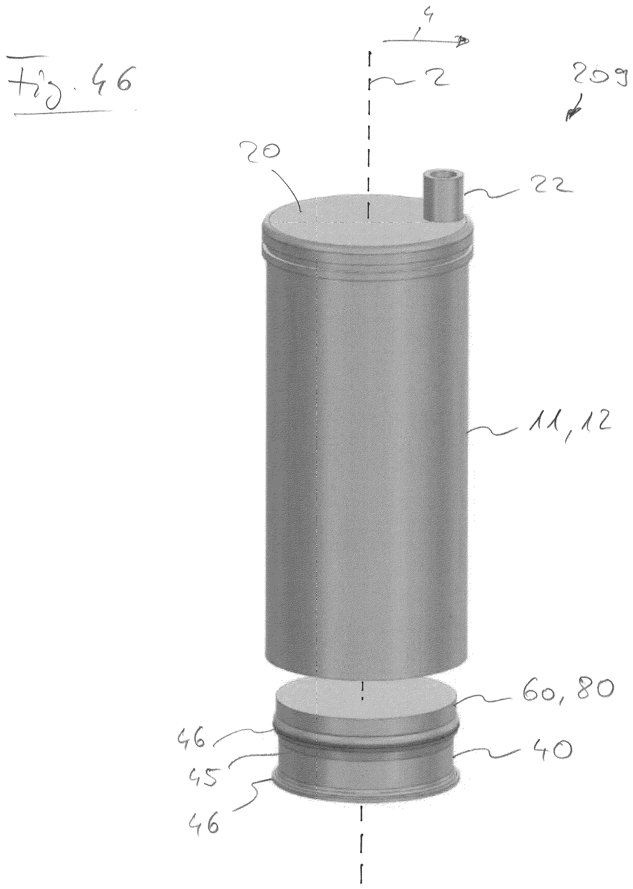

Fig. 42 to Fig. 46 depict a ninth cartridge 209 according to the present disclosure. As far as no differences are disclosed in the description and the Figures, the ninth cartridge 209 is configured as it is disclosed for the second cartridge 202 and vice versa.

With the ninth cartridge 209, the head part 20 and the chamber wall 12 are formed materially uniform as a single piece.

A flushing medium 82 is disposed within the chamber 10 as an intermediate part 60 in between the material to be dispensed and the piston 40. The flushing medium 82 is contained within a flushing medium bag 80.

The flushing medium 82 constitutes a cleaning medium 90. The flushing medium 82 is configured to flush the residuals of the material through the outlet 22 after the piston 40 has reached the dispensing end 7. Thereby, the residuals are removed from the chamber 10 via the outlet 22 and the chamber wall 12 and the head part 20 remain fixed to each other.

The flushing medium 82 is compatible with a recycling process for the chamber wall 12 and the head part 20. The flushing medium 82 is non-toxic and therefore harmless for the recycling process. The flushing medium 82 further does not react with the material to be dispensed.

With the ninth cartridge 209, the recycling portion comprises the complete assembly of the chamber wall 12 and the head part 20.

When the piston 40 reaches the dispensing end 7, the flushing medium bag 80 is pierced by an opener 84, which is exemplarily configured as a spike. By pressing the piston 40 further towards the dispensing end 7, the flushing medium 82 from the flushing medium bag 80 flushes the remaining residuals of the material out of the ninth cartridge 209 through the outlet 22. The remaining dead volume of the flushing medium 82 is not critical to the recycling process. With the ninth cartridge 209, the user cannot bypass the decontamination step. This means that every completely used ninth cartridge 209 is recyclable.

The flushing medium bag 80 is configured as a film bag. The flushing medium bag 80 is then placed on the material to be dispensed after filling the material into the chamber 10 and the flushing medium bag 80 and the flushing medium 82 separate the material from the piston 40.

The flushing medium bag 80 has a circumferential seal against the chamber wall 12 to prevent the material from being pressed behind the flushing medium bag 84 towards the rear end 6 during application. The circumferential seal may be configured like the sealing rim 46 of the piston 40. The circumferential seal prevents that an area between the flushing medium bag 80 and the piston 40 will become contaminated and cannot be flushed out. As shown in Fig. 42, the opener 84 formed by the spike is moulded directly onto the head part 20 at the front of the chamber 10. The opener 84 pierces the flushing medium bag 80 and ensures that the flushing medium 82 is released. The opener 84 may be positioned at a location furthest away from the outlet 22 in the transverse direction 4 so that the flushing medium 82 flushes the residuals of the material along the entire head surface 47.

With another variant of the ninth cartridge 209, the flushing medium 82 may be provided directly in between the material to be dispensed and the piston 40 without the flushing medium bag 80. After the material has been filled into the chamber 10, the flushing medium 82 is applied as a covering layer formed by a fluid with a higher viscosity than the material to be dispensed. Due to the differences in viscosity, the lower-viscosity material to be dispensed is pressurised by the flushing medium 82 and dispensed without mixing the two liquids formed by the material to be dispensed in the flushing medium 82. After complete dispensing of the material, the flushing process takes place automatically and the opener 47 is not required so that the ninth cartridge 209 may lack the opener 47.

With both variants of the ninth cartridge 209, the intermediate member 60 formed by the flushing medium 82 is configured to transport the residuals of the material towards the outlet 22 in the transverse direction 4.

With both variants of the ninth cartridge 209, a volume of the flushing medium 82 may be smaller than a dead volume of a mixer attachable to the ninth cartridge 209. This allows use of the ninth cartridge 209 until the piston 40 is located at an end stop at the dispensing end 7 without the flushing medium 82 being expelled from the mixer.

With the ninth cartridge 209, the recycling portion comprises the chamber wall 12 and the head part 20.

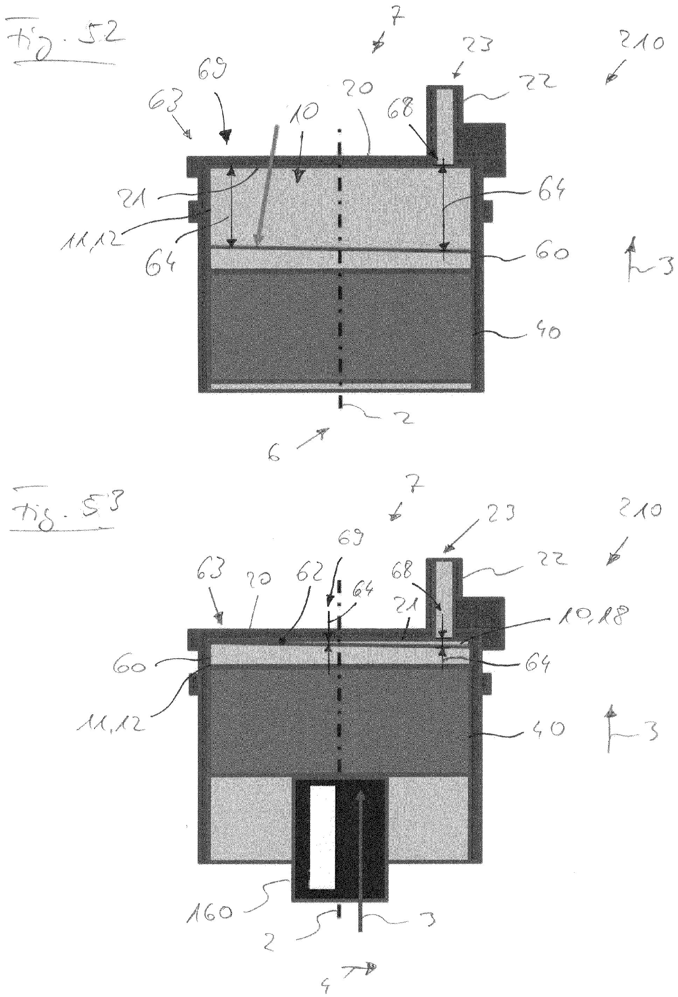

Fig. 52 to Fig. 50 depict a tenth cartridge 210 according to the present disclosure. As far as no differences are disclosed in the description and the Figures, the tenth cartridge 210 is configured as it is disclosed for the ninth cartridge 209 and vice versa.

With the tenth cartridge 210, an intermediate part 60 made of an elastic material is inserted between the piston 40 and the material to be dispensed. This intermediate part 60 has a concave front surface 61 forming an end surface facing towards the dispensing end 7. When the piston 40 is located at the dispensing end 7, the piston 40 presses the front surface 61 of the intermediate part 60 against the flat head surface 21 of the head part 20. Due to its concave shape, the intermediate part 60 first rests against the head surface 21 at the outer edge in the transverse direction 4 and, as the pressure increases, squeezes the residuals of the material towards the outlet 22, which is located at the center of the head surface 21 with the tenth cartridge 210.

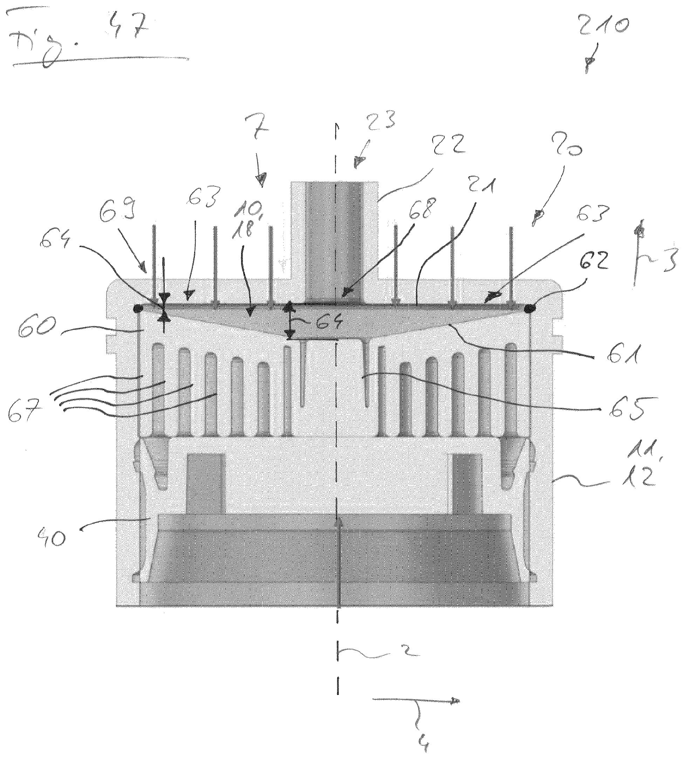

As can be seen from Fig. 47, before the intermediate part 60 touches the head surface 21, a distance 64 between the front surface 61 of the intermediate part 60 and the head surface 21 of the head part 20 is larger at a first radial position 68 located in line with the outlet 22 than at a second radial position 69 located away from the outlet 22 in the transverse direction 4. This causes the intermediate part 60 to first contact the head surface 21 at the second radial position 69.

The front surface 61 thereby contacts the head surface 21 along a contact line 62 that runs circumferentially around the longitudinal axis 2. The contact line 62 is located at the outer edge in an outer region 63 of the intermediate part 60 when the intermediate part 60 first touches the head surface 21. Upon further compression of the intermediate part 60 towards the head surface 21, the contact line 62 gradually moves towards the first radial position 68 in line with the outlet 22.

Therefore, the effect of the concave geometry of the front surface 61 of the intermediate part 60 only becomes apparent at the end of the dispensing process. As soon as the cushion formed by the intermediate part 60 presses against the head surface 21 of the chamber 10, the front surface 61 first presses against the outside of the head surface 21 and then towards the outlet 22 as the pressure increases. This gradual build-up of pressure forces the residuals of the material along the transverse direction 4 towards the outlet 22. The piston 20 and the intermediate part 60 then may be removed from the chamber 10 through the rear end 6.

To enable gradual pressure build-up from the circumferential edge to the center of the front surface 61 of the intermediate part 60, the intermediate part 60 comprises circumferential ribs 67 located at a rear side of the intermediate part 60, which ribs 67 extend towards the rear end 6. The ribs 67 form a corresponding lamellar structure. A spacing and width of the ribs 67 in the transverse direction 4 is adapted to provide for a larger deformation of the intermediate part 60 at the second location 69 that is furthest from the outlet 22 in the transverse direction 4. The ribs 67 and the intermediate part 60 may be produced with additive manufacturing.

With the tenth cartridge 210, the front surface 61 of the intermediate part 60 is configured as a concave surface and the head surface 21 of the head part 20 is configured as a flat surface. With other embodiments, also the front surface 61 of the intermediate part 60 may be configured as a flat surface and the head surface 21 may be configured as a concave surface. With yet another embodiment, both the front surface 61 and the head surface 21 may be configured as concave surfaces.

A pusher 65, which is exemplarily configured as a plug, is embedded in the front surface 61 of the intermediate part 60. The pusher 65 is in line with the outlet 22. The pusher 65 is designed to expel the residuals of the material accumulated at the outlet 22.

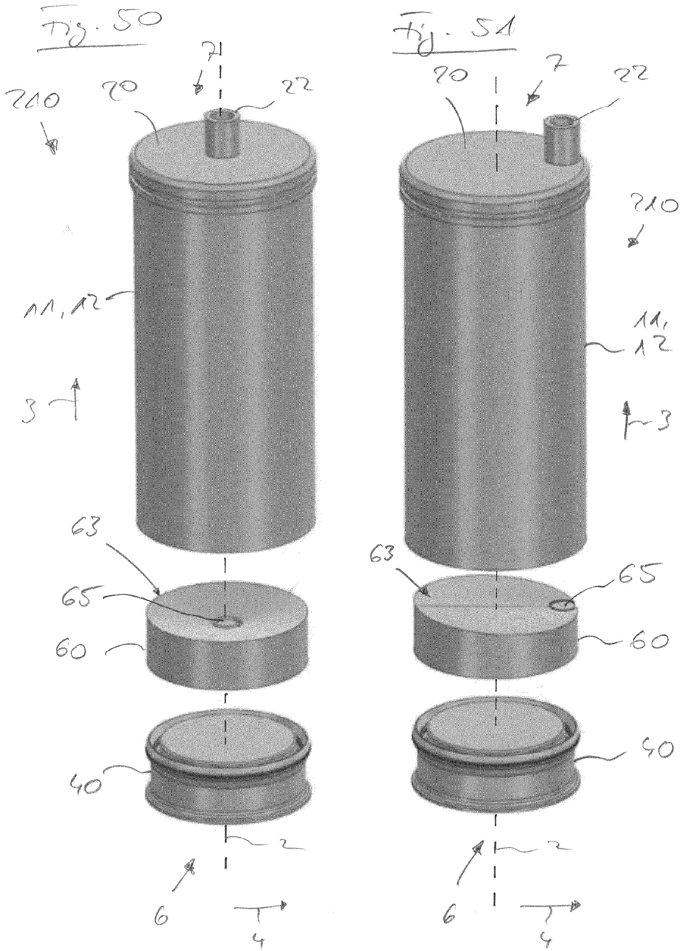

Fig. 51 to Fig. 54 depict an alternative variant of the tenth cartridge 210 according to the present disclosure. As far as no differences are disclosed in the description and the Figures, the alternative variant of the tenth cartridge 210 is configured as it is disclosed for the tenth cartridge 210 and vice versa.

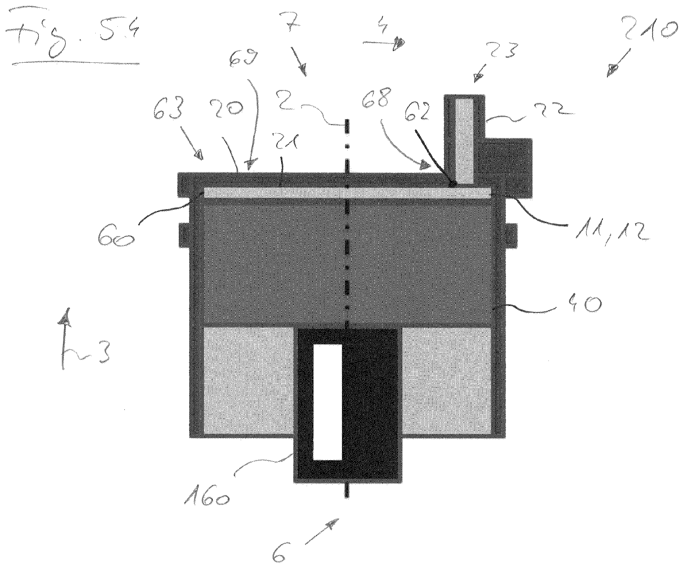

With the alternative variant of the tenth cartridge 210, the outlet 22 is located at an edge of the head part 20 in the transverse direction 4. Consequently, the front surface 61 is slanted from the outer region 63 located furthest away from the outlet 22 in the transverse direction 4 towards a region in line with the outlet 22. As it is shown in Fig. 52 and Fig. 53, this shape of the front surface 61 of the intermediate part 60 causes the distance 64 to be larger at the first radial position 68 than at the second radial position 69. With the alternative variant of the tenth cartridge 210, the contact line 62 radially moves from the outer region 63 towards the outlet 22 when the intermediate part 60 is pressed against the head surface 21 of the head part 20 until the contact line 62 is located directly at the outlet 22, as shown in Fig. 54.

With the tenth cartridge 210, the recycling portion comprises the chamber wall 12 and the head part 210 and the contaminated portion comprises the intermediate part 60.

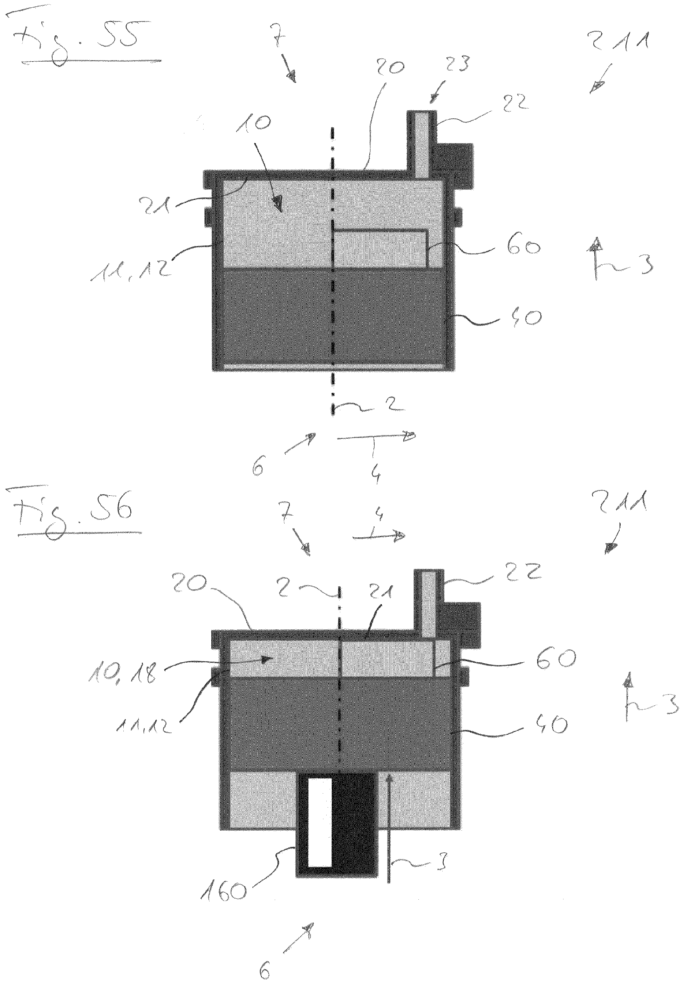

Fig. 55 to Fig. 58 depict an eleventh cartridge 211 according to the present disclosure. As far as no differences are disclosed in the description and the Figures, the eleventh cartridge 211 is configured as it is disclosed for the tenth cartridge 210 and vice versa.

With the eleventh cartridge 211, the intermediate part 60 is configured as a scraper. The scraper is located offset from the longitudinal axis 2 in between the longitudinal axis 2 and the chamber wall 12.

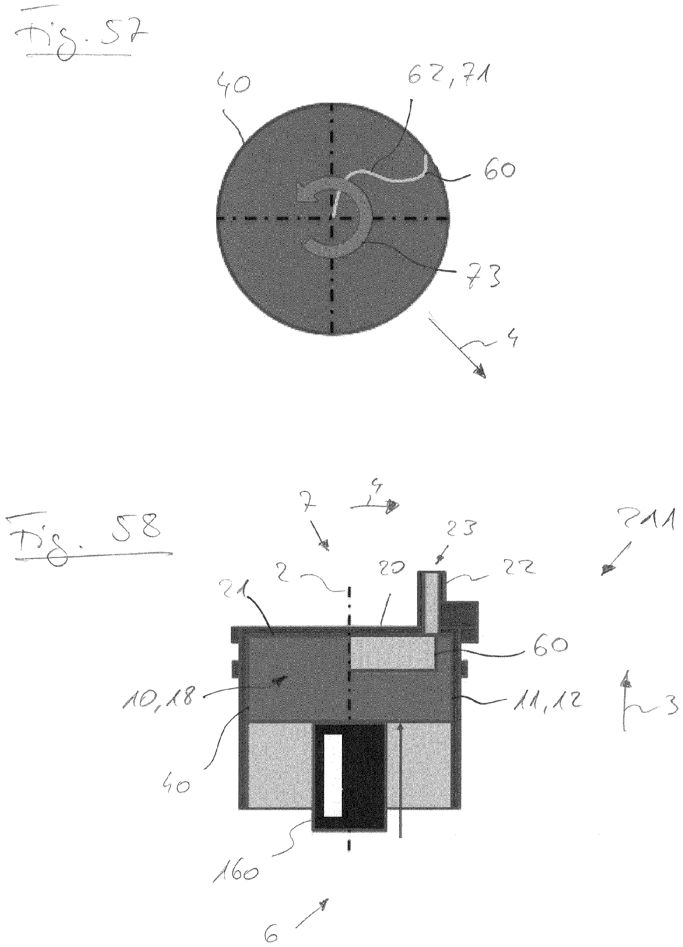

When the intermediate part 60 formed by the scraper comes into contact with the head surface 21 of the chamber 10, the piston 40 is rotated in a circumferential direction 73, see Fig. 57, scraping off the residuals of the material and transporting the residuals in the transverse direction 4 towards the outlet 22. A front edge 71 of the scraper 60 that faces into the circumferential direction 73 thereby contacts the head surface 21 of the head part 20 along the contact line 62. The contact line 62 is moved towards the outlet 22 upon rotation of the scraper. When the contact line 62 is located at the outlet 22 the residuals are removed with a final push of the piston 40 through the outlet 22 and out of the chamber 10, see Fig. 58.

With the eleventh cartridge 211, the recycling portion comprises the chamber wall 12 and the head part 20 and the contaminated portion comprises the piston 40 and the intermediate part 60 formed by the scraper.

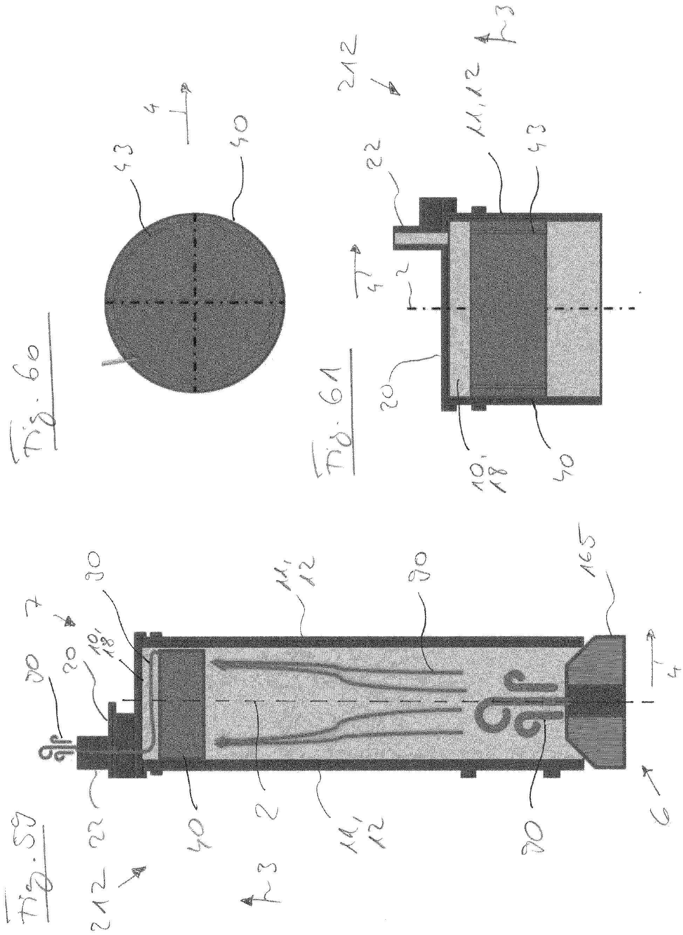

Fig. 59 to Fig. 61 depict a twelfth cartridge 212 according to the present disclosure. As far as no differences are disclosed in the description and the Figures, the twelfth cartridge 212 is configured as it is disclosed for the ninth cartridge 209 and vice versa.

The twelfth cartridge 212 lacks the intermediate part 60 of the ninth cartridge 209. Instead, the twelfth cartridge 212 is configured to allow for cleaning of the contaminated parts formed by the chamber wall 12 and the head part 20. Cleaning is performed by introducing a cleaning medium 90 into a chamber part 18 that holds the residuals of the material after the piston 40 has reached the dispensing end 7. The residuals are then removed by transporting them parallel to the transverse direction 4 towards the outlet 22 and the residuals are removed from the chamber 10 via the outlet 22.

The cleaning medium 90 is compressed air that is blown into the twelfth cartridge 212 from the rear end 6. The piston 40 comprises passages 43 that are circumferentially arranged around an outer circumference of the piston 40 in the transverse direction 4 and that allow for passage of the cleaning medium 90 through the piston 40 from the rear end 6 towards the dispensing end 7.

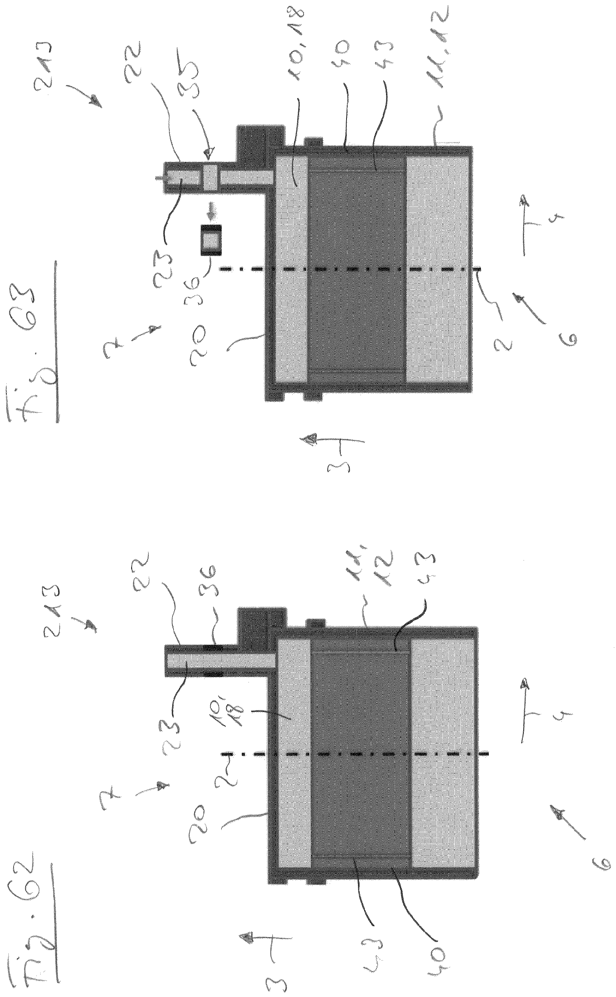

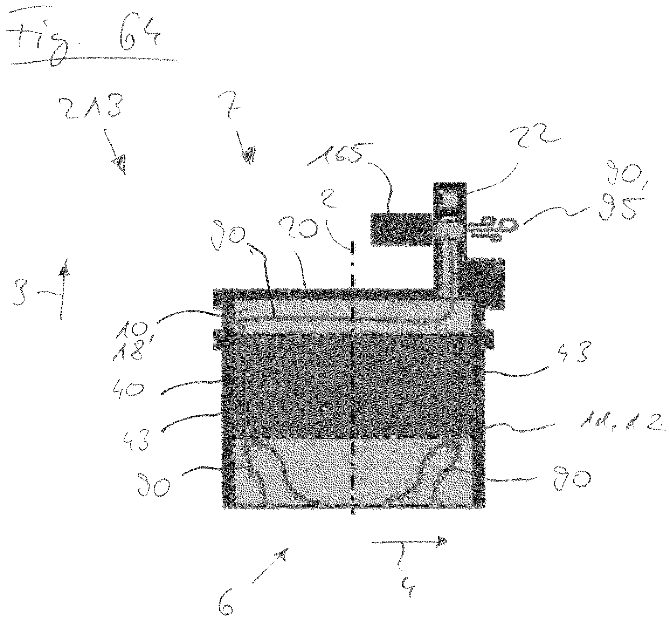

Fig. 62 to Fig. 64 depict a thirteenth cartridge 213 according to the present disclosure. As far as no differences are disclosed in the description and the Figures, the thirteenth cartridge 213 is configured as it is disclosed for the twelfth cartridge 212 and vice versa.

With the thirteenth cartridge 213, a flow of the cleaning medium 90 is created by drawing the cleaning medium 90 into the chamber 10 instead of pushing the cleaning medium 90 into the chamber, as it is the case with the twelfth cartridge 212. For this purpose, the outlet 22 comprises an auxiliary passage 35 that is closed by an insert 36 during dispensing of the material from the chamber 10. After dispensing, the insert 36 is removed from the auxiliary passage 35 towards the side and is inserted into the main passage 23 of the outlet 22 from the dispensing end 7 to block and seal the main passage 23 towards the dispensing end 7.

An auxiliary medium 95, exemplarily compressed air, is run through the auxiliary passage 35. This creates a vacuum in the outlet 22 and the chamber 10 due to the Bernoulli effect, which causes flow of the cleaning medium 90 from the rear end 6 through the passages 43 of the piston 40.

The twelfth cartridge 212 and the thirteenth cartridge 213 enable complete reuse or recycling of the cartridge. With the twelfth cartridge 212 and the thirteenth cartridge 213, the recycling portion comprises the chamber wall 12 and the head part 20. Furthermore, the twelfth cartridge 212 and the thirteenth cartridge 213 do not comprise any contaminated portion after removal of the residuals from the chamber 10 through the outlet 22.

Like the second cartridge 202, also the first cartridge 1, the third cartridge 203, the fourth cartridge 204, the fifth cartridge 205, the sixth cartridge 206, the seventh cartridge 207, and the eighth cartridge 208 may comprise a film bag that encloses the material at least in the transverse direction and separates the material from the sidewall 11 of the outer body. A portion of the film bag thereby forms the chamber wall 12 and the film bag at least partially surrounds the chamber 10.

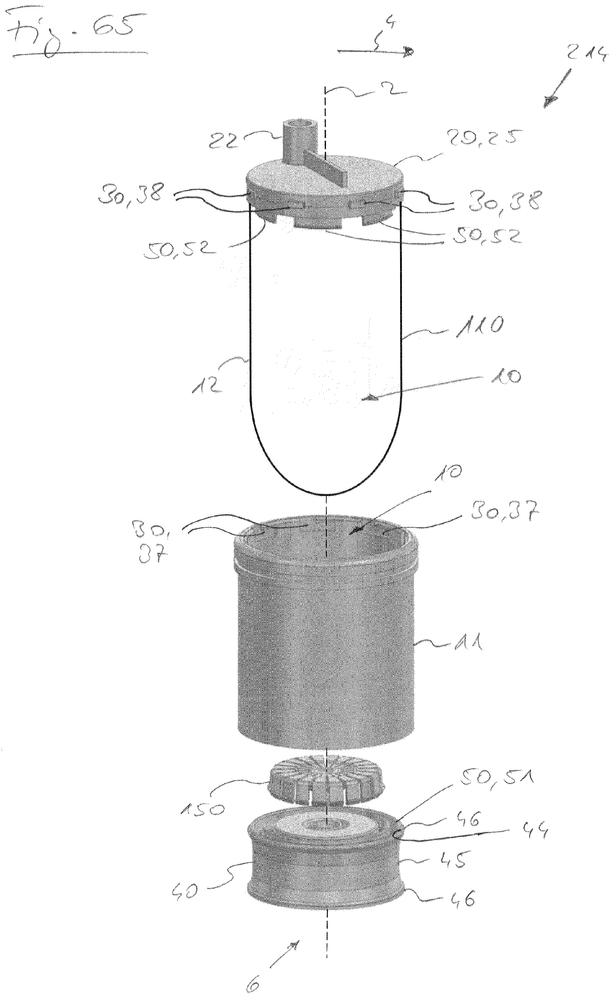

Fig. 65 exemplarily depicts an exploded side view of a fourteenth cartridge 214 according to the present disclosure. As far as no differences are described or disclosed in the Figures, the fourteenth cartridge 214 is configured as it is disclosed for the first cartridge 1 and vice versa.

The fourteenth cartridge 214 comprises a film bag 110 that encloses the material in the transverse direction 4 and towards the rear end 6. The film bag 110 bounds the chamber 10 in the transverse direction 4 and towards the rear end 6. The chamber wall 12 bounding the chamber 10 in the transverse direction 4 is formed by the film bag 110.

Towards the dispensing end 7, the film bag 110 is joined to the head part 20 so that the head part 20 forms a front closure of the chamber 10. The head part 20 is molded to the film bag 110, exemplarily at its outer circumference. The head part 20 may be molded to the film bag 110 by insert molding with the film bag 110, namely the front end of the film bag 110 facing towards the dispensing end 7, forming an insert that is over-molded by the material of the head part 20.

Apart from these modifications, the fourteenth cartridge 214 is configured as it is disclosed for the first cartridge 1. In particular, the fourteenth cartridge 214 comprises the releasable connection 30 between the head part 20 and the sidewall 11 and the interlock 50 between the piston 40 and the head part 20.

With alternative embodiments, the fourteenth cartridge 214 may also only comprise one of the releasable connection 30 and the interlock 50 and not the other one of the releasable connection 30 and the interlock 50.

Furthermore, the film bag 110 may also completely cover the head part 20 so that it also separates the material from the head part 20 and forms a front closure of the chamber 10. The film bag 110 then may extend into the outlet 22 of the head part 20.

With the fourteenth cartridge 214, the portion 25 of the head part 20 that is removed after the piston 40 has reached the dispensing end 7 comprises the complete head part 20.

The film bag 110 described in connection with the fourteenth cartridge 214 may also be implemented with any of the third cartridge 203, the fourth cartridge 204, the fifth cartridge 205, the sixth cartridge 206, the seventh cartridge 207, and the eighth cartridge 208. In particular, the fixation of the film bag 110 to the head part 20 of these cartridges 203, 204, 205, 206, 207, 208 may be configured as it is disclosed for the fixation of the film bag 110 to the head part 20 of the fourteenth cartridge 214.

Aspects of the foregoing disclosure may be summarized as follows.

With the third cartridge 203, the fourth cartridge 204, the third cartridge 205, the ninth cartridge 209, the tenth cartridge 210, the eleventh cartridge 211, the twelfth cartridge 212, and the thirteenth cartridge 213, the head part 20 and the chamber wall 12 are configured as a materially uniform part. With the first cartridge 1, the second cartridge 202, the sixth cartridge 206, the seventh cartridge 207, and the eighth cartridge 208, the head part 20 and the chamber wall 12 are configured as two separate parts connected by the releasable connection 30.

With the first cartridge 1, the third cartridge 203, the fourth cartridge 204, the fifth cartridge 205, the sixth cartridge 206, the seventh cartridge 207, and the eighth cartridge 208, the piston 40 is configured to be removed from the chamber wall 12 through the opening 13 at the dispensing end 7.

With the second cartridge 202, the piston 40 remains within the sidewall 11 after detachment of the head part 20 from the chamber wall 12.

With the ninth cartridge 209, the twelfth cartridge 212, and the thirteenth cartridge 230, the piston 40 remains within the sidewall 11.

With the ninth cartridge 209, the twelfth cartridge 212, and the thirteenth cartridge 213, the residuals of the material are removed by the cleaning medium 90 through the outlet 22 of the chamber 10. Thereby, the portions of the cartridges 209, 212, 213 contacting the material are not removed but cleaned.

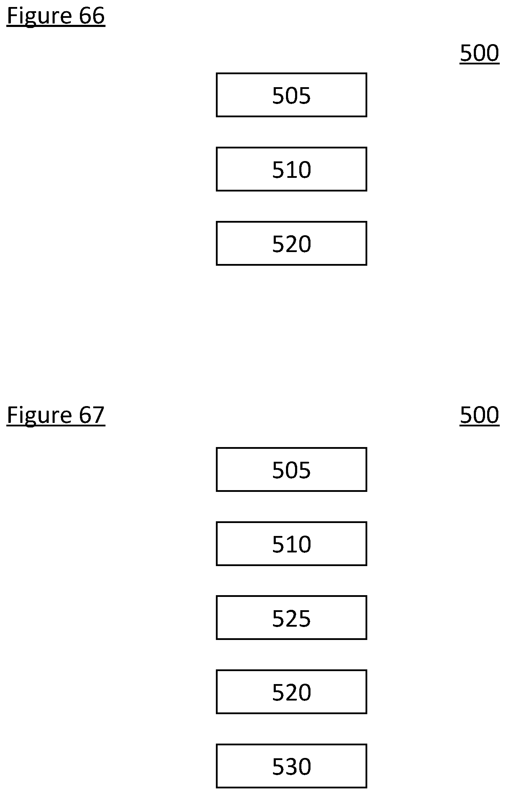

Fig. 66 depicts a first method 500 for removing residuals of a material to be dispensed from a cartridge for the material. The cartridge may be one of the first cartridge 1, the second cartridge 202, the third cartridge 203, the fourth cartridge 204, the fifth cartridge 205, the sixth cartridge 206, the seventh cartridge 207, the eighth cartridge 208, and the fourteenth cartridge 214.

The first method 500 comprises the steps of:
- providing (505) the cartridge 1, 202, 203, 204, 205, 206, 207, 208, 214 with the material filled into the chamber 10, with the material contacting the chamber wall 12 and with the piston 40 arranged towards the rear end 6 of the cartridge 1;
- moving (510) the piston 40 along the longitudinal axis 2 towards the dispensing end 7 for dispensing the material; and
- detaching (520) at least a portion 25 of the head part 20 from the chamber wall 12 after the piston 40 has reached the dispensing end 7.

As it is shown in Fig. 67, the first method 500 may comprise an optional step of locking (525) the piston 40 and the head part 20 to each other so that the piston 40 is removed from the chamber wall 12 through the dispensing end 7 upon the detaching 520 of at least the portion 25 of the head part 20 from the chamber wall 12. This optional step is performed, inter alia, with the first cartridge 1, the third cartridge 203, the fourth cartridge 204, and the fifth cartridge 205, and the fourteenth cartridge 214, whereby the piston 40 remains stuck in the head part 20 upon detachment of the head part 20 with the third cartridge 203, the fourth cartridge 204, and the fifth cartridge 205.

As it is also shown in Fig. 67, the first method 500 may additionally or alternatively comprise the optional step of removing (530) the piston 40 from the chamber wall 12, respectively the chamber 10, through an opening 13 of the chamber wall 12, respectively the chamber 10, at the dispensing end 7 and thereby removing the residuals of the material located in between the piston 40 and the head part 20 from the chamber wall 12. This step may, for example, be performed with the first cartridge 1, the third cartridge 203, the fourth cartridge 204, the fifth cartridge 205, the sixth cartridge 206, the seventh cartridge 207, the eighth cartridge 208, and the fourteenth cartridge 214.

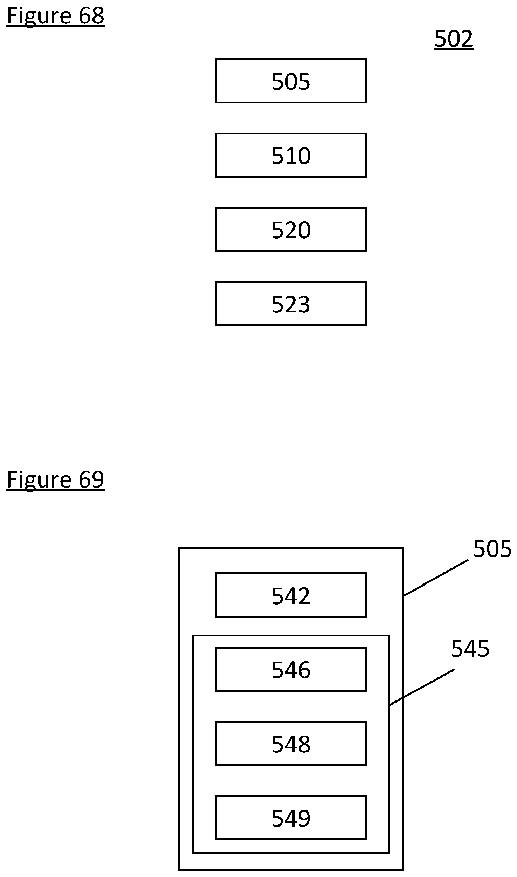

Fig. 68 depicts a second method 502 according to the present disclosure. The second method 502 comprises the mandatory steps of the first method 500, as shown in Fig. 66. The second method 502 may be performed with cartridges that have the chamber wall 12 configured as a portion of the film bag 110, such as the second cartridge 202, the fourteenth cartridge 214, and variants of the remaining cartridges that have the additional film bag 110. The second method 502 comprises a step of removing (523) the film bag 110 through the outlet 22 from the portion 25 of the head part 20.

As it is shown in Fig. 69, the step of providing (505) the cartridge with the material filled into the chamber 10 may comprise, with the second method 502, a step of extending (542) the fixing portion 112 of the film bag 110 through the outlet 22, for example, by moving the fixing portion 112 of the film bag 110 into the outlet 22 and a subsequent step of fixing (545) the fixing portion 112 of the film bag 110 to the head part 20 with a fastener 120, for example, by pinching the fixing portion 112 of the film bag 110 in between a first surface 122 and a second surface 124.

The step of fixing (545) the fixing portion 112 of the film bag 110 to the head part 20 with the fastener 120 comprises the steps of:
- positioning (546) the first surface 122 at the assembling distance 126 from the second surface 124;
- placing (547) the fixing portion 112 of the film bag 110 in the space 123 in between the first surface 122 and the second surface 124; and
- positioning 548 the first surface 122 at the fixing distance 125 from the second surface 124, thereby pinching the fixing portion 112 of the film bag 110 in between the first surface 122 and the second surface 124.

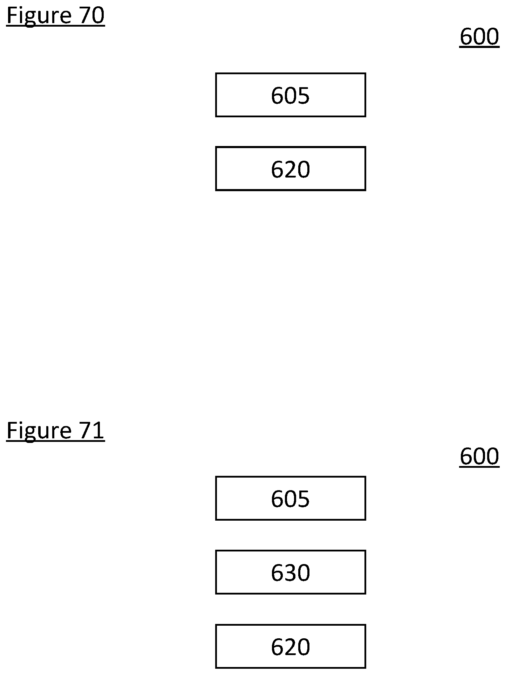

Fig. 70 depicts a fourth method 600 for removing residuals of a material to be dispensed from a cartridge. The fourth method 600 may be performed, inter alia, with the ninth cartridge 209, the twelfth cartridge 212, and the thirteenth cartridge 213. The fourth method 600 comprises steps of:
- providing (605) the cartridge 209, 212, 213 with the piston 40 arranged at the dispensing end 7 of the cartridge 209, 212, 213 and with the residuals of the material located in the chamber part 18 in between the piston 40 and the head part 20;
- introducing (620) the cleaning medium 90 into the chamber part 18 and removing 622 the residuals with the cleaning medium 90 from the chamber part 18.

Fig. 71 depicts a variant of the fourth method 600 that comprises an additional step of pushing (630) the auxiliary medium 95 through the auxiliary passage 35 to generate a vacuum within the main passage 23 to draw the cleaning medium 90 into the chamber 10.

With a fifth method for removing the residuals from the chamber 10, the piston 40 is pulled backwards out of the chamber 10. The cartridge then is placed in a basin filled with a cleaning medium, such as water, and rinsed out manually with a brush. This procedure allows for both effortless decontamination and complete recycling and reuse of the cartridge.

In summary, the present disclosure is directed at the following embodiments of a cartridge that allows for detachment of at least a portion of a head part from a chamber wall:
1. A cartridge (1) for a material to be dispensed,
   comprising a chamber wall (12), a head part (20) and a piston (40),
   wherein the chamber wall (12) extends along a longitudinal axis (2) from a rear end (6) to a dispensing end (7),
   wherein the chamber wall (12) bounds a chamber (10) for the material in a transverse direction (4) perpendicular to the longitudinal axis (2) and is configured for contacting the material,
   wherein the head part (20) is connected to the chamber wall (12) at the dispensing end (7) of the cartridge (1) and comprises an outlet (22) for the material to be dispensed,
   wherein the piston (40) is configured to be arranged within the cartridge (1) and to be moved along the longitudinal axis (2) towards the dispensing end (7) for dispensing the material,
   wherein at least a portion (25) of the head part (20) is configured to detach from the chamber wall (12) when the piston (40) is located at an end position at the dispensing end (7).
2. The cartridge (1) of embodiment 1,
   wherein the portion (25) of the head part (20) comprises the outlet (22).
3. The cartridge (1) of one of the preceding embodiments,
   wherein the head part (20) closes the chamber (10) at the dispensing end (7) perpendicular to the longitudinal axis (2) and is, for example, configured to contact the material.
4. The cartridge (1) of one of the preceding embodiments,
   wherein the piston (40) is configured to be removed from the chamber wall (12), respectively the chamber (10), through an opening (13) of the cartridge (1) at the dispensing end (7) and to thereby remove the residuals of the material located in between the piston (40) and the head part (20) from the chamber wall (12).
   wherein, for example, the residuals of the material are removed by scraping the residuals off the chamber wall (12) with the piston (40).
5. The cartridge (1) of one of the preceding embodiments,
   wherein the portion (25) of the head part (20) and the piston (40) are configured to connect to each other so that the piston (40) is removed upon detachment of the portion (25) of the head part (20) from the chamber wall (12).
6. The cartridge (1) of embodiment 5,
   wherein the piston (40) comprises a first part (51) of an interlock (50) and the head part (20) comprises a second part (52) of the interlock (50),
   wherein the first part (51) and the second part (52) of the interlock (50) are configured to engage with each other and to lock the piston (40) to the portion (25) of the head part (20) upon the piston (40) reaching the dispensing end (7).
7. The cartridge (1) of embodiment 6,
   wherein the first part (51) of the interlock (50) is located at a frontside (41) of the piston (40) facing towards the dispensing end (7) and/or
   wherein the second part (52) of the interlock (50) is located at a rear side (26) of the head part (20) facing towards the rear end (6).
8. The cartridge (1) of one of embodiments 6 and 7,
   wherein the first part (51) of the interlock (50) is configured as a circular rim located at a cylindrical surface (44) of the piston (40) and/or
   wherein the second part (52) of the interlock (50) is configured as a circular rim located at a cylindrical surface (28) of the head part (20).
9. The cartridge (1) of one of embodiments 6 to 8,
   wherein the second part (52) of the interlock (50) is located at a protruding element (27) of the head part (20), the protruding element (27) protruding from the head part (20) into the chamber (10) towards the rear end (6).
10. The cartridge (1) of one of the preceding embodiments,
   wherein the cartridge (1) comprises a detachment mechanism that is configured to be mechanically actuated when the piston (40) is located at the dispensing end (7),
   wherein a mechanical actuation of the detachment mechanism comprises moving at least one element of the detachment mechanism,
   wherein actuation of the detachment mechanism detaches the portion (25) of the head part (20) from the chamber wall (12).
11. The cartridge (1) of one of embodiment 10,
   wherein the piston (40) is configured to mechanically actuate the detachment mechanism by moving the at least one element.
12. The cartridge (1) of one of the preceding embodiments,
   wherein the head part (20) and the chamber wall (12) are configured as separate parts that are connected by a releasable connection (30), such as a mechanical lock, for example a snap-fit connection or a bayonet lock, or a dissolvable portion of the chamber wall (12) or of the head part (20), allowing for detaching the head part (20) from the chamber wall (12).
13. The cartridge (1) of embodiment 12,
   wherein the piston (40) is configured to actuate the releasable connection (30) upon reaching the dispensing end (7) and to thereby open the releasable connection (30).
14. The cartridge (1) of embodiment 12,
   wherein the head part (20) and the chamber wall (12) are configured as a materially uniform part.
15. The cartridge (1) of one of the preceding embodiments,
   wherein the portion (25) of the head part (20) is connected to the chamber wall (12) via a breaking section (33) that is configured to break for detachment of the portion (25) of the head part (20) from the chamber wall (12).
16. The cartridge (1) of embodiment 15,
   wherein the breaking section (33) is formed as a section of the chamber wall (12) or of the head part (20) that is structurally weaker than a surrounding portion (25) of the chamber wall (12) or of the head part (20), respectively,
   wherein the surrounding portion (25) surrounds the breaking section (33).
17. The cartridge (1) of one of embodiments 15 and 16,
   wherein an inlay (180) is located within the chamber (10) at the breaking section (33) and covers the breaking section (33) from an inside of the chamber (10),
   wherein the inlay (180) is configured to shift upon the piston (40) reaching the end position and to thereby uncover the breaking section (33),
   wherein, for example, the piston (40) is configured to push the inlay (180) away from the breaking section (33) upon reaching the end position,
   wherein, for example, the piston (40) is configured to engage with the inlay (180) upon reaching the end position the piston (40) and to push the inlay (180) away from the breaking section (33).
18. The cartridge (1) of embodiment 17,
   wherein the inlay (180) comprises a spacer (182) that engages with the head part (20) to hold the inlay (180) at the breaking section (33),
   wherein the spacer (182) is compressed when the inlay (180) shifts to uncover the breaking section (33).
19. The cartridge (1) of one of embodiments 15 to 18,
   wherein the breaking section (33) comprises two predetermined breaking lines (32) running parallel to each other around the chamber wall (12) and being spaced apart by a breaking line distance, wherein the chamber wall (12) is structurally weaker along the breaking lines (32) than within an intermediate band (39) in between the breaking lines (32).
20. The cartridge (1) of one of embodiments 15 to 19,
   wherein the cartridge (1) comprises a handle (34) attached to the breaking section (33),
   wherein the handle (34) is configured to be gripped and pulled by a user to remove parts of the breaking section (33) and to thereby detach the portion (25) of the head part (20) from the chamber wall (12).
21. The cartridge (1) of one of the preceding embodiments,
   wherein the piston (40) comprises a cutter (47), such as a blade, that is configured to cut through the head part (20) to separate the portion (25) of the head part (20) from the chamber wall (12).
22. The cartridge (1) of one of the preceding embodiments,
   wherein the chamber wall (12) forms a part of a solid outer body of the cartridge (1).
23. The cartridge (1) of one of one of embodiments 1 to 21,
   wherein the chamber (10) is formed by a film bag (110) and the chamber wall (12) is formed by a portion of the film bag (110),
   wherein the film bag (110) is configured to enclose the material.
24. The cartridge (1) of one of embodiment 23,
   wherein the film bag (110) extends into the outlet (22) of the head part (20) and has an opening within the outlet (22).
25. The cartridge (1) of one of embodiments 23 and 24,
   wherein the film bag (110) is configured to be removed through the outlet (22) from the portion (25) of the head part (20).
26. The cartridge (1) of one of embodiments 23 to 25,
   further comprising a fastener (120) that has a connection (130) to the head part (20) and is configured to fix a fixing portion (112) of the film bag (110) to the head part (20) when the fastener (120) is connected to the head part (20) in a fixing position.
27. The cartridge (1) of embodiment 26,
   wherein the fixing portion (112) of the film bag (110) extends through the outlet (22).
28. The cartridge (1) of one of embodiments 26 and 27,
   wherein the fastener (120) is configured to pinch the fixing portion (112) of the film bag (110) in between a first surface (122) and a second surface (124) when the fastener (120) is in the fixing position.
29. The cartridge (1) of embodiment 28,
   wherein the first surface (122) is a surface of the fastener (120) and the second surface (124) is a surface at the outlet (22).
30. The cartridge (1) of one of embodiments 28 and 29,
   wherein the connection (130) defines the fixing position of the fastener (120) with respect to the head part (20) and further defines an assembling position of the fastener (120) with respect to the head part (20),
   wherein the first surface (122) has a fixing distance (125) from the second surface (124) with the fastener (120) in the fixing position and wherein the first surface (122) has an assembling distance (126) from the second surface (124) with the fastener (120) in the assembling position, the fixing distance (125) being smaller than the assembling distance (126),
   wherein the assembling distance (126) allows for movement of the fixing portion (112) of the film bag (110) into a space (123) in between the first surface (122) and the second surface (124) during assembling of the cartridge (1).
31. The cartridge (1) of one of embodiments 26 to 30,
   wherein the connection (130) is a releasable connection, such as a threaded lock or a bayonet lock.
32. The cartridge (1) of one of embodiment 26 to 31,
   wherein the fastener (120) comprises a catch (140) for the film bag (110), such as a barb,
   wherein the catch (140) is configured to engage with the film bag (110) and to drag the film bag (110) together with the fastener (120) upon removing the fastener (120) from the head part (20) and to thereby remove the film bag (110) from the head part (20).
33. The cartridge (1) of embodiment 32,
   wherein the catch (140) is formed between the fastener (120) and an intermediate member (135) that is placed in between the outlet (22) and the fastener (120),
   wherein the intermediate member (135) is configured to detach from the outlet (22) together with the fastener (120) and to thereby remove the film bag (110) from the head part (20).
34. The cartridge (1) of embodiment 33,
   wherein the intermediate member (135) is placed in between the outlet (22) and the fastener (120).
35. The cartridge (1) of embodiment 28 and one of embodiments 33 and 34,
   wherein the catch (140) comprises the first surface (122) and the second surface (124),
   wherein the first surface (122) is a surface of the fastener (120) and the second surface (124) is a surface of the intermediate member (135).
36. Method (500) for removing residuals of a material to be dispensed from a cartridge (1) for the material,
   wherein the cartridge (1) comprises a chamber wall (12), a head part (20) and a piston (40),
   wherein the chamber wall (12) extends along a longitudinal axis (2) from a rear end (6) to a dispensing end (7),
   wherein the chamber wall (12) bounds a chamber (10) for the material in a transverse direction (4) perpendicular to the longitudinal axis (2),
   wherein the head part (20) is connected to the chamber wall (12) at the dispensing end (7) of the cartridge (1) and comprises an outlet (22) for the material to be dispensed,
   wherein the method (500) comprises the steps of:
      - providing (505) the cartridge (1) with the material filled into the chamber (10), with the material contacting the chamber wall (12) and with the piston (40) arranged towards the rear end (6) of the cartridge (1);
      - moving (510) the piston (40) along the longitudinal axis (2) towards the dispensing end (7) for dispensing the material; and
      - detaching (520) at least a portion (25) of the head part (20) from the chamber wall (12) after the piston (40) has reached the dispensing end (7).
37. The method (500) of embodiment 36,
   further comprising the step of:
   - removing (530) the piston (40) from the chamber wall (12), respectively the chamber (10), through an opening (13) of the chamber (10) at the dispensing end (7) and thereby removing the residuals of the material located in between the piston (40) and the head part (20) from the chamber wall (12).
38. The method (500) of one of embodiments 36 and 37,
   further comprising the step of:
   - locking (525) the piston (40) and the head part (20) to each other so that the piston (40) is removed from the chamber wall (12) through the dispensing end (7) upon the detaching (520) of at least the portion (25) of the head part (20) from the chamber wall (12).
39. The method (500) of one of embodiments 36 to 38,
   wherein the detaching (520) of at least the portion (25) of the head part (20) from the chamber wall (12) comprises dissolving at least the portion (25) of the head part (20) and/or a portion of the chamber wall (12) in a solvent.
40. The method (500) of embodiment 36,
   wherein the chamber wall (12) is configured as a portion of a film bag (110),
   wherein the film bag (110) encloses the material filled into the chamber (10),
   wherein the method (500) comprises the step of:
      - removing (523) the film bag (110) through the outlet (22) from the portion (25) of the head part (20).
41. The method (500) of embodiment 40,
   wherein the method (500) comprises the step of:
   - fixing (545) a fixing portion (112) of the film bag (110) to the head part (20) with a fastener (120), for example, by pinching the fixing portion (112) of the film bag (110) in between a first surface (122) and a second surface (124).
42. The method (500) of embodiment 41,
   wherein the method (500) comprises the step of:
   - extending (542) the fixing portion (112) of the film bag (110) through the outlet (22) before the fixing (545) of the fixing portion (112) of the film bag (110) to the head part (20), for example, by moving the fixing portion (112) of the film bag (110) into the outlet (22).
43. The method (500) of one of embodiments 41 and 42,
   wherein the step of fixing (545) the fixing portion (112) of the film bag (110) to the head part (20) with the fastener (120) comprises the steps of:
   - positioning (546) a first surface (122) at an assembling distance (126) from a second surface (124);
   - placing (547) the fixing portion (112) of the film bag (110) in a space (123) in between the first surface (122) and the second surface (124); and
   - positioning (548) the first surface (122) at a fixing distance (125) from the second surface (124), thereby pinching the fixing portion (112)) of the film bag (110) in between the first surface (122) and the second surface (124).
44. The method (500) of one of embodiments 40 to 43,
   wherein the film bag (110) becomes collapsed in between the piston (40) and the head part (20) upon the step of moving (510) the piston (40) along the longitudinal axis (2) towards the dispensing end (7).

The head part detaching from the chamber wall that contacts the material is not an essential feature of the present disclosure. With other embodiments, the head part may also be configured to detach from the sidewall of the outer body, whereby the sidewall of the outer body does not necessarily contact the material to be dispensed. For example, a film bag may be placed in between the material and the sidewall.

The present disclosure is also directed at the following embodiments:
1. A cartridge (1) for a material to be dispensed,
   comprising a sidewall (11), a head part (20) and a piston (40),
   wherein the sidewall (11) extends along a longitudinal axis (2) from a rear end (6) to a dispensing end (7),
   wherein the sidewall (11) surrounds a chamber (10) for the material in a transverse direction (4) perpendicular to the longitudinal axis (2),
   wherein the head part (20) is connected to the sidewall (11) at the dispensing end (7) of the cartridge (1) and comprises an outlet (22) for the material to be dispensed,
   wherein the piston (40) is configured to be arranged within the cartridge (1) and to be moved along the longitudinal axis (2) towards the dispensing end (7) for dispensing the material,
   wherein at least a portion (25) of the head part (20) is configured to detach from the sidewall (11) when the piston (40) is located at an end position at the dispensing end (7).
2. The cartridge (1) of embodiment 1,
   wherein the portion (25) of the head part (20) comprises the outlet (22).
3. The cartridge (1) of one of the preceding embodiments,
   wherein the head part (20) closes the chamber (10) at the dispensing end (7) perpendicular to the longitudinal axis (2) and is, for example, configured to contact the material.
4. The cartridge (1) of one of the preceding embodiments,
   wherein the piston (40) is configured to be removed from the sidewall (11), respectively an outer body, through an opening (13) of the cartridge (1) at the dispensing end (7) and to thereby remove the residuals of the material located in between the piston (40) and the head part (20) from the sidewall (11).
   wherein, for example, the residuals of the material are removed by scraping the residuals off the sidewall (11) with the piston (40).
5. The cartridge (1) of one of the preceding embodiments,
   wherein at least a portion (25) of the head part (20) and the piston (40) are configured to connect to each other so that the piston (40) is removed upon detachment of the portion (25) of the head part (20) from the sidewall (11).
6. The cartridge (1) of embodiment 5,
   wherein the piston (40) comprises a first part (51) of an interlock (50) and the portion (25) of the head part (20) comprises a second part (52) of the interlock (50),
   wherein the first part (51) and the second part (52) of the interlock (50) are configured to engage with each other and to lock the piston (40) to the portion (25) of the head part (20) upon the piston (40) reaching the dispensing end (7).
7. The cartridge (1) of embodiment 6,
   wherein the first part (51) of the interlock (50) is located at a frontside (41) of the piston (40) facing towards the dispensing end (7) and/or
   wherein the second part (52) of the interlock (50) is located at a rear side (26) of the head part (20) facing towards the rear end (6).
8. The cartridge (1) of one of embodiments 6 and 7,
   wherein the first part (51) of the interlock (50) is configured as a circular rim located at a cylindrical surface (44) of the piston (40) and/or
   wherein the second part (52) of the interlock (50) is configured as a circular rim located at a cylindrical surface (28) of the head part (20).
9. The cartridge (1) of one of embodiments 6 to 8,
   wherein the second part (52) of the interlock (50) is located at a protruding element (27) of the head part (20), the protruding element (27) protruding from the head part (20) into the chamber (10) towards the rear end (6).
10. The cartridge (1) of one of the preceding embodiments,
   wherein the cartridge (1) comprises a detachment mechanism that is configured to be mechanically actuated when the piston (40) is located at the dispensing end (7),
   wherein a mechanical actuation of the detachment mechanism comprises moving at least one element of the detachment mechanism,
   wherein actuation of the detachment mechanism detaches the portion (25) of the head part (20) from the sidewall (11).
11. The cartridge (1) of one of embodiment 10,
   wherein the piston (40) is configured to mechanically actuate the detachment mechanism by moving the at least one element.
12. The cartridge (1) of one of the preceding embodiments,
   wherein the head part (20) and the sidewall (11) are configured as separate parts that are connected by a releasable connection (30), such as a mechanical lock, for example a snap-fit connection or a bayonet lock, or a dissolvable portion of the sidewall (11) or of the head part (20), allowing for detaching the head part (20) from the sidewall (11).
13. The cartridge (1) of embodiment 12,
   wherein the piston (40) is configured to engage with the releasable connection (30) upon reaching the dispensing end (7) and to thereby open the releasable connection (30).
14. The cartridge (1) of embodiment 12,
   wherein the head part (20) and the sidewall (11) are configured as a materially uniform part.
15. The cartridge (1) of one of the preceding embodiments,
   wherein the portion (25) of the head part (20) is connected to the sidewall (11) via a breaking section (33) that is configured to break for detachment of the portion (25) of the head part (20) from the sidewall (11).
16. The cartridge (1) of embodiment 15,
   wherein the breaking section (33) is formed as a section of the sidewall (11) or of the head part (20) that is structurally weaker than a surrounding portion (25) of the sidewall (11) or of the head part (20), respectively,
   wherein the surrounding portion (25) surrounds the breaking section (33).
17. The cartridge (1) of one of embodiments 15 and 16,
   wherein an inlay (180) is located within the chamber (10) at the breaking section (33) and covers the breaking section (33) from an inside of the chamber (10),
   wherein the inlay (180) is configured to shift upon the piston (40) reaching the end position and to thereby uncover the breaking section (33),
   wherein, for example, the piston (40) is configured to engage with the inlay (180) upon reaching the end position and to push the inlay (180) away from the breaking section (33).
18. The cartridge (1) of embodiment 17,
   wherein the inlay (180) comprises a spacer (182) that engages with the head part (20) to hold the inlay (180) at the breaking section (33),
   wherein the spacer (182) is compressed when the inlay (180) shifts to uncover the breaking section (33).
19. The cartridge (1) of one of embodiments 15 to 18,
   wherein the breaking section (33) comprises two predetermined breaking lines (32) running parallel to each other around the sidewall (11) and being spaced apart by a breaking line distance, wherein the sidewall (11) is structurally weaker along the breaking lines (32) than within an intermediate band (39) in between the breaking lines (32).
20. The cartridge (1) of one of embodiments 15 to 19,
   wherein the cartridge (1) comprises a handle (34) attached to the breaking section (33),
   wherein the handle (34) is configured to be gripped and pulled by a user to remove parts of the breaking section (33) and to thereby detach the portion (25) of the head part (20) from the sidewall (11).
21. The cartridge (1) of one of the preceding embodiments,
   wherein the piston (40) comprises a cutter (47), such as a blade, that is configured to cut through the head part (20) to separate the portion (25) of the head part (20) from the sidewall (11).
22. The cartridge (1) of one of the preceding embodiments,
   wherein the sidewall (11) forms a part of a solid outer body of the cartridge (1).
23. The cartridge (1) of one of the preceding embodiments,
   wherein at least a part of the chamber (10) is formed by a film bag (110) and the film bag (110) is configured to at least partly enclose the material,
   wherein a chamber wall (12) that is configured to contact the material is formed by a portion of the film bag (110),
   wherein the chamber wall (12) is separate from the sidewall (11).
24. The cartridge (1) of one of embodiment 23,
   wherein the film bag (110) extends into the outlet (22) of the head part (20) and has an opening within the outlet (22).
25. The cartridge (1) of one of embodiments 23 and 24,
   wherein the film bag (110) is configured to be removed through the outlet (22) from the portion (25) of the head part (20).
26. The cartridge (1) of one of embodiments 23 and 24,
   wherein the film bag (110) is configured to be removed together with the head part (20) from the sidewall (11).
27. The cartridge (1) of one of embodiments 23 to 26,
   further comprising a fastener (120) that has a connection (130) to the head part (20) and is configured to fix a fixing portion (112) of the film bag (110) to the head part (20) when the fastener (120) is connected to the head part (20) in a fixing position.
28. The cartridge (1) of embodiment 27,
   wherein the fixing portion (112) of the film bag (110) extends through the outlet (22).
29. The cartridge (1) of one of embodiments 27 and 28,
   wherein the fastener (120) is configured to pinch the fixing portion (112) of the film bag (110) in between a first surface (122) and a second surface (124) when the fastener (120) is in the fixing position.
30. The cartridge (1) of embodiment 29,
   wherein the first surface (122) is a surface of the fastener (120) and the second surface (124) is a surface at the outlet (22).
31. The cartridge (1) of one of embodiments 29 and 30,
   wherein the connection (130) defines the fixing position of the fastener (120) with respect to the head part (20) and further defines an assembling position of the fastener (120) with respect to the head part (20),
   wherein the first surface (122) has a fixing distance (125) from the second surface (124) with the fastener (120) in the fixing position and wherein the first surface (122) has an assembling distance (126) from the second surface (124) with the fastener (120) in the assembling position, the fixing distance (125) being smaller than the assembling distance (126),
   wherein the assembling distance (126) allows for movement of the fixing portion (112) of the film bag (110) into a space (123) in between the first surface (122) and the second surface (124) during assembling of the cartridge (1).
32. The cartridge (1) of one of embodiments 27 to 31,
   wherein the connection (130) is a releasable connection, such as a threaded lock or a bayonet lock.
33. The cartridge (1) of one of embodiment 27 to 32,
   wherein the fastener (120) comprises a catch (140) for the film bag (110), such as a barb,
   wherein the catch (140) is configured to engage with the film bag (110) and to drag the film bag (110) together with the fastener (120) upon removing the fastener (120) from the head part (20) and to thereby remove the film bag (110) from the head part (20).
34. The cartridge (1) of embodiment 33,
   wherein the catch (140) is formed between the fastener (120) and an intermediate member (135) that is placed in between the outlet (22) and the fastener (120),
   wherein the intermediate member (135) is configured to detach from the outlet (22) together with the fastener (120) and to thereby remove the film bag (110) from the head part (20).
35. The cartridge (1) of embodiment 34,
   wherein the intermediate member (135) is placed in between the outlet (22) and the fastener (120).
36. The cartridge (1) of embodiment 29 and one of embodiments 34 and 35,
   wherein the catch (140) comprises the first surface (122) and the second surface (124),
   wherein the first surface (122) is a surface of the fastener (120) and the second surface (124) is a surface of the intermediate member (135).
37. Method (500) for removing residuals of a material to be dispensed from a cartridge (1) for the material,
   wherein the cartridge (1) comprises a sidewall (11), a head part (20) and a piston (40),
   wherein the sidewall (11) extends along a longitudinal axis (2) from a rear end (6) to a dispensing end (7),
   wherein the sidewall (11) bounds a chamber (10) for the material in a transverse direction (4) perpendicular to the longitudinal axis (2),
   wherein the head part (20) is connected to the sidewall (11) at the dispensing end (7) of the cartridge (1) and comprises an outlet (22) for the material to be dispensed,
   wherein the method (500) comprises the steps of:
      - providing (505) the cartridge (1) with the material filled into the chamber (10) and with the piston (40) arranged towards the rear end (6) of the cartridge (1);
      - moving (510) the piston (40) along the longitudinal axis (2) towards the dispensing end (7) for dispensing the material; and
      - detaching (520) at least a portion (25) of the head part (20) from the sidewall (11) after the piston (40) has reached the dispensing end (7).
38. The method (500) of embodiment 37,
   further comprising the step of:
   - removing (530) the piston (40) from the sidewall (11), respectively the chamber (10), through an opening (13) of the chamber (10) at the dispensing end (7).
39. The method (500) of one of embodiments 37 and 38,
   further comprising the step of:
   - locking (525) the piston (40) and the head part (20) to each other so that the piston (40) is removed from the sidewall (11) through the dispensing end (7) upon the detaching (520) of at least the portion (25) of the head part (20) from the sidewall (11).
40. The method (500) of one of embodiments 37 to 39,
   wherein the detaching (520) of at least the portion (25) of the head part (20) from the sidewall (11) comprises dissolving at least the portion (25) of the head part (20) and/or a portion of the sidewall (11) in a solvent.
41. The method (500) of embodiment 40,
   wherein the chamber 10 is formed by a film bag (110),
   wherein the film bag (110) encloses the material filled into the chamber (10),wherein a chamber wall (12) is configured as a portion of a film bag (110),
   wherein the method (500) comprises the step of:
      - removing (523) the film bag (110) together with the portion (25) of the head part (20) from the sidewall (11).
42. The method (500) of embodiment 41,
   wherein the method (500) comprises the step of:
   - fixing (545) a fixing portion (112) of the film bag (110) to the head part (20) with a fastener (120), for example, by pinching the fixing portion (112) of the film bag (110) in between a first surface (122) and a second surface (124).
43. The method (500) of embodiment 42,
   wherein the method (500) comprises the step of:
   - extending (542) the fixing portion (112) of the film bag (110) through the outlet (22) before the fixing (545) of the fixing portion (112) of the film bag (110) to the head part (20), for example, by moving the fixing portion (112) of the film bag (110) into the outlet (22).
44. The method (500) of one of embodiments 42 and 43,
   wherein the step of fixing (545) the fixing portion (112) of the film bag (110) to the head part (20) with the fastener (120) comprises the steps of:
   - positioning (546) a first surface (122) at an assembling distance (126) from a second surface (124);
   - placing (547) the fixing portion (112) of the film bag (110) in a space (123) in between the first surface (122) and the second surface (124); and
   - positioning (548) the first surface (122) at a fixing distance (125) from the second surface (124), thereby pinching the fixing portion (112)) of the film bag (110) in between the first surface (122) and the second surface (124).
45. The method (500) of one of embodiments 41 to 44,
   wherein the film bag (110) becomes collapsed in between the piston (40) and the head part (20) upon the step of moving (510) the piston (40) along the longitudinal axis (2) towards the dispensing end (7).

The present disclosure is also directed at the following embodiments of a cartridge having a detachable head part and a film bag forming a chamber for the material to be dispensed:
1. A cartridge (1) for a material to be dispensed,
   comprising a sidewall (11), a head part (20) and a piston (40),
   wherein the sidewall (11) extends along a longitudinal axis (2) from a rear end (6) to a dispensing end (7),
   wherein the sidewall (11) surrounds a chamber (10) for the material in a transverse direction (4) perpendicular to the longitudinal axis (2),
   wherein the head part (20) is connected to the sidewall (11) at the dispensing end (7) of the cartridge (1) and comprises an outlet (22) for the material to be dispensed,
   wherein the piston (40) is configured to be arranged within the cartridge (1) and to be moved along the longitudinal axis (2) towards the dispensing end (7) for dispensing the material,
   wherein at least a part of the chamber (10) is formed by a film bag (110) and the film bag (110) is configured to at least partly enclose the material,
   wherein a chamber wall (12) that bounds the chamber (10) in the transverse direction (4) and that is configured to contact the material is formed by a portion of the film bag (110),
   wherein the chamber wall (12) is separate from the sidewall (11),
   wherein at least a portion (25) of the head part (20) is configured to detach from the sidewall (11) when the piston (40) is located at an end position at the dispensing end (7).
2. The cartridge (1) of embodiment 1,
   wherein the film bag (110) is configured to be removed together with the head part (20) from the sidewall (11).
3. The cartridge (1) of one of the preceding embodiments,
   wherein the portion (25) of the head part (20) closes the chamber (10) at the dispensing end (7) perpendicular to the longitudinal axis (2) and is, for example, configured to contact the material.
4. The cartridge (1) of embodiment 3,
   wherein the portion (25) of the head part (20) and the film bag (110) are joined to each other, wherein, for example, the head part (20) is molded around the film bag (110) at the dispensing end (7).
5. The cartridge (1) of embodiment 2,
   wherein the film bag (110) is configured to form a closure of the chamber (10) towards the dispensing end (7) and to be located in between the head part (20) and the material.
6. The cartridge (1) of one of the preceding embodiments,
   wherein at least a portion (25) of the head part (20) and the piston (40) are configured to connect to each other so that the piston (40) is removed upon detachment of the portion (25) of the head part (20) from the sidewall (11).
7. The cartridge (1) of embodiment 6,
   wherein the piston (40) comprises a first part (51) of an interlock (50) and the portion (25) of the head part (20) comprises a second part (52) of the interlock (50),
   wherein the first part (51) and the second part (52) of the interlock (50) are configured to engage with each other and to lock the piston (40) to the portion (25) of the head part (20) upon the piston (40) reaching the dispensing end (7).
8. The cartridge (1) of embodiment 7,
   wherein the first part (51) of the interlock (50) is located at a frontside (41) of the piston (40) facing towards the dispensing end (7) and/or
   wherein the second part (52) of the interlock (50) is located at a rear side (26) of the head part (20) facing towards the rear end (6).
9. The cartridge (1) of one of embodiments 7 and 8,
   wherein the first part (51) of the interlock (50) is configured as a circular rim located at a cylindrical surface (44) of the piston (40) and/or
   wherein the second part (52) of the interlock (50) is configured as a circular rim located at a cylindrical surface (28) of the head part (20).
10. The cartridge (1) of one of embodiments 7 to 9,
   wherein the second part (52) of the interlock (50) is located at a protruding element (27) of the head part (20), the protruding element (27) protruding from the head part (20) into the chamber (10) towards the rear end (6).
11. The cartridge (1) of one of the preceding embodiments,
   wherein the cartridge (1) comprises a detachment mechanism that is configured to be mechanically actuated when the piston (40) is located at the dispensing end (7),
   wherein a mechanical actuation of the detachment mechanism comprises moving at least one element of the detachment mechanism,
   wherein actuation of the detachment mechanism detaches the portion (25) of the head part (20) from the sidewall (11).
12. The cartridge (1) of one of embodiment 11,
   wherein the piston (40) is configured to mechanically actuate the detachment mechanism by moving the at least one element.
13. The cartridge (1) of one of the preceding embodiments,
   wherein the head part (20) and the sidewall (11) are configured as separate parts that are connected by a releasable connection (30), such as a mechanical lock, for example a snap-fit connection or a bayonet lock, allowing for detaching the head part (20) from the sidewall (11).
14. The cartridge (1) of embodiment 13,
   wherein the piston (40) is configured to actuate the releasable connection (30) upon reaching the dispensing end (7) and to thereby open the releasable connection (30).
15. The cartridge (1) of one of the preceding embodiments,
   wherein the portion (25) of the head part (20) comprises the outlet (22).
16. The cartridge (1) of one of the preceding embodiments,
   wherein the piston (40) is configured to be removed from the sidewall (11), respectively an outer body, through an opening (13) of the cartridge (1) at the dispensing end (7).
17. The cartridge (1) of one of the preceding embodiments,
   wherein the film bag (110) extends into the outlet (22) of the head part (20) and has an opening within the outlet (22).
18. The cartridge (1) of one of the preceding embodiments,
   further comprising a fastener (120) that has a connection (130) to the head part (20) and is configured to fix a fixing portion (112) of the film bag (110) to the head part (20) when the fastener (120) is connected to the head part (20) in a fixing position.
19. The cartridge (1) of embodiment 18,
   wherein the fixing portion (112) of the film bag (110) extends through the outlet (22).
20. The cartridge (1) of one of embodiments 18 and 19,
   wherein the fastener (120) is configured to pinch the fixing portion (112) of the film bag (110) in between a first surface (122) and a second surface (124) when the fastener (120) is in the fixing position.
21. The cartridge (1) of embodiment 20,
   wherein the first surface (122) is a surface of the fastener (120) and the second surface (124) is a surface at the outlet (22).
22. The cartridge (1) of one of embodiments 20 and 21,
   wherein the connection (130) defines the fixing position of the fastener (120) with respect to the head part (20) and further defines an assembling position of the fastener (120) with respect to the head part (20),
   wherein the first surface (122) has a fixing distance (125) from the second surface (124) with the fastener (120) in the fixing position and wherein the first surface (122) has an assembling distance (126) from the second surface (124) with the fastener (120) in the assembling position, the fixing distance (125) being smaller than the assembling distance (126),
   wherein the assembling distance (126) allows for movement of the fixing portion (112) of the film bag (110) into a space (123) in between the first surface (122) and the second surface (124) during assembling of the cartridge (1).
23. The cartridge (1) of one of embodiments 18 to 22,
   wherein the connection (130) is a releasable connection, such as a threaded lock or a bayonet lock.
24. The cartridge (1) of one of embodiment 18 to 23,
   wherein the fastener (120) comprises a catch (140) for the film bag (110), such as a barb,
   wherein the catch (140) is configured to engage with the film bag (110) and to drag the film bag (110) together with the fastener (120) upon removing the fastener (120) from the head part (20) and to thereby remove the film bag (110) from the head part (20).
25. The cartridge (1) of embodiment 24,
   wherein the catch (140) is formed between the fastener (120) and an intermediate member (135) that is placed in between the outlet (22) and the fastener (120),
   wherein the intermediate member (135) is configured to detach from the outlet (22) together with the fastener (120) and to thereby remove the film bag (110) from the head part (20).
26. The cartridge (1) of embodiment 25,
   wherein the intermediate member (135) is placed in between the outlet (22) and the fastener (120).
27. The cartridge (1) of embodiment 20 or 22 and one of embodiments 25 and 26,
   wherein the catch (140) comprises the first surface (122) and the second surface (124),
   wherein the first surface (122) is a surface of the fastener (120) and the second surface (124) is a surface of the intermediate member (135).

The head part being detachable from the sidewall or the chamber wall does not constitute an essential feature of the disclosure. In a further aspect, the present disclosure is also directed at the following embodiments:
1. A cartridge (1) for a material to be dispensed,
   comprising a chamber wall (12), a head part (20), a piston (40) and an intermediate member (60), wherein the chamber wall (12) extends along a longitudinal axis (2) from a rear end (6) to a dispensing end (7),
   wherein the chamber wall (12) surrounds, such as bounds, a chamber (10) for the material in a transverse direction (4) perpendicular to the longitudinal axis (2),
   wherein the head part (20) is connected to the chamber wall (12) at the dispensing end (7) of the cartridge (1) and comprises an outlet (22) for the material to be dispensed,
   wherein the piston (40) is configured to be arranged within the cartridge (1) and to be moved along the longitudinal axis (2) towards the dispensing end (7) for dispensing the material,
   wherein the intermediate member (60) is located in between the piston (40) and the head part (20), wherein the intermediate member (60) is configured to transport residuals of the material towards the outlet (22) in the transverse direction (4) and to remove the residuals from the chamber (10) through the outlet (22) when the piston (40) reaches the head part (20).
2. The cartridge (1) of embodiment 1,
   wherein the head part (20) closes the chamber (10) at the dispensing end (7) in a longitudinal direction (3) parallel to the longitudinal axis (2).
3. The cartridge (1) of one of the preceding embodiments,
   wherein the intermediate member (60) is configured as a flushing medium (82) that is configured to be placed in between the piston (40) and the material and that is configured to flush the material through the outlet (22) when the piston (40) reaches the head part (20).
4. The cartridge (1) of embodiment 3,
   wherein the flushing medium (82) is contained in a flushing medium bag (80),
   wherein the flushing medium bag (80) is configured to be placed in between the piston (40) and the material to be dispensed,
   wherein the cartridge (1) is configured to open the flushing medium bag (80) upon the piston (40) reaching the dispensing end (7) of the cartridge (1).
5. The cartridge (1) of embodiment 4,
   wherein the cartridge (1) comprises an opener (84), such as a spike, to open the flushing medium bag (80) upon the piston (40) reaching the dispensing end (7) of the cartridge (1),
   wherein the opener (84) is positioned at the dispensing end (7) within the chamber (10).
6. The cartridge (1) of embodiment 1,
   wherein the intermediate member (60) and a head surface (21) of the head part (20) have shapes that are adapted for the intermediate member (60) first contacting the head surface (21) along a contact line (62) in an outer region (63) located away from the outlet (22) and to then sequentially contact the head surface (21) towards the outlet (22), thereby shifting the contact line (62) towards the outlet (22) and moving the residuals towards the outlet (22).
7. The cartridge (1) of embodiment 6,
   wherein a distance (64) between the intermediate member (60) and the head surface (21) is larger at a first radial position (68) that is radially aligned with the outlet (22) than at a second radial position (69) that is spaced apart from the outlet (22) in the transverse direction (4).
8. The cartridge (1) of embodiment 6,
   wherein the intermediate member (60) is configured as a scraper that comprises the contact line (62) at a front edge (71),
   wherein the scraper is configured to rotate with respect to the head part (20) to move the front edge (71) with the contact line (62) in a circumferential direction (73) around the longitudinal axis (2) towards the outlet (22).
9. The cartridge (1) of one of embodiments 6 to 8,
   wherein the intermediate member (60) is configured as an elastic member.
10. The cartridge (1) of one of embodiments 6 to 9,
   wherein the intermediate member (60) comprises a pusher (65) that is configured to move into the outlet (22) upon the contact line (62) reaching the outlet (22).
11. The cartridge (1) of one of embodiments 6 to 10,
   wherein the intermediate member (60) comprises ribs (67) extending along the longitudinal axis (2) towards the rear end (6).
12. The cartridge (1) of embodiment 1,
   wherein the intermediate member (60) is configured as a film, such as a part of a film bag (110) forming the chamber wall (12), that is configured to enclose the material and to be removed through the outlet (22).

The present disclosure is also directed at the following embodiments:
1. Method (600) for removing residuals of a material to be dispensed from a cartridge (1),
   the cartridge (1) comprising a chamber wall (12), a head part (20), and a piston (40),
   wherein the chamber wall (12) extends along a longitudinal axis (2) from a rear end (6) to a dispensing end (7),
   wherein the chamber wall (12) surrounds, such as bounds, a chamber (10) for the material in a transverse direction (4) perpendicular to the longitudinal axis (2),
   wherein the head part (20) is connected to the chamber wall (12) at the dispensing end (7) of the cartridge (1) and comprises an outlet (22) for the material to be dispensed,
   wherein the piston (40) is movably arranged along the longitudinal axis (2) for dispensing the material,
   wherein the method (600) comprises the steps of:
      - providing (605) the cartridge (1) with the piston (40) arranged at the dispensing end (7) of the cartridge (1) and with the residuals of the material located in a chamber part (18) in between the piston (40) and the head part (20);
      - introducing (620) a cleaning medium (90) into the chamber part (18) and removing (622) the residuals with the cleaning medium (90) from the chamber part (18).
2. The method (600) of embodiment 1,
   wherein the residuals are removed from the chamber part (18) via the outlet (22).
3. The method (600) of one of the preceding embodiments,
   wherein the head part (20) closes the chamber (10) at the dispensing end (7) in a longitudinal direction (3) parallel to the longitudinal axis (2).
4. The method (600) of one of the preceding embodiments,
   wherein the cleaning medium (90) is introduced into the chamber part (18) from the rear end (6).
5. The method (600) of embodiment 4,
   wherein the piston (40) comprises a passage (43), such as a valve, for introducing the cleaning medium (90) into the chamber part (18) through the piston (40).
6. The method (600) of one of embodiments 4 and 5,
   wherein the cartridge (1) comprises an auxiliary passage (35) through the outlet (22) that is arranged at an angle with a main passage (23) of the outlet (22) for dispensing the material and intersects the main passage (23),
   wherein the method (600) comprises the step of:
      - pushing (630) an auxiliary medium (95), such as air, through the auxiliary passage (35) to generate a vacuum within the main passage (23) to draw the cleaning medium (90) into the chamber (10).
7. The method (600) of embodiment 4,
   wherein the cleaning medium (90) is provided in a compartment in between the piston (40) and the chamber part (18),
   wherein, for example, the compartment is formed by a bag (80).
8. The method (600) of one of the preceding embodiments,
   wherein the cleaning medium (90) is air.

### Reference numeral list

- 1: first cartridge
- 2: longitudinal axis
- 3: longitudinal direction
- 4: transverse direction
- 6: rear end
- 7: dispensing end
- 10: chamber
- 11: sidewall
- 12: chamber wall
- 13: opening
- 15: film bag
- 18: chamber part
- 19: handle
- 20: head part
- 21: head surface
- 22: outlet
- 23: main passage
- 25: portion
- 26: rear side
- 27: protruding element
- 28: cylindrical surface
- 29: seal
- 30: connection
- 31: protective cover
- 32: breaking line
- 33: breaking section
- 34: handle
- 35: auxiliary passage
- 36: insert
- 37: first part

- 38: second part
- 39: band
- 40: piston
- 41: frontside
- 43: passage
- 44: cylindrical surface
- 45: outer surface
- 46: sealing rim
- 47: cutter
- 48: bottom plate
- 49: cutting edge
- 50: interlock
- 51: first part
- 52: second part
- 60: intermediate part
- 61: front surface
- 62: contact line
- 63: outer region
- 64: distance
- 65: pusher
- 67: rib
- 68: first radial position
- 69: second radial position
- 71: front edge
- 73: circumferential direction
- 80: flushing medium bag
- 82: flushing medium
- 84: opener
- 90: cleaning medium
- 95: auxiliary medium
- 100: mixer
- 110: film bag
- 112: fixing portion
- 120: fastener
- 121: grip
- 122: first surface
- 123: space
- 124: second surface
- 125: assembling distance
- 126: fixing distance
- 127: plug
- 128: outlet passage
- 129: depression

- 130: connection
- 131: connection part
- 132: connection counterpart
- 133: further connection counterpart
- 135: intermediate member
- 136: intermediate connection
- 140: catch
- 150: venting insert
- 160: piston rod
- 170: releasable lock
- 171: lug
- 172: opening
- 180: inlay
- 181: piston stop
- 182: spacer
- 185: cover
- 190: reinforcement element
- 192: further reinforcement element
- 202: second cartridge
- 203: third cartridge
- 204: fourth cartridge
- 205: fifth cartridge
- 206: sixth cartridge
- 207: seventh cartridge
- 208: eighth cartridge
- 209: ninth cartridge
- 210: tenth cartridge
- 211: eleventh cartridge
- 212: twelfth cartridge
- 213: thirteenth cartridge
- 214: fourteenth cartridge
- 311: further sidewall
- 500: first method
- 502: second method
- 505: providing cartridge
- 510: moving piston
- 520: detaching portion of head part
- 523: removing film bag through outlet
- 525: locking piston and head part
- 530: removing piston from chamber wall
- 542: extending fixing portion
- 545: fixing
- 546: positioning at assembling distance

- 547: placing
- 548: positioning at fixing distance
- 600: fourth method
- 605: providing cartridge
- 620: introducing cleaning medium
- 622: removing residuals
- 630: pushing auxiliary medium

## Claims

1. A cartridge (1) for a material to be dispensed,
comprising a chamber wall (12), a head part (20) and a piston (40),
wherein the chamber wall (12) extends along a longitudinal axis (2) from a rear end (6) to a dispensing end (7),
wherein the chamber wall (12) bounds a chamber (10) for the material in a transverse direction (4) perpendicular to the longitudinal axis (2) and is configured for contacting the material,
wherein the head part (20) is connected to the chamber wall (12) at the dispensing end (7) of the cartridge (1) and comprises an outlet (22) for the material to be dispensed,
wherein the piston (40) is configured to be arranged within the cartridge (1) and to be moved along the longitudinal axis (2) towards the dispensing end (7) for dispensing the material,
wherein at least a portion (25) of the head part (20) is configured to detach from the chamber wall (12) when the piston (40) is located at an end position at the dispensing end (7).

2. The cartridge (1) of claim 1,
wherein the portion (25) of the head part (20) comprises the outlet (22) and/or
wherein the head part (20) closes the chamber (10) at the dispensing end (7) perpendicular to the longitudinal axis (2) and is, for example, configured to contact the material.

3. The cartridge (1) of one of the preceding claims,
wherein the piston (40) is configured to be removed from the chamber wall (12), respectively the chamber (10), through an opening (13) of the cartridge (1) at the dispensing end (7) and to thereby remove the residuals of the material located in between the piston (40) and the head part (20) from the chamber wall (12).
wherein, for example, the residuals of the material are removed by scraping the residuals off the chamber wall (12) with the piston (40).

4. The cartridge (1) of one of the preceding claims,
wherein the portion (25) of the head part (20) and the piston (40) are configured to connect to each other so that the piston (40) is removed upon detachment of the portion (25) of the head part (20) from the chamber wall (12).

5. The cartridge (1) of claim 4,
wherein the piston (40) comprises a first part (51) of an interlock (50) and the head part (20) comprises a second part (52) of the interlock (50),
wherein the first part (51) and the second part (52) of the interlock (50) are configured to engage with each other and to lock the piston (40) to the portion (25) of the head part (20) upon the piston (40) reaching the dispensing end (7),
wherein, for example, the first part (51) of the interlock (50) is located at a frontside (41) of the piston (40) facing towards the dispensing end (7) and/or
the second part (52) of the interlock (50) is located at a rear side (26) of the head part (20) facing towards the rear end (6).

6. The cartridge (1) of claim 5,
wherein the first part (51) of the interlock (50) is configured as a circular rim located at a cylindrical surface (44) of the piston (40) and/or
wherein the second part (52) of the interlock (50) is configured as a circular rim located at a cylindrical surface (28) of the head part (20) and/or
wherein the second part (52) of the interlock (50) is located at a protruding element (27) of the head part (20), the protruding element (27) protruding from the head part (20) into the chamber (10) towards the rear end (6).

7. The cartridge (1) of one of the preceding claims,
wherein the head part (20) and the chamber wall (12) are configured as separate parts that are connected by a releasable connection (30), such as a mechanical lock, for example a snap-fit connection or a bayonet lock, or a dissolvable portion of the chamber wall (12) or of the head part (20), allowing for detaching the head part (20) from the chamber wall (12),
wherein, for example, the piston (40) is configured to actuate the releasable connection (30) upon reaching the dispensing end (7) and to thereby open the releasable connection (30).

8. The cartridge (1) of one of the preceding claims,
wherein the chamber (10) is formed by a film bag (110) and the chamber wall (12) is formed by a portion of the film bag (110),
wherein the film bag (110) is configured to enclose the material,
wherein, for example, the film bag (110) extends into the outlet (22) of the head part (20) and has an opening within the outlet (22),.

9. The cartridge (1) of one of claim 8,
wherein the film bag (110) is configured to be removed through the outlet (22) from the portion (25) of the head part (20).

10. The cartridge (1) of one of claims 8 to 9,
further comprising a fastener (120) that has a connection (130) to the head part (20) and is configured to fix a fixing portion (112) of the film bag (110) to the head part (20) when the fastener (120) is connected to the head part (20) in a fixing position,
wherein, for example, the fixing portion (112) of the film bag (110) extends through the outlet (22),
wherein, for example, the connection (130) is a releasable connection, such as a threaded lock or a bayonet lock.

11. The cartridge (1) of claim 10,
wherein the fastener (120) is configured to pinch the fixing portion (112) of the film bag (110) in between a first surface (122) and a second surface (124) when the fastener (120) is in the fixing position,
wherein, for example, the first surface (122) is a surface of the fastener (120) and the second surface (124) is a surface at the outlet (22).

12. The cartridge (1) of claim 11,
wherein the connection (130) defines the fixing position of the fastener (120) with respect to the head part (20) and further defines an assembling position of the fastener (120) with respect to the head part (20),
wherein the first surface (122) has a fixing distance (125) from the second surface (124) with the fastener (120) in the fixing position and wherein the first surface (122) has an assembling distance (126) from the second surface (124) with the fastener (120) in the assembling position, the fixing distance (125) being smaller than the assembling distance (126),
wherein the assembling distance (126) allows for movement of the fixing portion (112) of the film bag (110) into a space (123) in between the first surface (122) and the second surface (124) during assembling of the cartridge (1).

13. The cartridge (1) of one of claim 10 to 12,
wherein the fastener (120) comprises a catch (140) for the film bag (110), such as a barb,
wherein the catch (140) is configured to engage with the film bag (110) and to drag the film bag (110) together with the fastener (120) upon removing the fastener (120) from the head part (20) and to thereby remove the film bag (110) from the head part (20).

14. The cartridge (1) of claim 13,
wherein the catch (140) is formed between the fastener (120) and an intermediate member (135) that is placed in between the outlet (22) and the fastener (120),
wherein the intermediate member (135) is configured to detach from the outlet (22) together with the fastener (120) and to thereby remove the film bag (110) from the head part (20),
wherein, for example, the intermediate member (135) is placed in between the outlet (22) and the fastener (120).

15. Method (500) for removing residuals of a material to be dispensed from a cartridge (1) for the material, wherein the cartridge (1) comprises a chamber wall (12), a head part (20) and a piston (40),
wherein the chamber wall (12) extends along a longitudinal axis (2) from a rear end (6) to a dispensing end (7),
wherein the chamber wall (12) bounds a chamber (10) for the material in a transverse direction (4) perpendicular to the longitudinal axis (2),
wherein the head part (20) is connected to the chamber wall (12) at the dispensing end (7) of the cartridge (1) and comprises an outlet (22) for the material to be dispensed,
wherein the method (500) comprises the steps of:
- providing (505) the cartridge (1) with the material filled into the chamber (10), with the material contacting the chamber wall (12) and with the piston (40) arranged towards the rear end (6) of the cartridge (1);
- moving (510) the piston (40) along the longitudinal axis (2) towards the dispensing end (7) for dispensing the material; and
- detaching (520) at least a portion (25) of the head part (20) from the chamber wall (12) after the piston (40) has reached the dispensing end (7).
